# EUROPEAN PATENT APPLICATION

(11) **EP 1 489 540 A1**
(43) Date of publication of application: **22.12.2004**
(21) Application number: 03708517.2
(22) Date of filing: 07.03.2003
(51) Int. Cl.: G06F 17/60

(54) **INFORMATION PROVIDING SYSTEM AND PAPER-SHAPED DISPLAY MEDIUM**

(30) Priority: 08.03.2002 JP 2002064261; 31.05.2002 JP 2002160493; 08.07.2002 JP 2002198450; 10.09.2002 JP 2002264669
(71) Applicant: DAI NIPPON PRINTING CO., LTD., Tokyo 162-8001 (JP)
(72) Inventor: SAKAMAKI, Teruo, DAI NIPPON PRINTING CO., LTD., Shinjuku-ku, Tokyo 162-8001 (JP); OGURA, Yuji, Saitama-shi, Saitama 331-0853 (JP); HIGASHI, Hiroyuki, DAI NIPPON PRINTING CO., LTD., Shinjuku-ku, Tokyo 162-8001 (JP)
(74) Representative: Needle, Jacqueline
(86) International application number: PCT/JP2003/002747
(87) International publication number: WO 2003/077171

(57) **Abstract**

The information providing system receives contents and a contents code corresponding to the contents by utilizing the broadcasting waves transmitted from a broadcasting station or the Internet, for example, and stores them. The contents may be information of newspaper article or else, and the contents code may be a code uniquely assigned to the contents. On the other hand, a paper-type display medium on which a similar contents code is recorded in advance is provided to a user by selling it or free distribution. When the user sets the paper-type display medium on the broadcasting receiver in a household, the code reading unit reads the contents code recorded on the paper-type display medium. Then, the receiver obtains the contents corresponding to the read contents code and displays it on the paper-type display medium.

## Description

### TECHNICAL FIELD

This invention relates to a method of providing information utilizing a storage-type data broadcasting service in a digital broadcasting and the like.

### BACKGROUND ART

Nowadays, in Japan, a service of BS digital broadcasting has been started since 2000 as a digital broadcasting for performing a data broadcasting service. In addition, a service of CS digital broadcasting for performing a storage-type data broadcasting has been started since 2002.

The storage-type data broadcasting service is a service in which a receiver installed in a home of a user can store broadcasting programs as digital data and the user can select, reproduce and watch necessary programs at convenient time without caring the time table of the broadcasting programs.

As the description language of the digital data in the broadcasting programs in the digital broadcasting, BML (Broadcast Markup Language) based on XML (extensible Markup Language) is scheduled to be used in all of the BS digital broadcasting, the East-Longitude 110 degrees broadcasting and the terrestrial wave digital broadcasting. BML is a description language which is based on XML and is specialized for the use of the data broadcasting. A receiver adapted to the digital broadcasting performing the data broadcasting service decodes the digital data described by BML and displays the data broadcasting program on a TV screen.

In this way, by using BML as the description language, the data broadcasting service can provides the user with various information as the data broadcasting contents. Therefore, effective uses of the data broadcasting service other than broadcasting the programs are being sought.

A use of the storage-type data broadcasting service is to provide the user with information of newspaper, which is close to ordinary life and is a familiar information source. Namely, it is conceivable that, by utilizing the storage-type data broadcasting service to store the information of newspaper in the receiver as the data broadcasting contents, the user can print them on a plain paper or watch them, when needed.

Conventionally, as to the newspaper, information of newspaper articles are printed on the paper medium everyday, and the medium is distributed to each home after predetermined procedure (registration of personal information to the newspaper publishing company, transferring the fee to the bank account, etc.) iscompleted.

However, the information on the newspaper is quite fresh and loses its value as the time passes. Therefore, most newspapers distributed as the paper medium are collected as used papers, and it is inefficient in view of effective use of resources. Inaddition, the conventional method, in which certain information are recorded on the paper medium every day and the paper medium is distributed to each home by the hands of human being, regardless of whether the user actually reads it or not, problematically wastes the cost.

In this respect, even if the information to be used as the articles of newspaper are provided to the user by utilizing the storage-type data broadcasting service, the style of recording the information on the plain papers and watching them is not so different from the conventional newspaper in view of the effective use of resources, and cannot be the solution of the above-mentioned problem. Further, the burden on the user in terms of the procedure largely varies dependently upon the manner of collecting the information fee of the newspaper articles.

Another use of the storage-type data broadcasting service is to store a part of information of magazine in the receiver as the data broadcasting contents and to provide the information only to the users who satisfy predetermined conditions.

Conventionally, various magazines frequently adopt information folding method, such as foldout or folded pages of the magazine, as ameasure of enhancingtheaddedvalueof the information. By this, since the information on the foldout cannot be read by the standing-up reading, the expectation to the information can be increased and the eagerness of the users to buy the magazine can be enhanced.

However, there is a problem that the information foldout method such as folded pages of the magazine increases the cost of printing and bookbinding. In addition, the value of the information is reduced by the user's unfair behavior of tearing or secretly watching the folded page at the shop. Still further, the information on various magazine are normally fresh and lose their value as the time passes. Therefore, printing all information of the magazine on the plain paper is inefficient in view of the effective use of resources.

Moreover, the information on the magazine, such as advertising, is of still picture because it is provided to the user by the paper medium, and hence it is more difficult to provide the user with real and accurate information than the information of TV and the like.

Still another use of the storage-type data broadcasting service is to provide information of language-learning textbook associated with TV broadcasting English-learning program. Namely, the storage-type data broadcasting service is used to store the information of language-learning textbook in the receiver as the data broadcasting contents, and the information is provided to the users who satisfy predetermined conditions.

Currently, the language-learning textbook associated with language-learning program such as English-learning program is produced by printing companies and are sold by bookstores. Normally, the frequency of publication is once per month, according to the progress of the language-learning program. The user buys the language-learning textbook soled by the bookstores every month, and learns the language with watching the programs.

However, the language-learning textbook is used as the reference, along with the progress of the associated language-learning programs, and loses its value as the time passes. Therefore, providing the language-learning textbook to the users as the paper medium is inefficient in view of the effective use of resources. Further, the conventional method of printing the language-learning textbook in the printing companies and selling every month requires the cost.

Furthermore, the current language-learning textbook includes information of the associated program for one month, and the user can read the Japanese translation, in the case of English-learning program, before hearing the English conversation by native speakers. Namely, regardless of the progress of the language-learning program, the user can refer to the textbook bought at arbitrary timing, and hence it is difficult for the users to refer to the textbook at most appropriate timings.

By the way, as a medium for notifying the users of the information of items or products on sale in shops, advertising leaflets included in a newspaper have been broadly used. A leaflet information distributing system utilizing the Internet is discloses in a Japanese Patent Application laid-open under No. 2002-49831 (pages 1-8, Figs. 1-4, hereinafter referred to as a "Reference-1").

Since the advertising leaflet of paper medium, currently broadly used, shows many items or products on sale in shops, a paper as large as the newspaper is used, and it is inconvenient for the user who wants to buy only necessary products. From the viewpoint of retailers, there is such a problem that the items printed in the advertising leaflet has to be determined one or a few weeks before the distribution of the leaflet.

The Reference-1 discloses an on-sale information distributing server system which distributes on-sale information of shops to the users via a network, the system including an on-sale information database storing dealt product information and a on-sale products list for each shop, and an on-sale guide producing means which edits the on-sale information of each shop. The on-sale information database includes time-service table for recording time-service information of each shop. When the on-sale guide is produced, the on-sale guide producing means checks the contents of the time-service table and produces the guide including not only the on-sale products but also the time-service schedule in the shop on that day. The system provides the guide to the users, thereby to solve the above-mentioned problem.

According to the system disclosed in the Reference-1, the on-sale information of the shops can be provided on real-time basis, and only the information meeting the personal attribute of the consumer can be selected and provided, if necessary. It is an advantage that cannot be achieved by the advertising leaflet of the newspaper. When visiting the shop, the user of the system disclosed in the Reference-1 probably goes to the shop after printing the on-sale products on a paper by a printer connected to a computer, if he or she does notmake a handwrittenmemo. Inthatcase, generally, unnecessarily many papers are used, and the papers can be soon useless after the use even if the papers of only necessary number is printed, thereby consuming paper resource unnecessarily. Also, the environment for the Internet connection should be established in home, and it is generally difficult for the aged people.

### DISCLOSURE OF INVENTION

It is an object of the present invention to provide an information providing system which utilizes a storage-type data broadcasting service for providing information to a user, in consideration of simplification of procedure, cost reduction and an environmental issue.

It is another object of the present invention to provide an information providing system which utilizes a storage-type data broadcasting service and apart of magazine for providing information to a user, in consideration of reducing cost, preventing unfair measure by a user, providing accurate information and an environmental issue.

It is still another object of the present invention to provide an information providing system which utilizes a storage-type data broadcasting service for providing information of textbook to a user, in consideration of reducing cost, reducing user's burden, effective use of textbook and an environmental issue.

It is still another object of the present invention to provide an leaflet information providing system which utilizes a storage-type data broadcasting service for providing sales item information to collect consumer to a user, without foldout leaflet, in which printing out on paper material is avoided and a measure easier than the Internet can be used.

According to one aspect of the present invention, there is provided an information providing system including: a unit for receiving contents and a contents code corresponding to the contents; a storage unit which stores the contents and the contents code; a code reading unit which reads the contents code from a paper-type display medium on which the contents code is recorded; and a control unit which obtains the contents corresponding to the contents code read by the code reading unit from the storage unit and displays the contents on the paper-type display medium.

The information providing system configured above receives contents and a contents code corresponding to the contents by utilizing the broadcasting waves transmitted from a broadcasting station via electric waves or cables, or the Internet, for example, and stores them. The contents may be information of newspaper article or else, and the contents code maybe a code uniquely assigned to the contents.

On the other hand, a paper-type display medium on which a similar contents code is recorded in advance is provided to a user by selling or free distribution. When the user sets the paper-type display medium on a broadcasting receiver in a household, the code reading unit reads the contents code recorded on the paper-type display medium. Then, the receiver obtains the contents corresponding to the read contents code and displays it on the paper-type display medium.

Thus, the contents corresponding to the contents code recorded, in advance, on the paper-type display medium can be displayed on the paper-type display medium. By using a paper-type display medium which can repeatedly display information, the contents such as newspaper articles can be displayed on one paper-type display medium everyday. Thus, the paper resources can be saved, and the time and cost for the works such as the distribution of newspapers may be reduced.

According to one form of the information providing system, the control unit may record a code indicating a times-of-use, which is a number of times the contents are displayed on the paper-type display medium, on the paper-type display medium. By recording the times-of-use of displaying the contents on the paper-type display medium, thenumber-of-times of displaying the contents can be readily managed.

Accordingto another formof the information providing system, the code reading unit may include a unit which reads a code indicating a limited times-of-use from the paper-type display medium and a unit which reads the times-of-use from the paper-type display medium, and the control unit may display the contents on the paper-type display medium when the times-of-use is smaller than the limited times-of-use. By this, every time the paper-type display medium is used, the times-of-use is recorded on the paper-type display medium itself, and the contents can be repeatedly displayed within the limited times-of-use. In addition, since the contents are not displayed if the limited times-of-use is exceeded, the times-of-use of can be correctly managed in a case of pay contents.

According to still another form of the information providing system, the control unit may display the limited times-of-use and the times-of-use on the paper-type display medium. Thus, the user can readily know the remaining times-of-use at a glance.

According to still another form of the information providing system, the control unit may include: a list presenting unit which presents a list of information related to a plurality of contents corresponding to the contents code read by the code reading unit; and a unit which displays the contents selected from the list by a user on the paper-type display medium. By this, if there are plural contents corresponding to the contents code, the user can arbitrarily select desired contents and displays them on the paper-type display medium.

According to still another form of the information providing system, the paper-type display medium may include a contents display portion in which the contents are displayed, and an invariable code recording portion in which the contents code is recorded in an unalterable state. By this, unfair alteration of the contents code can be prevented.

According to still another form of the information providing system, the paper-type display medium may include a contents display portion in which the contents are displayed, an invariable code recording portion in which the contents code and a code indicating the limited times-of-use in an unalterable state, and a variable code recording portion in which a code indicating the times-of-use in an alterable state. By this, unfair alteration of the contents code and the limited times-of-use can be prevented.

According to still another form of the information providing system, characteristic information of the paper-type display medium itself necessary to display the contents on the paper-type display medium may be recorded in the invariable code recording portion. By this, the contents can be displayed in a manner appropriate for the paper-type display medium.

According to another aspect of the present invention, there is provided a paper-type display medium including: an invariable code recording portion in which a contents code assigned to contents is recorded in an unalterable state; and a contents display portion in which the contents are displayed.

By using the paper-type display medium, the contents corresponding to the recorded contents code can be displayed on the display medium.

According to one form, the paper-type display medium may further include a base material and a display layer formed on the base material, and the invariable code recording portion may be formed between the base material and the display layer. Thus, unfair alteration of the contents code can be surely prevented.

According to another form of the paper-type display medium, characteristic information of the paper-type display medium itself necessary to display the contents on the paper-type display medium may be recorded in the invariable code recording portion. By this, the contents can be displayed in a manner appropriate for the paper-type display medium.

According to still another form of the paper-type display medium, a code indicating a limited times-of-use which is a number of times the contents corresponding to the contents code is displayable maybe recorded in the invariable code recording portion, and the paper-type display medium may further include a variable code recording portion in which a code indicating a times-of-use, which is a number of times the contents are displayed on the paper-type display medium, is recorded in an alterable state. By this, by only the codes recorded on the paper-type display medium, the times-of-use and the limited times-of-use can be managed, and the contents can be repeatedly displayed within the limited times-of-use.

According to still another form, the paper type display medium may further include a base material and a display layer formed on the base material, and the variable code recording portion and the contents display portion may be formed on the base material. By this, unfair alteration of the contents code and the limited-times-of-use can be securely prevented.

According to still another aspect of the invention, there is provide an information providing system including: a display device which displays contents; a unit which receives the contents and a contents code corresponding to the contents code; a storage unit which stores the contents and the contents code; a code reading unit which reads the contents code from a paper-type display medium on which the contents code is recorded; and a control unit which obtains the contents corresponding to the contents code read by the code reading unit from the storage unit and displays the contents on the display device.

The information providing system is installed in a house of a user or the like, receives the contents and the contents code corresponding to the contents, and stores them. The storage unit may be a storage medium such as a hard disk for storing the contents as data. The user obtains the paper-type display device on which predetermined contents code is recorded from a printed matter such as a magazine. Then, the code reading unit reads the contents code on the paper-type display medium, obtains the contents corresponding to the contents code, and displays them on the display device. By this, the user can display the contents corresponding to the contents code recorded in advance on the paper-type display medium, on the display device, and watch them.

According to one form of the information providing system, the control unitmay obtain the contents corresponding to the contents code read by the code reading unit from the storage unit, and displays the contents on the paper-type display medium. By this, the user can display the contents corresponding to the contents code recorded in advance on the paper-type displaymedium, on the paper-type display medium, and watch them.

Accordingto another formof the information providing system, the contents may include still picture contents of still picture and/or moving picture contents of moving picture, and the control unit may display the still picture contents on the paper-type display medium and/or the display device, and displays the moving picture contents on the display device. By displaying the still picture contents on the paper-type display medium, the user can watch the contents in a manner easy to carry with. In addition, by displaying the moving picture contents on the display device, the user can watch more information than the still picture contents.

According to still another form of the information providing system, the control unit may include: a list presenting unit which presents a list of information related to a plurality of contents corresponding to the contents code read by the code reading unit; and a unit which displays the contents selected from the list by a user on the paper-type display medium and/or the display device. By this, the user can display and watch the contents that he or she selected from the list, on the paper-type display medium and/or the display device.

In a preferred example, the paper-type display medium may include a contents display portion in which the contents are displayed, and an invariable code recording portion in which the contents code is recorded in an unalterable state. In this case, the contents code can be protected from alteration, and the contents that the provider of the paper-type display medium intends can be shown to the user.

The paper-type display medium may include an invariable code recording portion in which the contents code assigned to the contents is recorded in an unalterable state, and a contents display portion in which the contents are displayed, and the paper-type display medium may be formed in a manner integrated with a printed matter associated with the contents. In this case, by integrating the paper-type display medium with a printed matter such as a magazine, e.g., by folding it in or attaching it to the printed matter, the user can obtain the paper-type displaymediumby obtaining the printed matter. Since the contents on the paper-type display medium is associated with the printed matter, the user can obtain the contents associated with the printed matter obtained. In addition, if the paper-type display medium has an identical layout to the printed matter, the paper-type display medium can be naturally integrated with the printed matter.

According to still another aspect of the invention, there is provided an information providing system including: a contents receiving unit for receiving contents and a contents code corresponding to the contents; a storage unit which stores the contents and the contents code; a contents code reading unit which reads the contents code from a paper-type display medium on which the contents code is recorded; an arbitrary information reading unit which reads an arbitrary information of a user from the paper-type display medium on which the arbitrary information of the user is set; a contents obtaining unit which obtains the contents corresponding to the contents code read by the contents code reading unit; and a control unit which displays the contents obtained by the contents obtaining unit on the paper-type display medium based on the arbitrary information read by the arbitrary information reading unit.

The information providing system thus configured transmits the contents and the contents code to the user's house and the like. The contents may be an English textbook corresponding to an English conversation program or else, and the contents code may be a code uniquely assigned to the contents.

On the other hand, the paper-type display medium on which the same contents code is recorded, in advance, is provided to the user by selling or free distribution, etc. When the user sets the paper-type display medium to the home broadcasting receiver and the like, the code reading unit reads the contents code recorded on the paper-type display medium. In addition, the arbitrary information reading unit reads the arbitrary information set to the paper-type display medium. The arbitrary information of the user is an information that the user can set on the paper-type display medium. In the case that the contents are the English textbook, the arbitrary information can be the user' s knowledge level of English, for example.

Then, the contents corresponding to the contents code read by the contents code reading unit is obtained from the storage unit, and the contents are displayed on the paper-type display medium based on the user's arbitrary information read by the arbitrary information reading unit.

In this way, the contents corresponding to the contents code recorded, in advance, on the paper-type display medium can be displayed on the paper-type display medium based on the user's arbitrary information. By using a paper-type display medium which can be repeatedly display information, the contents such as the English textbook for the English conversation program broadcasted everyday can be displayed on one paper-type display medium everyday. Thus, the paper resources can be saved, and the time and cost for the works such as bookbinding the English textbook may be reduced.

According to one form of the information providing system, the arbitrary information of the user may be set in such a manner that the user uses a recording device to record the arbitrary information on the paper-type display medium, and the arbitrary information is rewritable. By this, by recording arbitrary information on the paper-type displaymediumby using a predetermined recording device, the arbitrary information can be set. The information is rewritable. Therefore, once the user sets the arbitrary information, the user can freely change the arbitrary information according to the change of the situation.

According to another form of the information providing system, the arbitrary information of the user may be set by selecting and recording one of a plurality of check boxes on the paper-type display medium. In this case, the user selects one from the plural check boxes on the paper-type display medium, and records the "x" mark on the check box, for example, by using the recording device. Thus, the user can readily set the arbitrary information.

According to still another form of the information providing system, the paper-type display medium may include a contents display portion in which the contents are displayed, an invariable code recording portion in which the contents code is recorded in an unalterable state and an arbitrary information recording portion in which the arbitrary information of the user is recorded. By this, by recording on the arbitrary information recording portion on the paper-type display medium, the arbitrary information can be set. Since the contents code is recorded in the invariable code recording portion, unfair alteration of the contents code by the user can be prevented.

According to still another aspect of the invention, there is provided an information providing system including: a program receiving unit which receives program and a program code corresponding to the program; a program code reading unit which read the program code from a paper-type display medium on which the program code is recorded; a program reproducing unit which reproduces the program corresponding to the program code read by the program code reading unit; a time information calculating unit which calculates a time information related to the program reproduced by the program reproducing unit; a contents receiving unit which receives contents and a contents code corresponding to the contents; a contents storage unit which stores the contents and the contents code; a contents code reading unit which reads the contents code from the paper-type display medium on which the contents code is recorded; a display permission information reading unit which reads display permission information from the paper-type display medium on which the display permission information is recorded; a contents obtaining unit which obtains the contents corresponding to the contents code readby the contents code readingunit from the contents storage unit; and a control unit which displays the contents obtained by the contents obtaining unit on the paper-type display medium based on a presence or absence of reproduction of the program, the time information calculated by the time information calculating unit and the display permission information read by the display permission information reading unit.

The information providing system thus configured receives the program and the program code corresponding to the program by utilizing the broadcasting waves transmitted from the broadcasting station via electric waves or cables. The program may be an English conversation program or else, and the program code may be a code uniquely assigned to the program. It is noted that the program in this invention includes a program distributed via the Internet.

On the other hand, the information providing system receives the contents and the contents code corresponding to the contents by utilizing the broadcasting waves transmitted from the broadcastingstationviaelectricwavesorcables, or via the Internet. The contents may be an English textbook for the English conversation program or other information, and the contents code may be a code uniquely assigned to the contents.

The paper-type display medium on which the similar program code, the contents code and the display permission information in advance is provided to the user by selling or free distribution. When the user sets the paper-type display medium to the home broadcasting receiver, the receiver reads the program code, the contents code and the display permission information by the program code reading unit, the contents code reading unit and the display permission information reading unit, respectively.

The information providing system reproduces the program corresponding to the read program code. The time information calculating unit calculates the time information related to the reproduced program. Also, the information providing system obtains the contents corresponding to the read contents code from the contents storage unit, and displays the contents on the paper-type display medium on the basis of the read display permission information and the time information calculated by the time information calculating unit.

Thus, for example, when the contents providing company sets the display permission time recordedon the paper-type displaymedium, in advance, the contents can be displayed, not at the arbitrary timing of the user, but the arbitrary timing of the contents providing company.

According to one form of the information providing system, the time information may be a time period elapsed after starting reproduction of the program, the display permission information may be a constant time period that has passed after starting the reproduction of the program set in order to permit display of the contents, and the control unit may display the contents on the paper-type display medium when the time information is larger than the display permission information. By this, the contents providing company can set the display permission information, with using the start of the program as the reference. Therefore, with using the start of the program as the reference, the contents can be displayed, not at the arbitrary timing of the user, but at the arbitrary timing of the contents providing company.

According to another form of the information providing system, a plurality of display permission information can be set for single contents. For example, in a case that the contents are the English textbook for the English conversation program, the English sentences can be displayed after 5 minutes, the grammar can be displayed after 8 minutes and Japanese translation can be displayed after 10 minutes as the English textbook on the paper-type display medium, according to the progress of the English conversation program. Therefore, the contents providing company can precisely set the display permission information, and displays the contents not at the arbitrary timing of the user, but at the arbitrary timing of the contents providing company.

According to still another form of the information providing system, the program reproducing unit may include: a program storing unit which stores the program received by the program receiving unit and the program code corresponding to the program; and a unit which obtains and reproduces the program corresponding to the program code read by the program code reading unit from the program storing unit. By this, the information providing system stores the received program and the program code corresponding to the program. Then, the program corresponding to the program code read by the program code reading unit is obtained from the program storage unit and reproduced. Therefore, if the program storage unit stores the predetermined program and the program code corresponding to the program, the user can reproduce the program at anytime.

According to still another form of the information providing system, the program reproducing unit may reproduce the program which the program receiving unit is receiving on a real-time basis. In this case, when the broadcasting station is broadcasting the program via the broadcasting waves using electric waves or cables, or via the Internet, the information providing system performs reproduction with receiving the program at the same time. Since it is unnecessary to store the program in advance in the information providing system, the reproduction process of the program can be quickly performed.

According to still another aspect of the invention, there is provided a paper-type display medium including: an invariable code recording portion in which a contents code assigned to contents is recorded in an unalterable state; a recording portion in which the contents are displayed; and an arbitrary information recording portion in which arbitrary information of user is recorded. By this, by performing predetermined recording on the arbitrary information recording portion on the paper-type display medium, the user can set the arbitrary information. Since the contents code is recorded on the invariable code recording portion, unfair alteration of the contents code by the user can be prevented.

According to one form of the paper-type display medium, the arbitrary information recording portion may include check boxes, and the arbitrary information is set in such a manner that the user records the arbitrary information on the check box by using a recording device. In this case, the user select one from the plural check boxes on the paper-type display medium, and records the "x" mark on the check box, for example, by using the recording device. Thus, the user can readily set the arbitrary information.

According to another form of the paper-type display medium, a display permission information indicating a time limitation to display the contents on the paper-type display medium may be recorded in the invariable code recording portion. In this case, for example, if the contents providing company sets the display permission time recorded, in advance, on the paper-type display medium, the contents can be displayed on the paper-type display medium, not at the arbitrary timing of the user, but at the arbitrary timing of the contents providing company.

According to still another aspect of the invention, there is provided an information providing system including: a contents receiving unit which receives contents; a contents storing unit which stores the contents; a contents code reading unit which reads a contents code and an attribute code from a paper-type display medium on which the contents code and the attribute code are recorded; a contents obtaining unit which obtains the contents corresponding to the contents code and the attribute code read by the contents code reading unit from the contents storing unit; and a control unit which displays the contents obtained by the contents obtaining unit on the paper-type display medium.

Generally, the contents are information or data having distribution value. However, the contents include the information or data provided free of charge in this invention. The contents code specifies the kind of the contents. The kind of information is conveniently determined by the information provider, and cannot be unconditionally prescribed. Frequently, information having different issuing date and same purpose, or information provided to the same target constitute one kind of information. The attribute code is assigned when one kind of information is needed to be further classified in view of providing purpose or target.

Therefore, according to the information providing system thus configured, certain information is provided to a target having the paper-type display medium on which the contents code is recorded, and only the contents corresponding to the attribute code recorded on the paper-type display medium ownedby the receiver of information is provided.

According to still another aspect of the invention, there is provided an information providing system including: a contents receiving unit which receives contents; a contents storing unit which stores the contents; a contents selecting and editing unit which edits the contents stored in the contents storing unit and arbitrarily selected by a user in one screen picture; and a control unit which displays the contents edited by the contents selecting and editing unit on the paper-type display medium.

By this system, only the information that the receiver of the information needs can be arbitrarily selected to be displayed and recorded on the paper-type displaymedium. Since the paper-type display medium can be folded and is portable, it can be used as an electric memo.

According still another aspect of the invention, there is provided an information providing system including: a contents receiving unit which receives contents; a contents storing unit which stores the contents; a contents code reading unit which reads a contents code and an attribute code from a paper-type display medium on which the contents code and the attribute code are recorded; a contents obtaining unit which obtains the contents corresponding to the contents code and the attribute code read by the contents code reading unit from the contents storingunit; a contents selecting and editing unit which edits the contents obtained by the contents obtaining unit and arbitrarily selected by a user in one screen picture; and a control unit which displays the contents edited by the contents selecting and editing unit on the paper-type display medium.

According still another aspect of the invention, there is provided a point system including: a reading and writing device for a paper-type display medium installed in a shop; a contents receiving unit which receives contents; a contents storing unit which stores the contents; a contents code reading unit which reads a contents code and an attribute code from a paper-type display medium on which the contents code and the attribute code are recorded; a contents obtaining unit which obtains the contents corresponding to the contents code and the attribute code read by the contents code reading unit from the contents storing unit; and a control unit which displays the contents obtained by the contents obtaining unit, on the paper-type display medium, together with point information.

According still another aspect of the invention, there is provided a point system including: a reading and writing device for a paper-type display medium installed in a shop; a contents receiving unit which receives contents; a contents storing unit which stores the contents; a contents selecting and editing unit which edits the contents stored in the contents storing unit and arbitrarily selected by a user in one screen picture; and a control unit which displays the contents edited by the contents selecting and editing unit, on the paper-type display medium, together with point information.

According to still another aspect of the invention, there is provide a point system including: a reading and writing device for a paper-type display medium installed in a shop; a contents receiving unit which receives contents; a contents storing unit which stores the contents; a contents code reading unit which reads a contents code and an attribute code from a paper-type display medium on which the contents code and the attribute code are recorded; a contents obtaining unit which obtains the contents corresponding to the contents code and the attribute code read by the contents code reading unit from the contents storing unit; a contents selecting and editing unit which edits the contents obtained by the contents obtaining unit and arbitrarily selected by a user in one screen picture; and a control unit which displays the contents edited by the contents selecting and editing unit, on the paper-type display medium, together with point information.

Namely, since the point must be displayed so as to be recognizable for people, it should be controlled such that the contents information is not printed on the area where the point is displayed. Alternatively, the point information is displayed and recorded, e.g., displaying the point by outline letters on a colored background, so that the point information is readable even if the contents information is printed in the area where the point is displayed. In addition, the point must be recorded in a manner recognizable by the writing and reading device of the paper-type display medium. Therefore, the point display area displays the score readable by a person, and a code such as barcode or a two-dimensional code readable by mechanism is displayed (recorded).

According to one form of the point system, the contents may be provided as a program, and the contents receiving unit and the contents storing unit may be a digital broadcasting receiver. Further, according to another form of the point system, the contents may be provided as a program, and the contents receiving unit and the contents storing unit may be a digital broadcasting receiver.

In Japan, as to the digital broadcasting, the BS digital broadcasting started in 2000 and the CS digital broadcasting started in 2002. The terrestrial digital broadcasting is scheduled. Those digital broadcasting services perform data broadcasting service, and it is possible to provide the viewers with broadcasting programs to which interactive function is added, in combination with the digital broadcasting receiver having bi-directional communication function. In the CS digital broadcasting service, storage-type data broadcasting service is being provided. The storage-type data broadcasting service automatically broadcasts storage-type data broadcasting programs (hereinafter referred to as "storage program") to the receiver including hard disk, apart from normal programs. The viewer can reproduce and enjoy the stored program at convenient time.

As the description language for the data broadcasting contents of the digital broadcasting, BML is used. In the same manner as theWWWbrowser interprets HTML (HyperTextMarkup Language) to display it on the computer screen, the receiver corresponding to the data broadcasting has the function to interpret data broadcasting contents data described by BML and displays it on the TV screen. Also, as to BML, in order to express dynamic operation on the data broadcasting screen, the procedure of process can be described by procedure language ECMAScript. ECMAScript is an object-oriented script language. Not only the display control of the TV screen, but various extended functions for broadcasting service, e.g., for recording data in a non-volatile memory in the receiver, or for making recording reservation of program. The script described for BML is called BML script. The above information providing system or the point system use the storage-type broadcasting service of the digital broadcasting service.

According to still another aspect of the invention, there is provided an information providing system including: a unit which receives contents and a contents code corresponding to the contents; a storage unit which stores the contents and the contents code; a code reading unit which reads the contents code from an article on which the contents code is recorded; and a control unit which obtains the contents corresponding to the contents code read by the code reading unit from the storage unit and displays the contents on the paper-type display medium.

The article includes items and products that the user can get or buy, and their package. Thus, the contents corresponding to the contents code recorded on the article in advance can be displayed on the paper-type display medium. By using the paper-type display medium that can repeatedly perform display, the paper can be saved and the cost can be reduced.

According to still another aspect of the invention, there is provided an information providing system including: a display device which displays contents; a unit which receives the contents and a contents code corresponding to the contents code; a storage unit which stores the contents and the contents code; a code reading unit which reads the contents code from an article on which the contents code is recorded; and a control unit which obtains the contents corresponding to the contents code read by the code reading unit from the storage unit and displays the contents on the display device. By this, the user can display the contents corresponding to the contents code recorded in advance on the article, and can watch it.

According to one form of the information providing system, the control unitmay obtain the contents corresponding to the contents code read by the code reading unit from the storage unit and displays the contents on a paper-type display medium. By this, the user can watch the contents, by displaying it not only on the display device, but also on the paper-type display medium.

According to still another aspect of the invention, there is provide an information providing method including: a step which receives contents and a contents code corresponding to the contents; a step which stores the contents and the contents code; a step which reads the contents code from a paper-type display medium on which the contents code is recorded; and a step which obtains the contents corresponding to the contents code read by the code reading unit and controls to display the contents on the paper-type displaymedium. One form of the information providing method further includes: a step which assigns a contents code corresponding to the contents; and a step which applies the contents code to the paper-type display medium.

By the above method, similarly to the above-described information providing system, the user can display the contents corresponding to the contents code recorded, in advance, on the paper-type display medium, on the paper-type display medium itself.

According to still another aspect of the invention, there is provided an information providing method including: a step which receives contents and a contents code corresponding to the contents; a step which stores the contents and the contents code; a step which reads the contents code from a paper-type display medium on which the contents code is recorded; and a step which obtains the contents corresponding to the contents code read by the code reading unit and controls to display the contents on a display device. One form of the information providing method further includes a step which obtains the contents corresponding to the contents code read from the paper-type display medium and displays the contents on the paper-type display medium. Another form of the information providing method further includes: a step which assigns a contents code corresponding to the contents; and a step which applies the contents code to the paper-type display medium. By this method, similarly to the above-described information providing system, the user can display the contents corresponding to the contents code recorded, in advance, not only on the display device, but on the paper-type display medium, on the paper-type display medium.

### BRIEF DESCRIPTION OF THE DRAWINGS

FIG.1 is a diagram showing a schematic configuration of an information providing system according to a first embodiment.
FIGS. 2A and 2B are diagrams showing recording position of a contents folder and data structure of contents information in the first embodiment.
FIG. 3 is a diagram showing data structure of contents list used in the information providing system of the first embodiment.
FIGS. 4A to 4C are diagrams showing a configuration of a paper-type display medium, and information that codes on the display medium possess in the first embodiment.
FIGS. 5A to 5C are diagrams showing sectional view of the paper-type display medium of the invention.
FIG. 6 is a flowchart showing information providing process in the first to third embodiments.
FIG. 7 is a flowchart showing contents storing process in the first to third embodiments.
FIG. 8 is a flowchart showing paper-type display medium process in the first embodiment.
FIG. 9 is a flowchart showing display control process in the first embodiment.
FIG.10 is a diagram showing schematic configuration of the information providing system of a second embodiment.
FIGS. 11A and 11B are diagrams showing recording position of a contents folder and data structure of contents information in the second embodiment.
FIG. 12 is a diagram showing data structure of contents list used in the information providing system of the second embodiment.
FIGS. 13A to 13C are diagrams showing a configuration of apaper-typedisplaymedium, andinformationthatcodesonthedisplay medium possess in the second embodiment.
FIG. 14 is a flowchart showing paper-type display medium process in the second embodiment.
FIG. 15 is a flowchart showing display control process in the second embodiment.
FIG. 16 is a diagram showing schematic configuration of the information providing system of a third embodiment.
FIGS. 17A and 17B are diagrams showing recording position of the contents folder and data structure of contents information in the third embodiment.
FIG. 18 is a diagram showing data structure of contents list used in the information providing system of the third embodiment.
FIGS. 19A to 19C are diagrams showing a configuration of apaper-type displaymedium, and information that codes on the display medium possess in the third embodiment.
FIG. 20 shows a display screen when a user selects an object to be displayed.
FIG. 21 is a flowchart showing paper-type display medium process in the third embodiment.
FIG. 22 is a flowchart showing display control process in the third embodiment.
FIG. 23 is a diagram showing whole configuration of an information providing system of a fourth embodiment.
FIG. 24 shows a directory structure of a hard disk in fourth embodiment.
FIG. 25 is an explanatory diagram of a contents list in the fourth embodiment.
FIGS. 26A shows an appearance of a code-recorded paper-type display medium in the fourth embodiment.
FIG. 26B is an explanatory diagram of invariable code.
FIG. 27 shows a display screen of extracting result of storage contents in the fourth embodiment.
FIG. 28 shows an image of the paper-type display medium on which article information is displayed and recorded.
FIG. 29 is a flowchart showing contents storing process in the fourth embodiment.
FIG. 30 is a flowchart showing display control process of the information providing system of the fourth embodiment.
FIG. 31 is a diagram showing whole configuration of information providing system of a fifth embodiment.

### PREFERRED EMBODIMENTS TO EXECISE THE INVENTION

The present invention relates to an information providing system which utilizes a storage-type data broadcasting service for providing information to users. The preferred embodiments of the invention will be described below with reference to the attached drawings.

### [1st Embodiment]

### (i) Schematic Configuration of Information Providing System

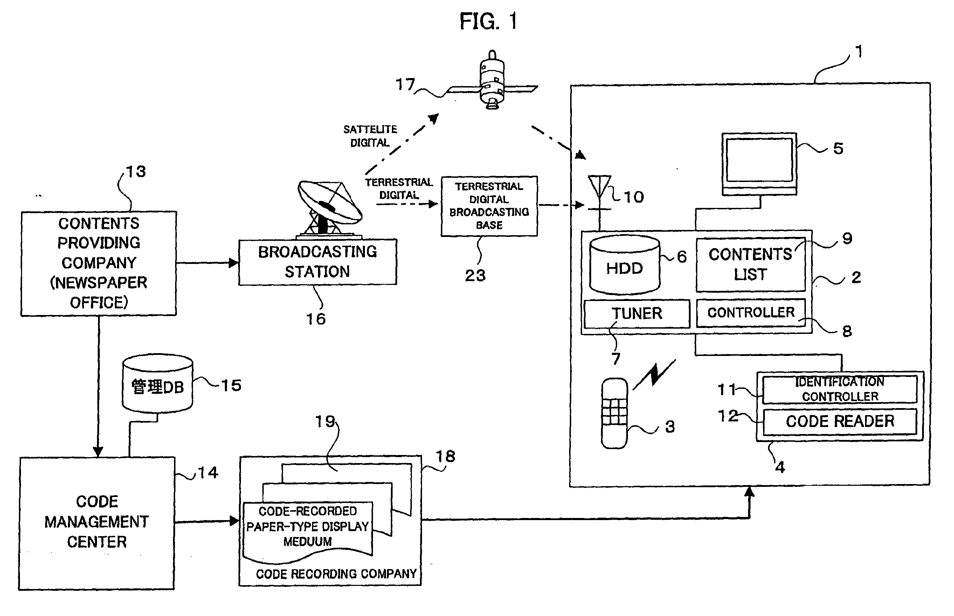

FIG. 1 shows a schematic configuration of an information providing system according to a first embodiment of the present invention. In FIG. 1, the information providing system includes a user environment 1, a contents providing company 13, a code management center 14, a broadcasting station 16, an artificial satellite 17, a terrestrial digital broadcasting base 23 and a code recording company 18.

The contents providing company 13 is a newspaper office, and produces data broadcasting contents (hereinafter simply referred to as "contents") which is informationof newspaper articles to the broadcasting station 16 in order to provide the user with the information of the newspaper articles by utilizing the storage-type data broadcasting service.

The code management center 14 receives attribute data included in the contents, which is the information of the newspaper articles from the contents providing company 13, and produces contents code which is an identification information of the contents based on the attribute data. The contents code is supplied to the broadcasting station 16 via the contents providing company 13. Also, the contents code is notified to the code recording company 18. The code management center 14 stores the attribute data received from the content providing company 13 and the content code produced by itself in a management database (hereinafter simply referred to as "DB") 15.

The code recording company 18 records the contents code notified by the code management center 14 on the paper-type display medium. Further, the code recording company 18 puts the paper-type display medium 19 with the code recorded, on the distribution route so as to be sold to the users.

On the other hand, the broadcasting station 16 provides the contents including the attribute data, the contents data and the contents code supplied from the contents providing company 13 to the user environment 1 via the artificial satellite 17 and the terrestrial digital broadcasting base 23 by utilizing the storage-type data broadcasting service.

In the user environment 1, the user can receive digital broadcasting, which performs the storage-type data broadcasting service provided via the artificial satellite 17 and the terrestrial digital broadcasting base 23 from the broadcasting station 16, by the receiver 2, and can view and watch the data broadcasting program and/or the contents on the display 5. The receiver 2 records and stores the broadcasting programs and the contents received.

Also, the user buys the paper-type display medium 19 with the code recorded (hereinafter also referred to as "code-recorded paper-type display medium"), which is produced by the code recording company 18 and is put on sale on the market. Then, the user can display the contents corresponding to the contents code recorded on the code-recorded paper-type display medium 19, by using the display control device 4 in the user environment 1, on the code-recorded paper-type display medium 19.

The user environment 1 includes the receiver 2, the remote-controller 3, the display control device 4 and the display 5. The user environment is a configuration of an apparatus associated with the storage-type data broadcasting service which the user receiving the information by the present invention owns. Namely, the user environment is an environment, such as a household or a vehicle, in which the digital broadcasting for the storage-type data broadcasting service can be received.

The receiver 2 has the antenna 10, and also includes the hard disk 6, the tuner 7, the controller 8 and the contents list 9, and the remote-controller 3 is attached. The antenna 10 is necessary to receive the digital broadcasting. The user can arbitrarily operate the receiver 2 by the remote-controller 3 or the screen touch-panel on the display 5. Specifically, the user selects the information of the newspaper articles, to be provided to the user by the present invention, by the remote-controller 3 or the screen touch-panel on the display 5, the detail of which will be described later.

The hard disk 6 has a user area and a service area. The user area is an area in which the user, who is a viewer of the digital broadcasting, can arbitrarily record the broadcasting programs. The service area is an area in which the storage-type data broadcasting programs and/or the contents can be stored irrespective of the user's intention.

The contents are an item having distribution value, in the form of electric data, for example, an article of newspaper or magazine, an image data such as an illustration or photograph, an audio file and a movie. The contents are a part forming the data broadcasting program and can be watched on the display 6. The information of the newspaper article, which is provided to the user according to the present invention, is stored in the service area of the hard disk 6 as the contents.

The tuner 7 receives the electric waves of the digital broadcasting for the storage-type data broadcasting service, and outputs the images and sounds to be shown on the display 5 as the data broadcasting program or the contents.

The controller 8 is constituted by a CPU mainly having the microprocessor, and controls the receiver 2 in its entirety.

The contents list 9 is constituted by contents codes, contents name and back numbers as shown inFIG. 3, and is a list of the information of the contents stored in the service area of the hard disk 6.

The display control device 4 has the identification controller 11 and the code reader 12. The identification controller 11 is constituted by a CPU mainly having the microprocessor, and controls the operation of the display control device 4. The code reader 12 reads the contents code, which is identification information recorded on the code-recorded paper-type display medium 19. Namely, the display control device 4 first reads the identification information recorded on the code-recordedpaper-type display medium 19 by the code reader 12, and then the identification controller 11 controls the display control device 4 based on the identification information. After referring to the contents list 9 under the control of the identification controller 11, the display control device 4 extracts the contents corresponding to the contents code recorded on the code-recorded paper-type display medium 19 from the hard disk 6. Then, the display control device 4 displays the contents corresponding to the contents code recorded on the code-recorded paper-type display medium 19, on the code-recorded paper-type display medium 19 itself.

The display 5 outputs the images, pictures and sounds of the data broadcasting program or the contents via the tuner 7. Typically, the display 5 is a TV monitor installed in a household.

### (ii) Contents

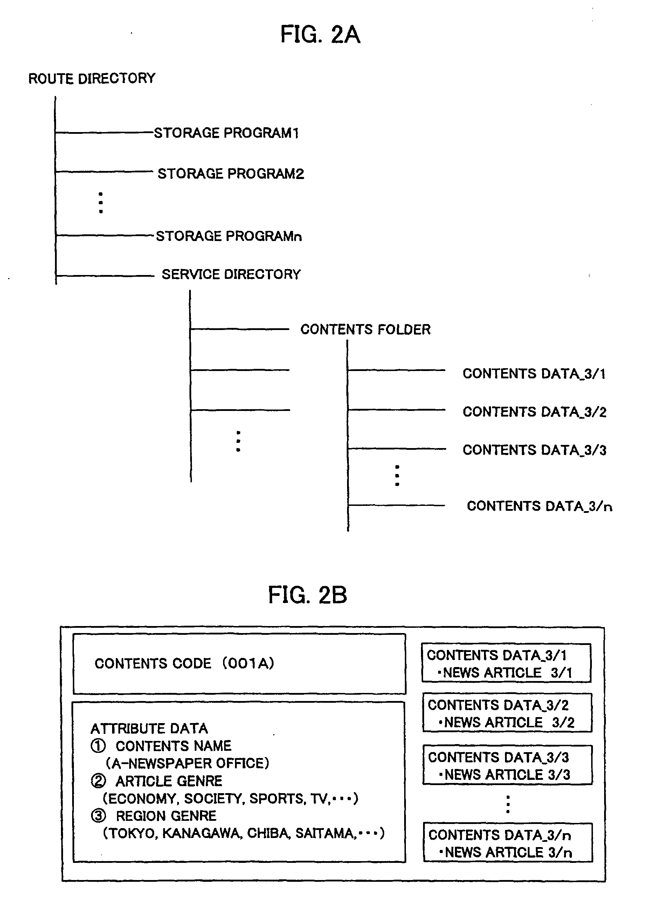

FIG. 2A shows the recording position of the contents folder. The contents are the information to be provided to the user by utilizing the storage-type data broadcasting service, and the information provided as the contents includes the contents code, the attribute data and the contents data. In this embodiment, the contents are provided to the user, after it is edited, as the digital data that can be displayed on the paper-type display medium.

The contents folder is a folder formed in the hard disk 6, in which the information of the contents is recorded, after the receiver 2 in the user environment 1 receives the contents from the broadcasting station 16.

The storage-type data broadcasting service stores the data broadcasting programs or the contents in the service area of the hard disk 6 equipped in the receiver 2. The inside of the service area of the hard disk 6 has a hierarchical structure as shown in FIG. 2A, and a plurality of storage programs, stored regardless of the user's intention, are recorded under the route directory. At the same hierarchical level as the plurality of storage programs, the service directory for recording still pictures of the supplemental data other than moving pictures, such as the contents, is recorded. If the user wants to arbitrarily record the contents or the programs, they are recorded in the user area of the hard disk 6.

The service directory further has the hierarchical structure, and a plurality of contents folders including the contents folder-A are recorded under the service directory. The contents folder further has the hierarchical structure, and plural contents data are recorded, together with date information, under the contents folder.

FIG. 2B shows information of the contents recorded in the contents folder-A. It is assumed that the information of the contents recorded in the contents folder-A is information of newspaper articles.

The contents include the attribute data, a plurality of contents data and the contents code. The attribute data and the contents data are produced by the contents providing company 13, and the contents code is produced by the code management center 14. The attribute data includes the contents name, the article genre and the region genre. The contents name is a general name of the contents, and it is prescribed as "A-newspaper" in this embodiment because the information of the contents is information of the newspaper articles. The article genre is the information of newspaper articles subdivided into the units of the paper space of the newspaper, and "Economy", "Society" and "Sports" are the examples. By this, the user does not display all information for the newspaper articles on the code-recorded paper-type display medium 19, but can select and display information of only necessary newspaper article based on the article genre. The region genre is information of region page of the newspaper. By this, the user can display the information of the newspaper articles relevant to the region where the user himself is living, on the code-recorded paper-type display medium 19 based on the region genre.

The contents code is identification information of the contents, which the code management center 14 produces based on the attribute data notified by the contents providing company 13. It is assumed that the contents code recorded in the contents folder-A in this embodiment is "001A".

The contents data is information based on the contents of the newspaper articles, and includes the date information. Namely, the "contents data_3/1" is the information based on the contents of the newspaper articles on March 1. Since the contents providing company 13 produces the contents data everyday, new contents data are recorded in the contents folder-A everyday via the broadcasting station 16. For the sake of management, the contents data is recorded in a manner classified by the date under the contents folder-A in the hard disk 6, as shown in FIG. 2A.

The contents data is recorded after further subdivision by the attribute data. Specifically, the "contents data_3/1" is the information based on the newspaper article on March 1, but is recorded in the contents folder-A after further subdivision by the article genre and the region genre. By this, while the detail will be described later, the user does not display all information relevant to the newspaper article on the code-recorded paper-type display medium 19, but the information selected by the user can be promptly obtained and displayed on the code-recorded paper-type display medium 19 when the information of necessary newspaper articles is selected and displayed based on the date and/or the article genre.

When providing the user with the contents by utilizing the storage-type data broadcasting service according to the request by the contents providing company 13, the broadcasting station 16 can attach the data of the information indicating the recording position of the contents folder at which the information of the contents is to be recorded, at the same time. By this, the information of predetermined contents is automatically recorded at the recorded position desired by the contents providing company 13. The information of the contents and the recording position is coded in order to prevent the alteration by the user, and is therefore not decodable by the user.

Under the service directory of the hard disk 6 in the receiver 2, a plurality of contents obtained from a plurality of contents providing companies via the broadcasting station 16 by the storage-type data broadcasting service are recorded and stored, regardless of whether or not the user buys the code-recorded paper-type display medium 19.

### (iii) Contents List

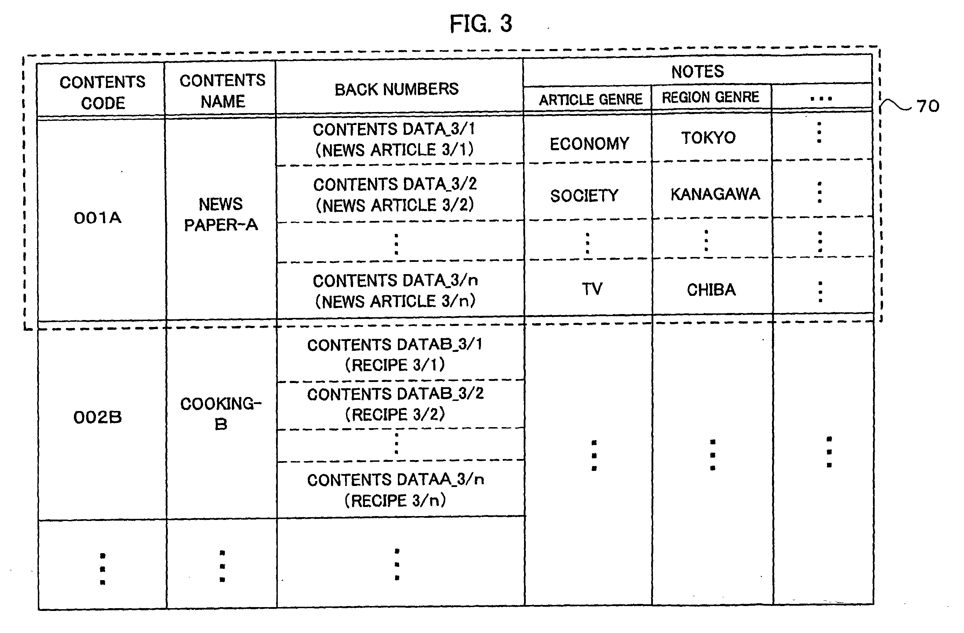

As shown in FIG. 3, the contents list 9 includes the contents code, the contents name, the back numbers and notes. The contents list 9 is a list of the contents stored, and is recorded under the service directory of the hard disk 6.

The contents code is identification information of the contents. When the contents are stored in the contents folder under the service directory of the harddisk 6 by utilizing the storage-type data broadcasting service, the contents code is recorded as the information of the contents as shown in FIG. 2B. The contents code is produced by the code management center 14 based on the attribute information, and the contents are uniquely specifiedby the contents code.

Therefore, the contents list 9 includes the contents name, the back numbers and the notes based on the information of the contents stored in the contents folder under the service directory of the hard disk 6, with using the contents code as the key. The "back number" is all of a plurality of contents data corresponding to a predetermined contents code. The "notes" are obtained by further subdividing the information based on the attribute data corresponding to a predetermined contents code. Specifically, in this embodiment, the back number is the contents data based on the contents of a plurality of newspaper articles, as shown in FIG. 3. The notes are the article genre or the region genre obtained by subdividing the information of the newspaper articles, and are recorded based on the attribute data.

The contents list 9 is updated by utilizing the storage-type data broadcasting service, every time when the attribute data, the contents data or the contents code, which are the contents, is updated.

By this, although a plurality of contents are recorded in the service directory in the service area of the hard disk 6 and further a plurality of back numbers and notes exist for the single contents, the information of the contents currently recorded can be readily recognized by checking the contents list 9.

### (iv) Paper-type Display Medium

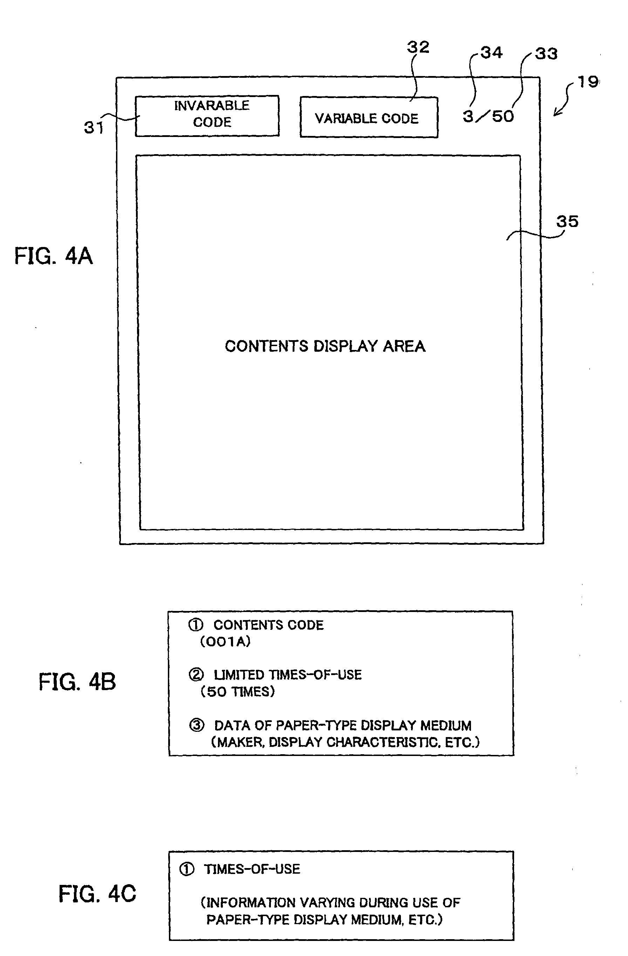

FIG. 4A shows the configuration of the code-recorded paper-type display medium 19. The code-recordedpaper-type display medium 19 is a paper-type display medium on which invariable code 31 and variable code 32 described later are recorded, and is soled to the user by the code recording company 18. The paper-type display medium is a display medium which is thin like a paper, has a flexibility of a certain degree and is repeatedly rewritable, including the ones generally called as "electric paper" or "digital paper".

"Rewitable" means that the contents once displayed can be erased and new information can be displayed by applying heat processing to the paper-type display medium, in a case of a leuco reversible heat-sensitive recording system. Specifically, after displaying the newspaper articles of March 1 based on the contents data_3/1, the newspaper articles of March 2 can be displayed on the same display medium based on the contents data_3/2. In this case, the newspaper articles of March 1 never remain on the display medium. Since the paper-type display medium is sustainable for the rewriting of about 500 times in the case of the leuco reversible heat-sensitive recording system, one paper-type display medium can display the newspaper article of more than one year, although the article cannot be retained. As the paper-type display medium, various display medium including a display device of the leuco reversible heat-sensitive recording system, high polymer dispersion type liquid crystal, chiral nematic liquid crystal or electrophoresis system, can be used.

As shown in FIG. 4A, the code-recorded paper-type display medium 19 has the invariable code 31, the variable code 32, the limited times-of-use 33, the times-of-use 34 and the contents display area 35.

The invariable code 31 is invariable information which never varies even if the paper-type displaymedium is repeatedly rewritten. FIG. 4B shows the information that the invariable code 31 includes. The invariable code 31 includes the contents code, the limited times-of-use and data of the paper-type display medium, and is recorded on the paper-type display medium by the code recording company 18.

The contents code is identification information of the contents, which the code management center 14 produces based on the attribute data notified by the content providing company 13. The code recording company 18 receives the notification of the contents data from the code management center 14, the detail of which will be described later. The contents code in this embodiment is "001A". The paper-type display medium can display only the contents corresponding to the contents code included in the invariable code 31 recorded thereon, except for free contents.

The limited times-of-use 33 is the number of times for which the contents corresponding to the contents code included in the invariable code 31 recorded on the paper-type display medium can be displayed. If the user can display the contents for unlimited times, the collection of fee becomes complicated. Therefore, a certain limited times-of-use is set.

If the limited times-of-use is exceeded, the paper-type display medium cannot display that contents, but can display the free contents. Namely, the limited times-of-use is not related to the usable number of times of the paper-type display medium. Thus, the code-recorded paper-type display medium 19 can be reused as a display medium for displaying the free contents, within the usable number of times, even if it becomes unable to display the contents corresponding to the contents code included in the invariable code 31.

The limited times-of-use 33 may be set by the contents providing company 13, or may alternatively be set by the code recording company 18 or the broadcasting station 16 and notified to the code recording company 18.

The data of the paper-type display medium included in the invariable code is information of the paper-type display medium itself, such as a maker or display control characteristic that become necessary when the contents are displayed on the paper-type display medium. Specifically, when a certain paper-type display medium performs heat-sensitive display, the set temperatures of thermal heads are included in the invariable code 31.

The variable code 32 is variable information that may vary during the use of the paper-type display medium, and includes the times-of-use which varies according to the operation by the user, as shown in FIG. 4C. The variable code 32 is recorded on the paper-type display medium by the code recording company 18. The times-of-use is the number of times for which the user displayed the contents corresponding to the contents code included in the invariable code 31 on the code-recorded paper-type display medium 19. Namely, the number of times for displaying the free contents on the code-recorded paper-type display medium is not included, and the times-of-use increases when the contents corresponding to the contents code included in the invariable code 31 is displayed.

The limited times-of-use 33 is the limited times-of-use included in the invariable code 31, and the times-of-use 34 is the times-of-use included in the variable code 32. In this embodiment, the limited times-of-use is "50", for example. The invariable code 31 and the variable code 32 are coded in order to prevent the alteration by the user, and hence cannot be decoded by the user. Therefore, they are displayed on the paper-type display medium so that the user can visually recognize the limited times-of-use 33 and the times-of-use 34. The times-of-use varies according to the time of use included in the variable code 32.

The contents display area 35 is an area where the contents are displayed, namely, the area where the contents corresponding to the contents code included in the invariable code 31 or the free contents are displayed.

For recording the invariable code 31 or the variable code 32, various methods can be used, for example, barcodes or two-dimensional codes may be recorded on the paper-type display medium, or RFID (Radio Frequency Identification system) may be incorporated in the paper-type display medium.

### (v) Recording Codes

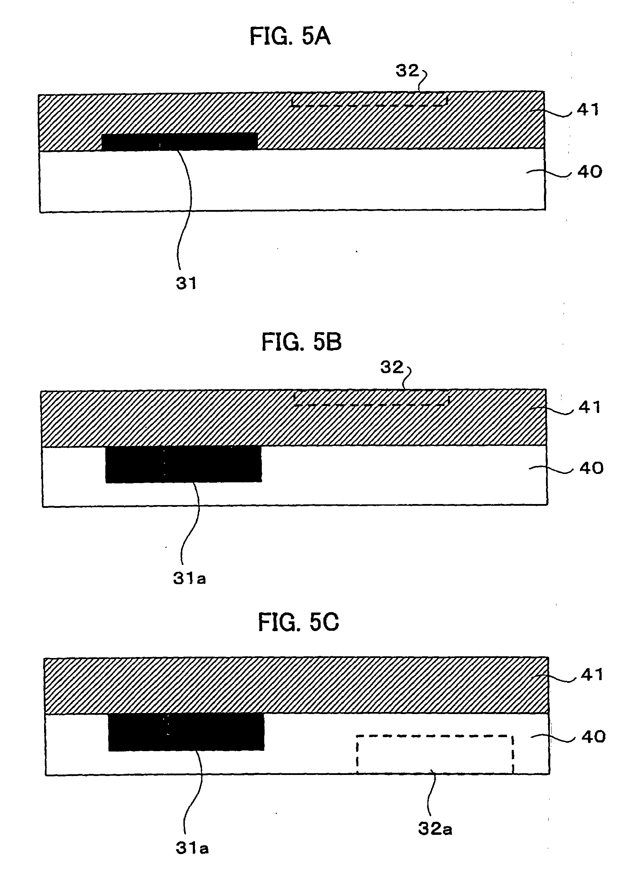

Next, the description will be given of recording of the invariable code 31 and the variable code 32 on the paper-type display medium with reference to FIGS. 5A to 5C. FIGS. 5A to 5C show the sectional views showing the physical structure of the paper-type display medium after the invariable code 31 and the variable code 32 are recorded.

First, as shown in FIG. 5A, if the codes are barcodes (including two-dimensional barcodes), the invariable code 31 is recorded on the base material 40 such as a film or a paper, and the heat-sensitive color coupler 41 such as leuco-dye is coated thereon. Then, the variable code 32 is recorded on the coating of the heat-sensitive color coupler 41.

If the codes are the RFID as shown in FIG. 5B, a chip 31a storing the invariable code is embedded in the base material 40 such as a film or a paper, and the heat-sensitive color coupler 41 such as the leuco-dye is coated thereon. The variable code 32 can be recorded on the coating of the heat-sensitive color coupler 41. Also, the variable code may be embedded in the paper-type display medium in the form of RFID. In that case, as shown in FIG. 5C, the chip 32a storing the variable code is embedded in the base material 40. Further, the RFID 31a for the invariable code 31 and the RFID 32a for the variable code 32 may be formed as one chip.

The rewritable information displayed on the paper-type display medium, such as certain contents, is displayed on the coating of the hear-sensitive color coupler 41. Namely, the information is displayed, not on the base material 40, but on the heat-sensitive color coupler 41. Therefore, the variable code 32 recorded on the heat-sensitive color coupler 41 becomes the rewritable code.

On the contrary, since the invariable code 31 is recorded on the base material 40, the invariable code 31 never varies even if the information on the heat-sensitive color coupler 41 is repeatedly rewritten. This is also true for the invariable code stored in the chip 31a.

In the case of using leuco-dye, for example, the coating layer of the heat-sensitive color coupler 41 may be constituted by leuco-dye, compound of an acid group for coloring by heating the leuco-dye and a hydrochloric acid group for discoloringby heating the leuco-dye, or a binder which is consisted of amphoteric compounds having the acid group and the hydrochloric acid group and water or high polymer material dissolved by organic solvent.

As the leuco-dye, 3 -indolino- p -dimethylaminophenyl-6-dimethylaminophthalide, Crystal Violet Lactone, 3-diethylamino- 7 -chlorofluoran, 2 - ( 2 -fluorophenylamino) - 6 -di-n-butylaminofluoran, 2 - (2-fluorophenylamino) -6-diethylaminofluoran, 3 -diethylamino- 7 -cyclohexylaminofluoran, 3-diethylamino-5-methyl-7-t-butylfluoran, 3-diethylamino-6-methyl-7-p-butylanilinofluoran, 3-diethylamino-6-methyl-7-anilinofluoran, 2-anilino-3-methyl-6-(N-ethyl-p-toluidino)-fluoran, 3-pyrolizino-6 -methyl-7-anilinofluoran, 3-pyrrolidino-7-cyclohexylaminofluoran, methyl-7-anilinofluoran, 3-N-methylcyclohexylamino-6-methyl-7-anilinofluoran may be used.

As the acid group for coloring the leuco-dye by heating, phenolic hydroxyl group or carboxyl group may be used. As the hydrocholoric acid group for discoloring the leuco-dye by heating, amino group may be used. As the amphoteric compounds having those acid group and hydrocholoric acid group, aminophenol 2-aminobenzoic acid such as 2-aminophenol, 3-aminophenol, 4-aminophenol; aminobenzoic acidsuch as 3-aminobenzoic acid, 4-aminobenzoic acid; hydroxyaminobenzoic acid such as 2-hydroxy -3-aminobenzoic acid, 2-amino-3-hydroxybenzoic acid, 2-amino-4-hydroxybenzoic acid, 2-amino-4-aminobenzoic acid, 2 -hydroxy-6-aminobenzoic acid, 3-amino-4-hydroxybenzoic acid, 3-hydroxy-5-aminobenzoic acid, may be used.

As the compound having the acid group, hydroxybenzoic acid such as 2-hydroxybenzoic acid, 3-hydroxybenzoic acid; hydroxysalicylic acidsuch as 4-hydroxysalicylic acid, 5-hydroxysalicylic acid, may be used. As the compound having hydrochloric acid group, tochicle-amine, nonylamine, benzylamine, 2-phenylethylamine, 6-phenylhexylamine may be used. As the binder, methyl alcohol, polyvinyl alcohol, ethylcellulose, cellulose acetate, nitrocellulose, polystyrene, polyvinyl chloride may be used. As the contents of those compositions at the leuco reversible heat-sensitive recording display portion, the leuco-dye for 0.1 to 1 weight part and the binder less than 2 weight part are mixed for amphoteric compounds for 1 weight part. For example, the above amphoteric compounds, the leuco-dye and the binder are dissolved or dispersed on water or organic solvent, and are printed on a supporting material by a method of photogravure, offset printing, or letterpress printing, for example.

The principle of displaying and erasing images on the leuco reversible heat-sensitive recording display portion are as follows. By heating the leuco reversible heat-sensitive recording display portion by a thermal head with relatively low temperature, lactone ring of colorless leuco-cye is opened by phenol compound with the heat energy, and the color is changed from colorless to colored so that various information is visible. By heating with high temperature by ceramic bar, the lactone ring is cyclized to be colorless compoundby the heat energy. Namely, showing the property of acid and base by heat operation, and hence it becomes developing and reducing for the leuco-dye.

Next, the description will be given of the case in which the reversible display portion is a reversible portion using high polymer dispersion type liquid crystal. By using the high polymer dispersion type liquid crystal, which is responsive to an electric field or heat and which can display or record various information, as the reversible displayportion, information is written by applying heat and information is erased by applying voltage.

The reversible display portion in using the high polymer dispersion type liquid crystal has the laminated layers of conductive layer serving as an electrode and the high polymer dispersion type liquid crystal on the paper-type display medium, and preferably a protective layer is further formed thereon. In the high polymer dispersion type liquid crystal, liquid crystal particles are independently dispersed in matrix resin. As the high polymer dispersion type liquid crystal, a polymer membrane having successive porous structure and filled with liquid crystal in the voids (porous portions; generally called as cell) is preferably used.

In the polymer membrane having the successive porous structure used as the high polymer matrix, countless numbers of fine pores existing in the polymer are connected. The kind of the polymer is not limited if the polymer membrane has the successive porous structure having appropriate percentage of void and pores of appropriate size. As the polymer membrane having successive porous structure, for example, drawing-processed polytetrafluoroethylene, additive of filler having many fine pores, or punching-processed polymer membrane may be used.

As the liquid crystal to be filled in the voids of the polymer membrane having successive porous structure, any known liquid crystal can be used, but smectic liquid crystal superior in memory property is preferable. As such smectic liquid crystal, various smectic liquid crystal obtainable from Japan Energy Co. LTD., may be used. Then, the high polymer dispersion type liquid crystal, in which liquid crystal composition particles are filled in the voids in the polymer membrane having successive porous structure, is formed between a pair of conductive substrates, at least one of them being transparent, to produce a reversible display medium, and then it is formed at a part of a paper-type display medium as a reversible display portion.

The manner of recording and erasing information on the reversible display portion using the high polymer dispersion type liquid crystal will be described. Erasing information is performed by applying an electric field to orient liquid crystal molecules in a direction of the electric field after heating the high polymer dispersion type liquid crystal layer, if necessary. Recording information is performed by applying necessary heat on the high polymer dispersion type liquid crystal layer to disorient the orientation of liquid crystal molecules at the heated portion. As the method of heating, using the thermal head is preferred. Conversely, recordingmay be performed by applying an electric field and erasing may be performed by applying heat.

### (vi) Information Providing Process

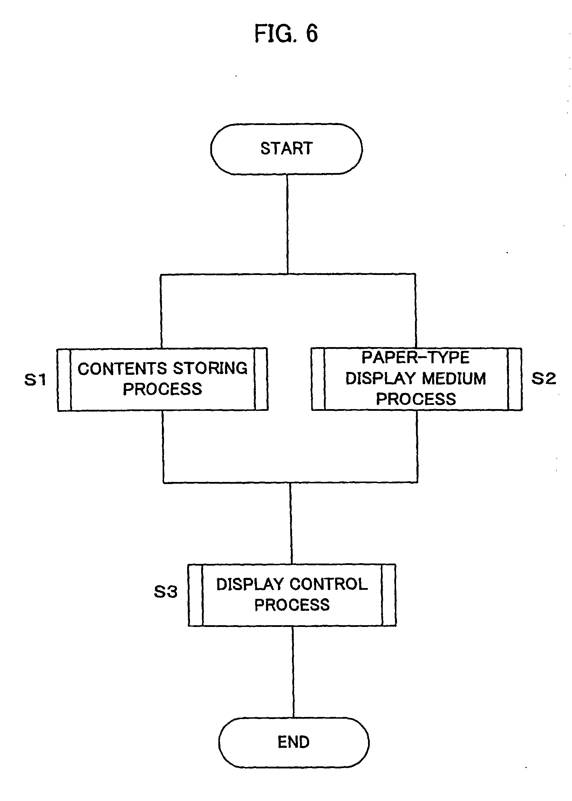

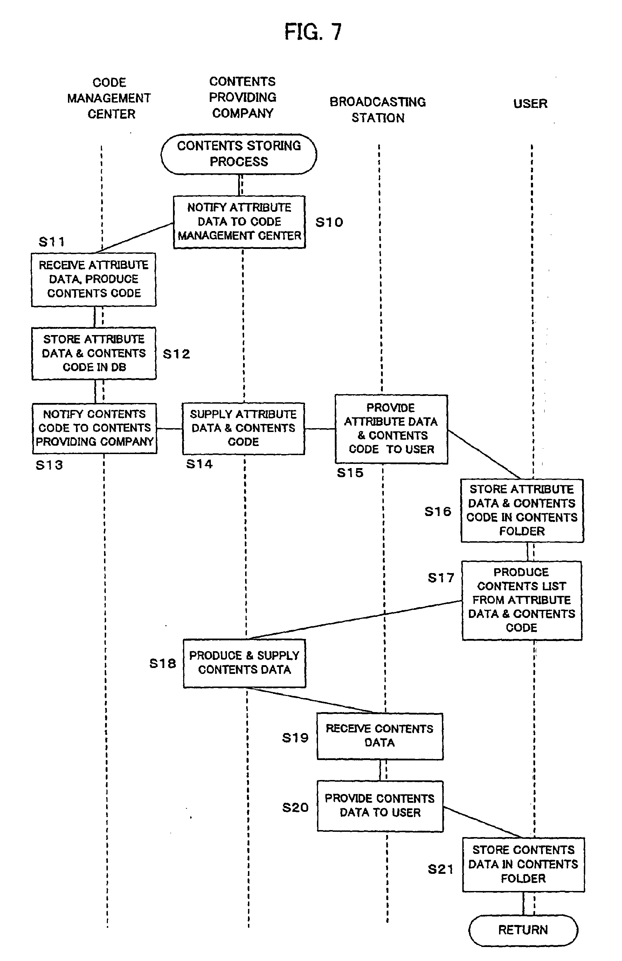

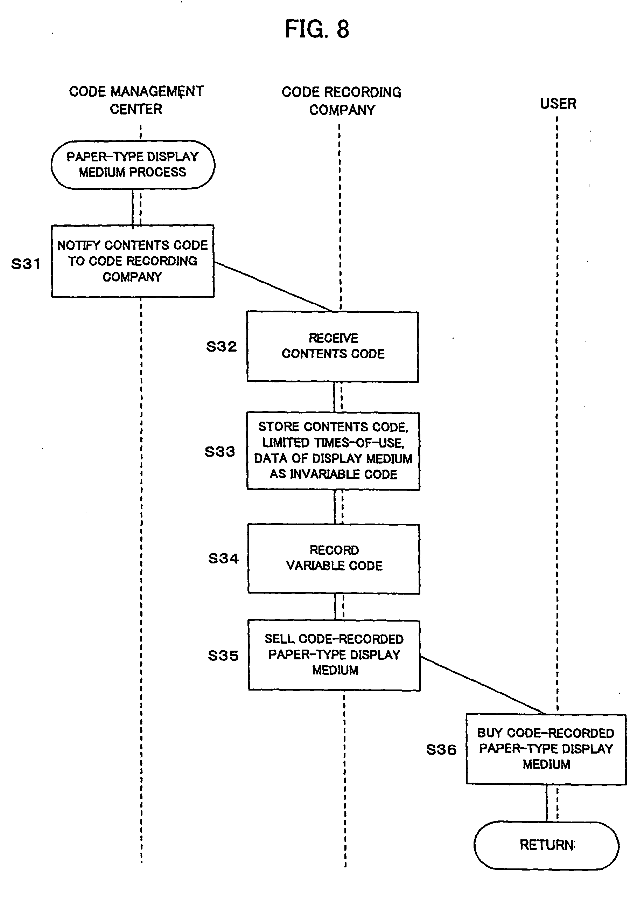

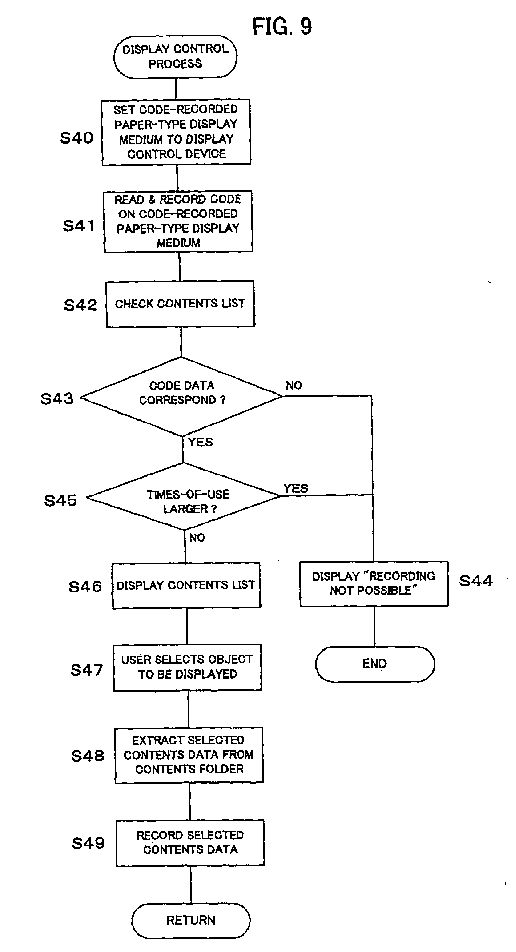

Next, the description will be given of information providing process utilizing the information providing system shown in FIG. 1 with reference to FIGS. 6 to 9. FIG. 6 is a main routine of the information providing process, and FIG. 7 is a subroutine of the contents storing process in FIG. 6. FIG. 8 is a sub-routine of the paper-type display medium process in FIG. 6, and FIG. 9 is a subroutine of the display control process in FIG. 6.

As shown in FIG. 6, in the information providing process, first the contents storing process is executed (step S1). In the contents storingprocess, the attribute data producedby the contents providing company 13 is supplied to the broadcasting station 16 together with the contents code produced by the code management center 14, and the contents are recorded in the hard disk 6 in the receiver 2 in the user environment 1 via the broadcasting station 16. The detail will be described with reference to FIG. 7.

First, the contents providing company 13 produces the attribute data based on the information of the contents to be provided, and notifies it to the code management center 14 (step S10). The code management center 14 receives the attribute data, and produces the contents code which is the identification information of the contents, based on the attribute data (step S11). Further, the code management center 14 records the attribute data in the management DB 15 in a manner associated with the contents code thus produced as the key (step S12). By this, the code management center 14 can readily confirm the contents code produced so far in correspondence with the attribute data, based on the information in the management DB 15. The code management center 14 notifies the contents code thus produced to the contents providing company 13 (step S13).

The contents providing company 13 receives the contents code from the code management center 14. Then, the contents providing company 13 supplies the attribute data produced in step S10 and the contents code received from the code management center 14 to the broadcasting station 16 (step S14). The broadcasting station 16 utilizes the storage-type data broadcasting service, and provides the attribute data and the contents code received from the contents providing company 13 to the user environment 1 via the artificial satellite 17 or the terrestrial digital broadcasting base 23 (step S15).

In the user environment 1, the receiver 2 receives the electric waves including the attribute data and the contents code via the antenna 10. Then, the controller 8 in the receiver 2 records the attribute data and the contents code in the received waves into the contents folder in the hard disk 6, shown in FIG. 2A (step S16). Further, the controller 8 produces the contents list 9 based on the attribute data and the contents code, and records the contents code and the contents name (step S17).

On the other hand, the contents providing company 13 produces the contents data and supplies it to the broadcasting station 16 (step S18). Since the contents are the information of the newspaper articles in this embodiment, the contents data is updated everyday in the contents providing company 14. Namely, the contents data is supplied to the broadcasting station 16 everyday. The contents data is the information based on the contents of the newspaper articles, and hence includes the date information.

The broadcasting station 16 receives new contents data everyday from the contents providing company 13 (step S19), and provides the new contents data to the user environment 1 by utilizing the storage-type data broadcasting service (step S20). In the user environment 1, the receiver 2 receives the new contents data everyday via the antenna 10. Then, the controller 8 in the receiver 2 records the received contents data under the contents folder in the hard disk shown in FIG. 2A in a manner classified by the date (step S21). Since the contents data includes the date information and is recorded and stored under the contents folder everyday by utilizing the storage-type data broadcasting service, it is recorded under the contents folder in the manner classified by the date for the sake of management.

Further, the controller 8 records the back numbers in the contents list 9 based on the contents data recorded under the contents folder everyday. The steps S18 to S21 are repeated until the service by the contents providing company is finished.

On the other hand, according to the main routine shown in FIG. 6, the paper-type display medium process is executed (step S2). In the paper-type display medium process, the code management center 14 notifies the produced contents code to the code recording company 18; and further the code recording company 18 records the information such as the contents code and the limited times-of-use on the paper-type display medium as the invariable code 31 and the variable code 32 and sells the code-recorded paper-type display medium 19 to the user. The detail will be described with reference to FIG. 8.

First, the code management center 14 notifies the contents code produced in step S11 in FIG. 7 to the code recording company 18 (step S31), and the code recording company 18 receives the contents code (step S32).

The code recording company 18 records the contents code, the limited times-of-use and the data of the paper-type display medium on the paper-type display medium as the invariable code 31 (step S33). Further, the code recording company 18 records the information variable during the use of the paper-type display medium on the paper-type display medium as the variable code 32 (step S34).

Then, the code recording company 18 sells the code-recorded paper-type display medium 19 (step S35), and the user buys the code-recorded paper-type display medium 19 (step S36).

In the information providing process, after the contents storing process (step S1) and the paper-type display medium process (step S2), the display control process is executed (step S3) as shown in FIG. 6. The display control process displays predetermined contents on the code-recorded paper-type display medium 19 in the user environment 1, and the detail of which will be described below.

In the user environment, the user sets the code-recorded paper-type display medium 19 bought in step S36 in FIG. 8 to the display control device 4 (step S40). The code reader 12 of the display control device 4 reads the invariable code 31 and the variable code 32 recorded on the code-recorded paper-type display medium (step S41). The information read by the code reader 12 is the data including the contents code, the limited times-of-use and the data of the paper-type display medium for the invariable code 31 as shown in FIG. 4B, and is variable information varying during the user of the paper-type display medium, such as the times-of-use for the variable code 32 as shown in FIG. 4C. The information of the invariable code 31 and the variable code 32 read by the code reader 12 are recorded in the display control device 4.

Next, the identification controller 11 in the display control device 4 checks the contents list 9 in the receiver 2 (step S42). Further, the identification controller 11 extracts the contents code recorded in step S41 from the display control device 4, and determines whether there exists a contents code corresponding to the extracted contents code in the contents list 9 (step S43). The contents code recorded in step S41 is the contents code which is read from the invariable code 31 recorded on the code-recorded paper-type display medium 19 that the user bought. Namely, in step S43, it is determined whether or not the contents code included in the invariable code 31 recorded on the code-recorded paper-type display medium exists in the contents list 9.

If the contents code included in the invariable code 31 recorded on the code-recorded paper-type display medium does not exist in the contents list 9, the display control device 4 displays "RECORDING NOT POSSIBLE" (step S44). On the contrary, if the contents code included in the invariable code 31 recorded on the code-recorded paper-type display medium corresponds to the contents code in the contents list 9, the limited times-of-use included in the invariable code 31 recorded in step S41 and the times-of-use included in the variable code 32 are extracted from the display control device 4 and are compared with each other (step S45).

If the times-of-use is equal to or larger than the limited times-of-use, the display control device 4 displays "RECORDING NOT POSSIBLE" (step S44). On the contrary, if the times-of-use is smaller than the limited times-of-use, the identification controller 11 displays the contents list 9 corresponding to the contents code on the display 5 (step S46).

The user selects an object to be displayed on the code-recorded paper-type display medium 19 from the contents list 9 on the display 5 (step S47). Specifically, if the content code is "001A", for example, the part surrounded by the broken line 70 in FIG. 3 is shown on the display 5. The user can determine the newspaper articles of which day is displayed from the back numbers of "Newspaper-A". The user can select further subdivided information of the newspaper articles to be displayed on the code-recorded paper-type display medium 19, by selecting the article genre and the region genre. It is noted that the user selects the object to be displayed by the input means such as the remote-controller 3 or the screen touch-panel on the display 5, and the information selected by the user is recognized by the identification controller 11 of the display control device 4 via the controller 8 of the receiver 2.

Then, the identification controller 11 extracts the corresponding contents data from the contents folder in the hard disk 6 in the receiver 2 based on the information selected by the user (step S48). Further, the identification controller 11 displays the contents data thus extracted on the code-recorded paper-type display medium 19 (step S49). By this, the user can confirm the information of the selected contents on the paper-type display medium. The user can repeatedly display the information of the contents on the display medium within the limited times-of-use.

In this embodiment, while the further subdivided information of the newspaper articles to be displayed on the code-recorded paper-type display medium selectable by the user is shown in FIG. 3, the information to be subdivided may be arbitrarily set, e.g., by the pages (1 to 20 pages) of the newspaper.

While the limited times-of-use is set as the limitation of use of the code-recordedpaper-type displaymedium in this embodiment, not the times but the period may be arbitrarily set.

By the way, in the hard disk 6 in the receiver 2 in the user environment 1, a plurality of contents are stored regardless of whether the user buys the code-recorded paper-type display medium 19 or not. The frequency of erasing and updating the contents is determined by the contents providing company 13 or the broadcasting station 16 in accordance with the capacity of the service directory in the hard disk 6 and/or the detail of the contents. Erasing and updating the information of the contents, i.e., the attribute data and the contents data are reflected to the contents list 9. The frequency of erasing or updating of predetermined contents is notified from the contents providing company 13 or the broadcasting station 16 to the code management center 14 together with the contents data, and the code management center 14 records the frequency of erasing and updating in the management DB 15 based on the contents data.

In this embodiment, as shown in the contents storing process in FIG. 7, the contents providing company 13 first provides the contents code and the attribute data to the user via the broadcasting station 16 and then provides the contents data produced everyday to the user. However, all of the contents code, the attribute data and the contents data may be provided everyday by the process of updating the whole contents of the corresponding directory.

Also, while the code recording company 13 and the code management center 14 are separate entities, they may perform the processes as a single entity.

### (vii) Modification

If necessary information in certain contents is determined in advance, the user can set the necessary information in the receiver 2 so that the only the necessary information is automatically displayed on the code-recorded paper-type display medium 19. By this, the selection of the display object by the user, performed in steps S47 and 548, may be omitted, and the necessary information can be promptly displayed on the code-recorded paper-type display medium 19.

Also, by setting the personal information such as zip code and/or telephone number of the user in the receiver 2, the regional information (e.g., the region genre in this embodiment) can be selected based on the personal information. Specifically, the receiver 2 stores a correspondence table between zip codes and telephone numbers, and specifies the user's residential area based on the zip code in the user's personal information. Then, based on the user' s residential area, the receiver 2 automatically selects the regional information of the contents. By this, the burden on the user is reduced, and the regional information can be rapidly displayed on the code-recorded paper-type display medium 19.

As described above, according to this embodiment, by buying the code-recorded paper-type display medium, the contents whose contents code is coincident with the contents code on the display medium can be displayed by utilizing the storage-type data broadcasting service. Namely, the user does not have to pay the fee corresponding to the contents fee, the contents providing company can readily collect the fee, and the user can easily uses the contents.

If the user buys the code-recorded paper-type display medium at a convenience store and the like, it is unnecessary to distribute it to each home by hand, like the conventional newspaper, and hence the cost can be reduced.

Further, the code-recorded paper-type display medium is rewritable, and information of newspaper articles can be displayed by one display medium for more than one year. Namely, it is possible to avoid that old newspapers become garbage. In addition, while the limited times-of-use is set to the display medium for the pay contents such as the newspaper articles, the display paper can be reused, even if the limited times-of-use is exceeded, to display free contents within the usable times of the medium itself, and hence the effective use of resources can be achieved in view of environmental issue.

Also, the information to be displayed on the display medium can be arbitrarily selectedby the user and then displayed, necessary information can be extracted more rapidly than the conventional newspaper. Further, if necessary information is set to the receiver in advance, necessary information can be automatically selected and displayed, and hence the burden of the user to select the necessary information every time may be omitted.

### [2nd Embodiment]

### (i) Schematic Configuration of Information Providing System

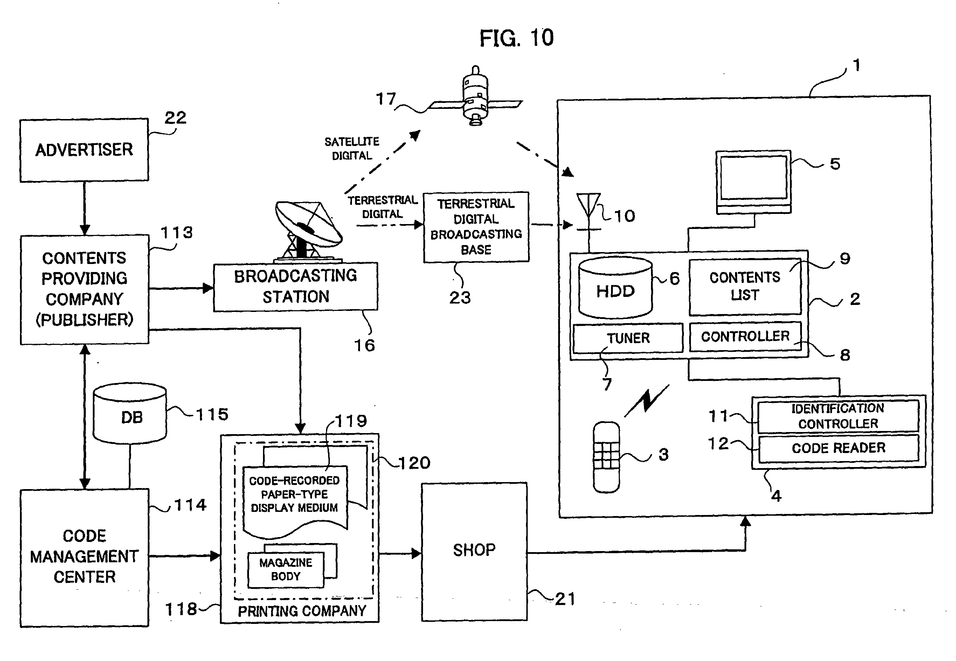

FIG. 10 shows the schematic configuration of the information providing system according to the second embodiment of the invention. In FIG. 10, the information providing system includes a user environment 1, a contents providing company 113, a code management center 114, a broadcasting station 16, a artificial satellite 17, a terrestrial digital broadcasting base 23, a printing company 118, a store 21 and an advertiser 22.

The contents providing company 113 is a publishing company which receives the fee for advertisement and produces body of magazine includingadvertisementandarticles, and supplies it to the printing company 118. In order to provide the user with the information of a part of the magazine (hereinafter referred to as "Information for contents") by utilizing the storage-type data broadcasting service, the contents providing company 113 produces data broadcasting contents corresponding to the information for contents and supplies them to the broadcasting station 16. The information for contents is information of special value, which is conventionally made foldout so that the user cannot read by the stand-up reading. Specifically, the contents information is information which encourages the purchasing of items and services and thereby leads to profit, and includes information of special articles, advertisement, the last page of serial cartoon, advance notice of next issue, advance notice of new product, or advance notice of event.

The code management center 114 receives the attribute data included in the contents, which is the information of the magazine, from the contents providing company 113, and produces the contents code, which is the identification information of the contents, based on the attribute data. The contents code is supplied to the broadcasting station 16 via the contents providing company 113. The contents code is also notified to the printing company 118. The code management center 114 stores the attribute data received from the contents providing company 113 and the contents code produced by itself in the management DB 115 as a pair.

The printing company 118 records the contents code notified by the code management center 114 on the paper-type display medium to produce the code-recorded paper-type display medium 119. Also, the printing company 118 prints the body of the magazine supplied from the contents providing company 113, and integrates the body of the magazine thus printed and the code-recorded paper-type display medium 119 to produce the magazine 120. Further, the printing company 118 supplies the magazine 120 thus produced to the store 21 so as to put the magazine 120 on the distribution system. Here, "integrating" is to insert the code-recorded paper-type display device 119 in the magazine so that it can be cut off, for example.

The store 21 is abookstore or a convenience store, for example, which puts the magazine 120 on sale.

The advertiser 22 is a maker of cosmetics, car or personal computer, for example, which puts the advertisement or article of the product of the maker on the magazine 120 to promote the sales of the product, and pays the advertisement fee to the contents providing company 113 in consideration of the advertisement. The contents providing company 113 may sell the code-recorded paper-type display medium 119, not by itself, but in the manner integrated with the magazine 120 according to the advertisement fee.

On the other hand, the broadcasting station 16 provides the contents, including the attribute data, the contents data and the contents code supplied from the contents providing company 113, to the user environment 1 via the artificial satellite 17 or the terrestrial digital broadcasting base 23 by utilizing the storage-type data broadcasting service.

In the user environment 1, the user receives, by the receiver 2, the digital broadcasting for the storage-type data broadcasting service from the broadcasting station 16 via the artificial satellite 17 or the terrestrial digital broadcasting base 23, and can view or watch the data broadcasting program and/or the contents on the display 5. The receiver 2 records and stores the broadcasting program and/or the contents thus received.

The user buys the magazine 120 produced by the printing company 118 and put on sale by the store 21. Then, the user can display the contents corresponding to the contents code recorded on the code-recorded paper-type display medium 119 on the code-recorded paper-type display medium 119 or the display 5, by the display control device 4 in the user environment 1, based on the code-recorded paper-type display medium 119 integrated with to the magazine 120.

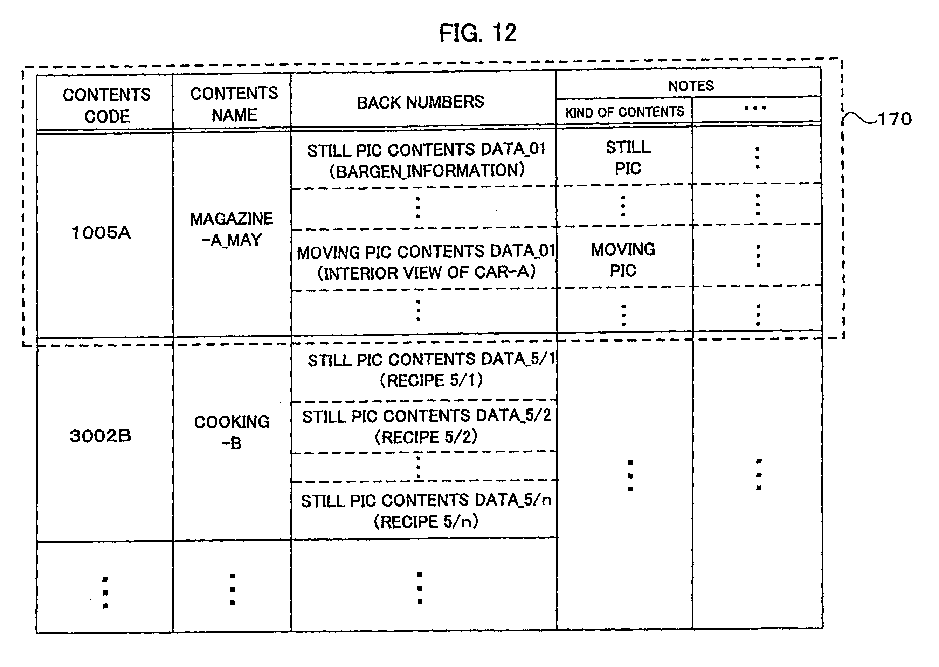

It is noted that the user environment 1 is the same as that in the first embodiment, and hence its description will be omitted. However, in the second embodiment, the contents are a part constituting the data broadcasting program, and can be viewed on the code-recorded paper-type display medium 119 or the display 5. Namely, the display control device 4 displays the contents corresponding to the contents code recorded on the code-recorded paper-type display medium 119 on the code-recorded paper-type display medium 119 itself or on the display 5. The contents in this embodiment are related to the magazine 120, and are stored in the service area in the hard disk 6, though the detail of which will be described later. Also, in this embodiment, the contents list 9 is the one as shown in FIG. 12.

### (ii) Contents

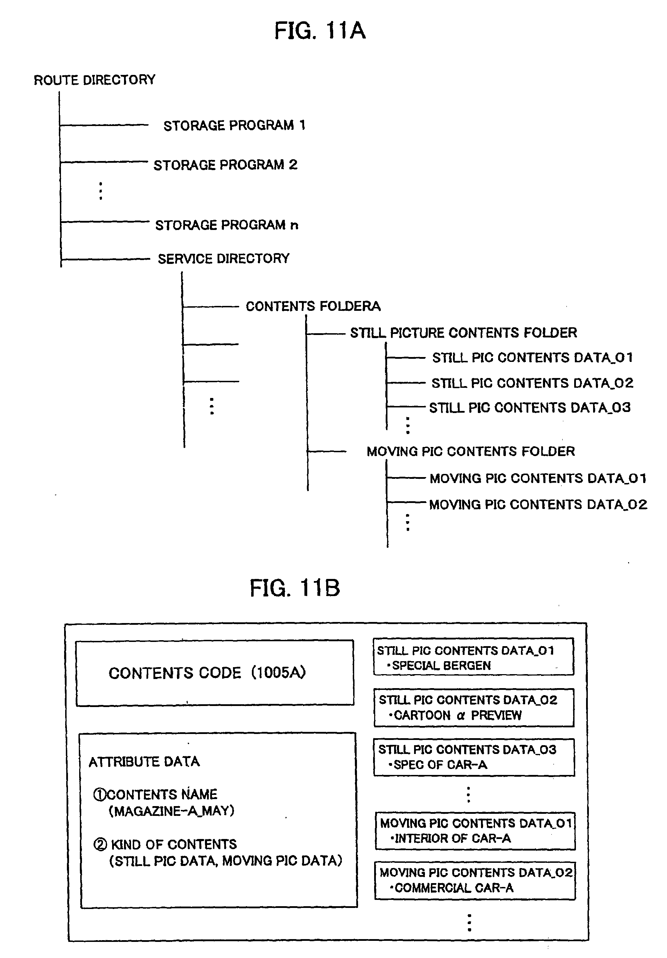

FIG. 11A shows the recording position of the contents folder. The contents are the information provided to the user by utilizing the storage-type data broadcasting service, and the information provided as the contents includes the contents code, the attribute data and the contents data. In this embodiment, the contents are provided to the user as the edited digital data which can be displayed on the paper-type display medium or the display 5. The contents data included in the contents has two kinds, i.e., the still picture contents data and the moving picture contents data. The still picture contents data is the still picture, which can be displayed on the code-recorded paper-type display medium 119 or the display 5. The moving picture contents data can be displayed on the display 5 so as to be viewed by the user, but cannot be displayed on the code-recorded paper-type display medium 119 because it is moving picture.

The contents folder is a folder which records the information of the contents in the hard disk 6 after the receiver 2 in the user environment 1 receives the contents from the broadcasting station 16.

The storage-type data broadcasting service stores the data broadcasting programs and/or the contents in the service area of the hard disk 6 provided in the receiver 2. Inside of the service area of the hard disk 6 has the hierarchical structure as shown in FIG. 11A, and a plurality of storage programs are recorded under the route directory. At the same hierarchical level as the plurality of storage programs, there is a service directory for recording appendant data, e.g., the contents related to the magazine, other than the storage program. When the user wants to arbitrarily record the contents and/or the programs, they are recorded in the user area of the hard disk 6.

The service directory further has the hierarchical structure, andapluralityof contents folders, including the contents folder-A, are recorded under the service directory. The contents folder further has the hierarchical structure, and plural contents data are recorded under the contents folder in correspondence with the respective contents to be recorded.

FIG. 11B shows the information of the contents recorded in the contents folder-A. In this embodiment, it is assumed that the information of the contents recorded in the contents folder-A relates to the magazine 120.

The contents include the attribute data, a plurality of contents data and the contents code. The attribute data and the contents data are produced by the contents providing company 113, and the contents code is produced by the code management center 114. The attribute data includes the contents name, the kind of contents and others. The contents name is a general name of the contents, which is "Magazine-A_May" because the contents relates to the magazine 120 in this example.

The kind of contents is information subdivided depending upon whether the contents data included in the contents is the still picture contents data or the moving picture contents data. For example, the still picture data may be "Bargain Information" which is a special part of "Magazine-A_May". The moving picture contents data can be "Interior View of Car-A" for the car shown in the "Magazine-A_May" as the advertisement.

Thus, the user can readily recognize, by the contents list 9, whether the predetermined contents data is the still picture contents data which can be displayed on the paper-type display medium or the moving picture contents data which can be displayed on the display 5, and can select them, although the detail will be described later.

The contents code is identification information of the contents produced by the code management center 114 based on the attribute data notified by the contents providing company 113. In this embodiment, the contents code recorded in the contents folder-A is "105A".

The contents data is produced by the contents providing company 113 based on the information for contents related to the magazine 120, and has two kinds, i.e., the still picture contents data and the moving picture contents data. After producing the contents data, the contents providing company 113 records the contents data in the contents folder-A via the broadcasting station 16 as shown in FIG. 11A.

The contents data are recorded under the contents folder-A in a manner subdivided based on the attribute data. Specifically, the contents folder-A is subdivided into the still picture contents folder and the moving picture contents folder, and the contents data are recorded in the contents folder corresponding to its kind. By this, when the user selects the contents data to be displayed on the paper-type display medium or the display 5 using the contents list 9, the display control device 4 can quickly obtain and display the selected contents data.

At the time of providing the contents by utilizing the storage-type data broadcasting service, the broadcasting station can, at the same time, attach the information of the recording position of the contents folder recording the contents information. By this, predetermined contents information is automatically recorded at the recording position desired by the contents providing company 113. The contents information and information of the recording position are coded in order to prevent the alteration by the user, and cannot be decoded by the user. Since a plurality of contents supplied from a plural ity of contents providing companies via the broadcasting station 16 are recorded under the service directory of the hard disk 6 in the receiver 2, the contents corresponding to the magazine area also recorded regardless of whether the user buys the magazine 120 or not.

### (iii) Contents List

As shown in FIG. 12, the contents list 9 includes the contents codes, the contents names, the back numbers and the notes, and recorded under the service directory in the hard disk 6 as the list of the stored contents.

The contents code is identification information of the contents. When the contents are stored in the contents folder under the service directory of the hard disk 6 by utilizing the storage-type data broadcasting service, the contents codes are recorded in the contents list 9 as the information of the contents, as shown in FIG. 11B. The contents code is produced by the code management center 114 based on the attribute data, and the contents are uniquely specified by the contents code.

Therefore, the contents names, the back numbers and the notes are stored in the contents list 9 based on the information of the contents stored in the contents folder under the service directory of the hard disk 6, with using the contents code as the key. The back numbers are all of the plurality of contents data corresponding to predetermined contents code. The back numbers in this embodiment are the contents data related to the magazine 120, such as the advance notice of the cartoon α appearing serially in the magazine 120, as shown in FIG. 12. The notes are the information subdivided based on the attribute data corresponding to the predetermined contents code, and is the kind of the contents, for example.

The contents list 9 is updated every time when the attribute data, the contents data or the contents code, constituting the contents, is provided.

### (iv) Paper-type Display Medium

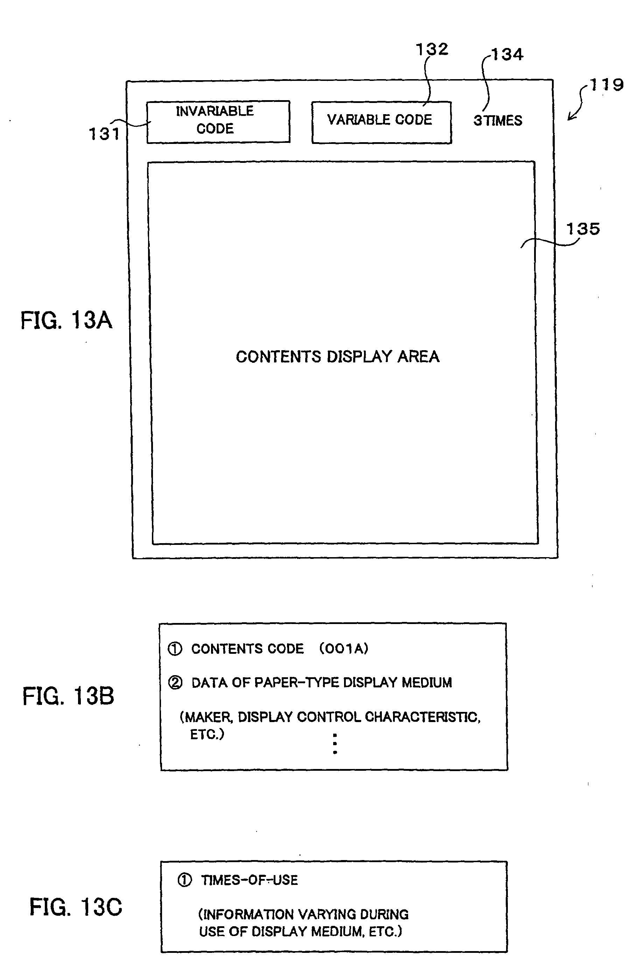

FIG. 13A shows the configuration of the code-recorded paper-type display medium. The code-recorded paper-type display medium 119 is a paper-type display medium on which invariable code 131 and variable code 132 described later are recorded, and is integrated with the magazine 120. The magazine 120 is put on sale by the store and provided to the user so that the code-recorded paper-type display medium 119 is provided to the user. The paper-type display medium is a display medium which is thin like a paper, has a flexibility of a certain degree and is repeatedly rewritable, including the ones generally called as "electric paper" or "digital paper".

"Rewitable" means that the contents once displayed can be erased and new information can be displayed by applying heat processing to the paper-type display medium, in a case of leuco reversible heat-sensitive recording system. Specifically, after displaying the special part of themagazine 120 of this month "Bargain Information" based on the still picture contents data_01, the advance notice of the cartoon α serially appearing on the magazine-A can be displayed on the same display medium based on the still picture contents data_02. In this case, the "Bargain Information" never remains on the display medium. Since the paper-type display medium is sustainable for the rewriting of about 500 times in the case of leuco reversible heat-sensitive recording system, it can be reused for the display of free contents. As the paper-type display medium, various display medium including a display device of leuco reversible heat-sensitive recording system, high polymer dispersion type liquid crystal, chiral nematic liquid crystal or electrophoresis system, can be used.

As shown in FIG. 13A, the code-recorded paper-type display medium 119 has the invariable code 131, the variable code 132, the times-of-use 134 and the contents display area 135.

The invariable code 131 is invariable informationwhichnever vary even if the paper-type display medium is repeatedly rewritten. FIG. 13B shows the information that the invariable code 131 includes. The invariable code 131 includes the contents code and data of the paper-type display medium, and is recorded on the paper-type display medium by the code recording company 118.

The contents code is identification information which the code management center 114 produces based on the attribute data notified by the content providing company 113. The code recording company 118 receives the notification of the contents data from the code management center 114, the detail of which will be described later. The contents code in this embodiment is "1005A". The paper-type display medium can display only the contents corresponding to the contents code included in the invariable code 131 recorded thereon, except for free contents.

The data of the paper-type display medium is information of the paper-type display medium itself, such as a maker or display control characteristic that become necessary when the contents are displayed on the paper-type display medium. Specifically, when a certain paper-type display medium performs the rewriting and displaying by the heat-sensitive coloring and discoloring, the set temperatures of thermal heads are included in the invariable code 131.

The variable code 132 is variable information that may vary during the use of the paper-type display medium, and includes the times-of-use which varies according to the operation by the user, as shown in FIG. 13C. The variable code 132 is recorded on the paper-type display medium by the code recording company 118. The times-of-use is the number of times for which the user displayed the contents corresponding to the contents code included in the invariable code 131 or free contents.

The times-of-use 134 displayed on the paper-type display medium is the times-of-use included in the variable code 132. The invariable code 131 and the variable code 132 are coded in order to prevent the alteration by the user, and hence cannot be decoded bytheuser. Therefore, they are displayed on the paper-type display medium so that the user can visually recognize the times-of-use 134. The times-of-use 134 varies according to the times-of-use included in the variable code 132.

The contents display area 135 is an area where the contents are displayed, namely, the area where contents corresponding to the contents code included in the invariable code 131 or the free contents are displayed.

For recording the invariable code 131 or the variable code 132, various methods can be used, for example, barcodes or two-dimensional codes may be recorded on the paper-type display medium, or RFID may be incorporated in the paper-type display medium.

### (v) Recording Codes

The recording of the invariable code 131 and the variable code 132 are similar to those of the first embodiment, and hence the description will be omitted. In this embodiment, when referring to FIG. 5, the invariable code 31 should be replaced with the invariable code 131 and the variable code 32 should be replaced with the variable code 132.

### (vi) Information Providing Process

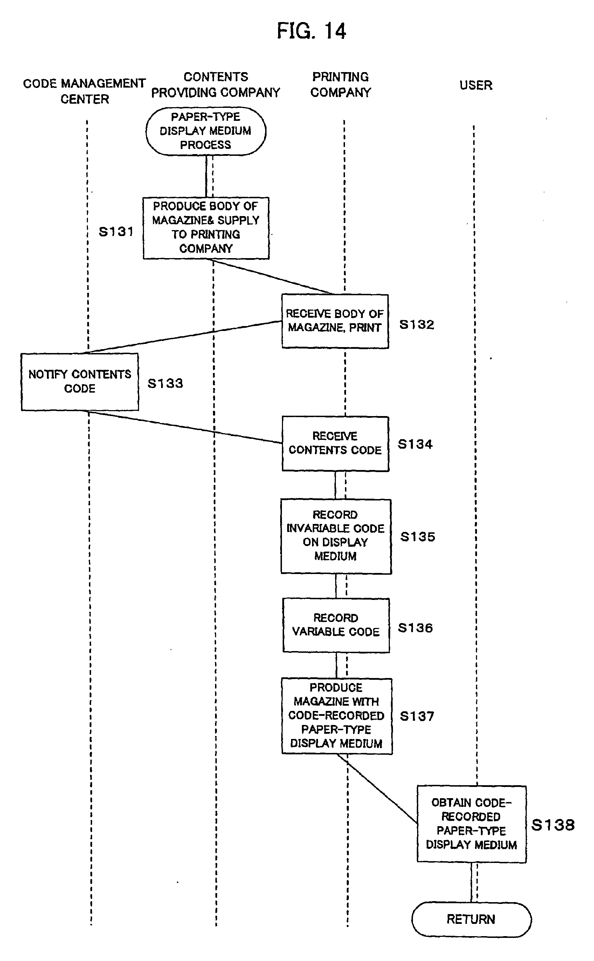

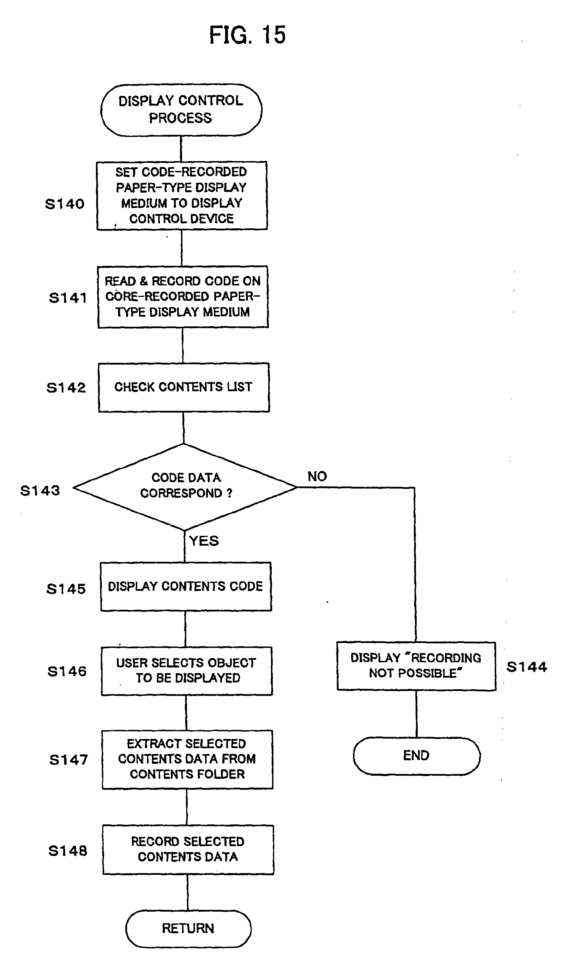

Next, the information providing process by utilizing the information providing system shown in FIG. 10 will be described with reference to FIGS. 6, 7, 14 and 15. FIG. 6 is a main routine of the information providing process, and FIG. 7 is a subroutine of the contents storing process in FIG. 6. FIG. 14 is a subroutine of the paper-type display medium process in FIG. 6, and FIG. 15 is a subroutine of the display control process in FIG. 6.

The contents providing company 113 is a publisher producing the magazine 120 on which advertisement requested by the advertiser 22 and the articles are printed. The contents storing process shown in FIGS. 6 and 7 is similar to that of the first embodiment, and hence the description thereof will be omitted.

It is noted that, while the contents are the newspaper articles in the first embodiment, the contents are the information for contents related to the magazine 120 in this embodiment. Therefore, in step S18, the contents data is produced based on the information for contents related to the magazine 120 and is supplied to the broadcasting station 16. In step S20, the broadcasting station 16 provides the contents data to the user environment 1 with an arbitrary time interval by utilizing the storage-type data broadcasting service. Further, in step S21, the controller 8 in the receiver 2 records the received contents data under the contents folder in the hard disk 6 shown in FIG. 11A according to the kinds of the contents.

The contents data includes two kinds, i.e., the still picture contents data and the moving picture contents data. The receiver 2 divides the contents folder into the still picture contents folder and the moving picture contents folder for the sake of management, and records the corresponding contents data in them.

Next, in the main routine shown in FIG. 6, the information providing process executes the paper-type display medium process (step S2). In the paper-type display medium process, the printing company 118 produces the magazine 120 based on the code-recorded paper-type display medium 119 and the body of the magazine received from the contents providing company 113, and the code-recorded paper-type display medium 119 is provided to the user by selling the magazine 120 in the store 21. The detail will be described with reference to FIG. 14.

First, the contents providing company 113 produces the body of the magazine 120 including the advertisement requested by the advertiser 22 and the articles, and supplies it to the printing company 118 (step S131). The printing company 118 receives the text of the magazine 120 and prints them (step S132).

On the other hand, the code management center 114 notifies the contents code produced in step S11 in FIG. 7 to the printing company 118 (step S133), and the printing company 118 receives the contents code (step S134).

The printing company 118 records the contents code and the data of the paper-type display medium on the paper-type display medium as the invariable code 131 (step 5135). In addition, the printing company 118 records variable information which varies during the use of the paper-type display medium on the paper-type display medium as the variable code 132 (step S136).

Then, the printing company 118 integrates the code-recorded paper-type display medium 119 thus produced with the body printed in step S132 to produce the magazine 120 (step S137). The user obtains the code-recorded paper-type display medium 119 integrated with the magazine 120 by buying the magazine 120 at the store 21 (step S138).

After the contents storing process (step S1) and the paper-type display medium process (step S2), the information providing process executes the display control process (step S3) as shown in FIG. 6. In the display control process, the predetermined contents are displayed on the code-recorded paper-type display medium 119 in the user environment 1, the detail of which will be described below with reference to FIG. 15.

In the user environment 1, the user sets the code-recorded paper-type display medium 119 obtained in step S138 in FIG. 14 to the display control device 4 (step S140). The code reader 12 of the display control device 4 reads the invariable code 131 and the variable code 132 recorded on the code-recorded paper-type display medium 119 (step S141). The information read by the code reader 12 is the data including the contents code and the data of the paper-type display medium for the invariable code 131 as shown in FIG. 13B, and is variable information varying during the use of the paper-type display medium, such as the times-of-use for the variable code 132 as shown in FIG. 13C. The information of the invariable code 131 and the variable code 132 read by the code reader 12 are recorded in the display control device 4.

Next, the identification controller 11 in the display control device 4 checks the contents list 9 in the receiver 2 (step S142). Further, the identification controller 11 extracts the contents code stored in step S141 from the display control device 4, and determines whether there exists a contents code corresponding to the extracted contents code in the contents list 9 (step S143). The contents code recorded in step S141 is the contents code which is read from the invariable code 131 recorded on the code-recorded paper-type display medium 119 that the user obtained. Namely, in step S143, it is determined whether or not the contents code included in the invariable code 131 recorded on the code-recorded paper-type display medium 119 exists in the contents list 9.

If the contents code included in the invariable code 131 recorded on the code-recorded paper-type display medium 119 does not exist in the contents list 9, the display control device 4 displays "RECORDING NOT POSSIBLE" (step S144). On the contrary, if the contents code included in the invariable code 131 recorded on the code-recorded paper-type display medium 119 corresponds to the contents code in the contents list 9, the identification controller 11 displays the contents list 9 corresponding to the contents code on the display 5 (step S145).

The user selects an object to be displayed on the code-recorded paper-type display medium 119 or the display 5, from the contents list 9 (step S146). Specifically, if the content code is "1005A", for example, the part surrounded by the broken line 170 in FIG. 12 is shown on the display 5. The user can determine the contents data to be displayed from the back numbers of "Magazine-A_May". Further, the contents data includes two kinds, i.e., the still picture contents data and the movingpicture contents data. The still picture contents data has such a characteristic that it can be displayed on the code-recorded paper-type display medium 119 and the display 5, but it is still picture. On the other hand, the moving picture contents data has such a characteristic that it can be displayed only on the display 5, but more realistic information than the still picture canbe obtained therefrom because it is moving picture. When selecting the object to be displayed from the contents list 9, the user can select the obj ect to be displayed in consideration of the kind of the contents data. It is noted that the user selects the object to be displayed by the input means such as the remote-controller 3 or the screen touch-panel on the display 5, and the information selected by the user is recognized by the identification controller 11 of the display control device 4 via the controller 8 of the receiver 2.

Then, the identification controller 11 extracts the corresponding contents data from the contents folder in the hard disk 6 in the receiver 2 based on the information selected by the user (step S147). Further, the identification controller 11 displays the contents data thus extracted on the code-recorded paper-type display medium 119 or the display 5 if the contents data is the still picture contents data (step S148). On the contrary, the identification controller 11 displays the contents data on the display 5 if the contents data is the moving picture contents data. Namely, the user can view the moving data on the display 5.

In this embodiment, while the attribute data and the contents data are as shown in FIG. 12, those data can be further subdivided arbitrarily by the contents providing company. Namely, the attribute data and the contents data can be arbitrarily determined by the contents providing company. In addition, while a limited times-of-use or a limited term-of-use is not set in this embodiment, such limit can be set according to the kind of the contents. Further, the code-recorded paper-type display medium integrated with the magazine 120 is not limited to one, but may be plural depending on the kind of the contents.

By the way, in the hard disk 6 in the receiver 2 in the user environment 1, a plurality of contents are stored regardless of whether the user buys the code-recorded paper-type display medium 119 or not. The frequency of erasing and updating the contents are determined by the contents providing company 113 or the broadcasting station 116 in accordance with the capacity of the service directory in the hard disk 6 and/or the detail of the contents. Erasing and updating the information of the contents, i.e., the attribute data and the contents data are reflected to the contents list 9. The frequency of erasing or updating of predetermined contents are notified from the contents providing company 113 or the broadcasting station 116 to the code management center 114 together with the contents data, and the code management center 114 records the frequency of erasing and updating in the management DB 115 based on the contents data.

In this embodiment, the advertiser 22 is an automobile maker, the advertisement of car is appearing on "Magazine-A May", and the "Interior View of Car" is provided to the user as the moving picture contents data. However, not limited to this, various contents data can be provided according to the advertiser 22. For example, if the advertiser 22 is a cosmetics company and the advertisement of cosmetics is shown on a certain magazine, "Daily UV Information" can be provided as the still picture contents data or the moving picture contents data. Namely, the contents providing company produces the daily UV information as the contents data, and provides it to the user environment 1 via the broadcasting station 16. The user can display the daily UV information on the paper-type display medium or on the display 5, based on the code recorded on the code-recorded paper-type display medium integrated with the magazine, at an arbitrary timing when the UV information is wanted.

Also, while the printing company 118 and the code management center 114 are separate entities, they may perform the processes as a single entity.

### (vii) 1st Modification

The layout of the code-recorded paper-type display medium 119 is generally designed by the ruled lines and screens. In this embodiment, the layout is not particularly creative as shown in FIG. 13, the layout may be formed to correspond to the contents to be displayed on the display medium. For example, for the code-recorded paper-type display medium 119 integrated with the magazine 120, its layout may be common to the page of the magazine 120. By this, if the layouts of the magazine 120 and the display medium 119 are common, when the last page of the cartoon serially appearing on the magazine 120 is not printed on the magazine 120 to enhance the added value as information and is readable only on the display medium 119, the information of the last page can be provided to the user as a part of the magazine 120 without strange feeling.

### (viii) 2nd Modification

If the magazine 120 with which the code-recorded paper-type display medium is integrated is issued every month, it is unnecessary for the contents providing company 113 to update the contents related to the magazine 120 by utilizing the storage-type data broadcasting service only once per month. Namely, the contents providing company 113 can produce the contents information at arbitrary time interval and provide to the user via the broadcasting station 16.

Specifically, the contents providing company 113 produces the contents data corresponding to the contents information everyday and supplies it to the broadcasting station 16. The contents data has date information. The broadcasting station 16 receives new contents data from the contents providing company 113 everyday, and provides the new contents data to the user environment 1 by utilizing the storage-type data broadcasting service. In the user environment 1, the receiver 2 receives the new contents data via the antenna 10 everyday. Then, the controller 8 in the receiver 2 records the contents data thus received under the contents folder of the hard disk 6 shown in FIG. 11A in a manner classified by the kind and the date of the contents.

By this, the user can obtain the contents such as the advertisement updated everyday, from the magazine published every month. Namely, even for the contents related to the magazine 120, the updating frequency can be increased, and therefore the added value of the contents information can be enhanced compared with the method using the conventional foldout. Thus, the purchase of the magazine by the user can be promoted.

As described above, according to this embodiment, the user can display and watch the information related to the magazine on the paper-type display medium or the display as the contents by the storage-type data broadcasting service. By this, unlike the conventional foldout, the value of the information is not lost by unfair behavior such as the stand-up reading or tearing the foldout by the user. Further, the updating frequency of the contents related to the magazine can be increased compared with the frequency of publishing the magazine, the added value of the information provided as the contents can be more enhanced than the conventional method of using the foldout. Therefore, the will of purchasing the magazine can be promoted.

Also, in the case of moving picture contents data included in the contents, the user can view the moving picture on the display based on the contents code in the code-recorded paper-type display medium, and hence the user can get more realistic and accurate information than the advertisement or articles of the paper magazine. Therefore, the moving picture contents data can enhance the will of the user purchasing the magazine as the information of added value.

In the above embodiment, the advertiser requests the contents providing company to put the advertisement on the magazine and pays the fee to the contents providing company in consideration thereof. The contents providing company can provide the code-recorded paper-type display medium, by not selling it by itself, but selling the magazine with which the display medium is integrated. Namely, the user does not have to buy the paper-type display medium by itself, and can get the paper-type display medium in a form of the appendix, i.e., without the need of payment. Therefore, the paper-type display medium can be broadly spread to the users with ease.

Further, since the paper-type display medium is rewritable and can be reused to display free contents if the usable life is not exceeded, the effective use of the resources can be achieved in consideration of environmental issue.

As described above, according to the present invention, by utilizing the storage-type data broadcasting service and a part of the magazine as the means for providing information to the user, the information providing system can be achieved taking account of the reduction of cost, the prevention of unfair measure to the information by the user, provision of accurate information and environmental issue.

### [3rd Embodiment]

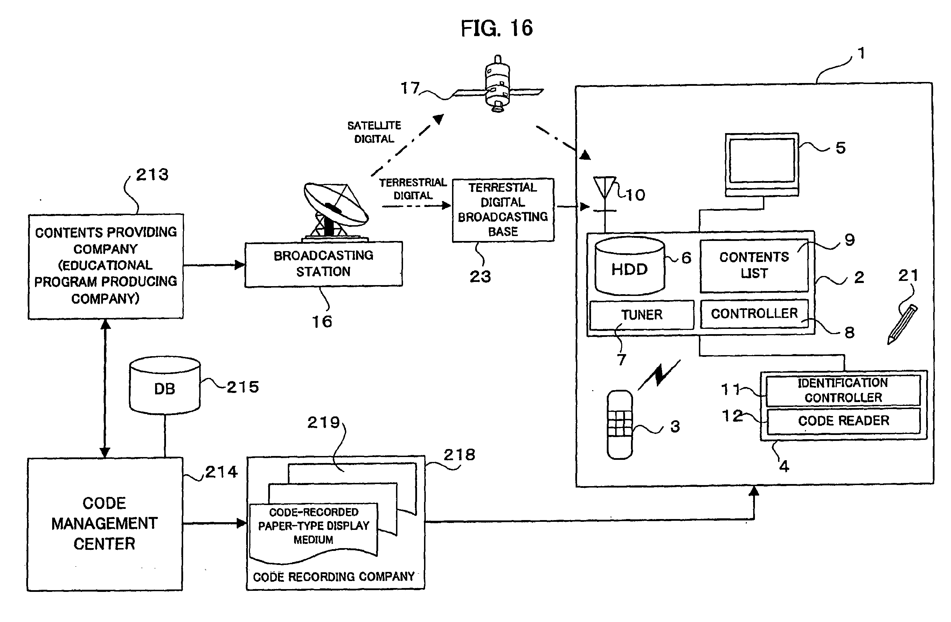

(i) FIG. 16 shows a schematic configuration of the information providing system according to the third embodiment of the invention. In FIG. 16, the information providing system includes a user environment 1, a contents providing company 213, a code management center 214, a broadcasting station 16, an artificial satellite 17, a terrestrial digital broadcasting base 23 and a code recording company 218.

The contents providing company 213 is a company which produces educational programs, and supplies them to the broadcasting station 16. The educational program is a language learning program for English or French, for example. In order to provide the user with the language learning textbook for predetermined language learning program by utilizing the storage-type data broadcasting program, the contents providing company 213 produces data broadcasting contents corresponding to the information of the language learning textbook and supplies them to the broadcasting station 16.

The code management center 214 receives the attribute data included in the contents corresponding to the information of the language learning textbook from the contents providing company 213, and produces the contents code which is identification information of the contents based on the attribute data. The contents code is supplied to the broadcasting station 16 via the contents providing company 213. The contents code is also notified to the code recording company 218. The code management center 214 stores the attribute data received from the contents providing company 213 and the contents code produced by itself in the management DB 215 as a pair.

The code recording company 218 records the contents code notified by the code management center 214 on the paper-type display medium. Further, the code recording company 218 puts the code-recorded paper-type displaymedia 219 on the distribution route so as to be sold to the users. For example, the code-recorded paper-type display medium 219 may be put on sale in a bookstore or a convenience store.

On the other hand, the broadcasting station 16 provides the contents including the attribute data, the contents data and the and the contents code supplied from the contents providing company 213 to the user environment 1 via the artificial satellite 17 or the terrestrial digital broadcasting base 23 by utilizing the storage-type data broadcasting service. Also, the broadcasting station 16 provides the language learning programs supplied from the contents providing company 213 to the user environment 1 as the data broadcasting programs.

In the user environment 1, the user can receive digital broadcasting for performing the storage-type data broadcasting service provided via the artificial satellite 17 and the terrestrial digital broadcasting base 23 from the broadcasting station 16, by the receiver 2, and can view and watch the data broadcasting program and/or the contents on the display 5. The receiver 2 records and stores the broadcasting programs and the contents received.

Also, the user buys the code-recorded paper-type display medium 219 which is produced by the code recording company 218 and is put on sale in the bookstores and the convenience stores. Then, the user can display the contents corresponding to the contents code recorded on the code-recorded paper-type display medium 219 on the code-recorded paper-type display medium 219 by using the display control device 4 in the user environment 1. The user can select the information to be displayed on the code-recorded paper-type display medium 219 from the contents, the details of which will be described later.

Since the user environment 1 is the same as that in the first embodiment, the description will be omitted. However, the storage-type data broadcasting programs in the third embodiment are the language learning programs, for example, and are periodically stored in the service area. In this embodiment, the hard disk 6 is not limited to the above configuration, and the position at which certain broadcasting programs and the contents are recorded and stored can be arbitrarily determined in the hard disk having a user area, a service area and other areas.

The contents are the information of the language learning textbook to be supplied to the user, and are stored in the service area of the hard disk 6, although the detail of which will be described later. Specifically, the user selects the information of the language learning textbook to be provided to the user by this invention by using the remote-controller 3 or the touch-panel on the display 5.

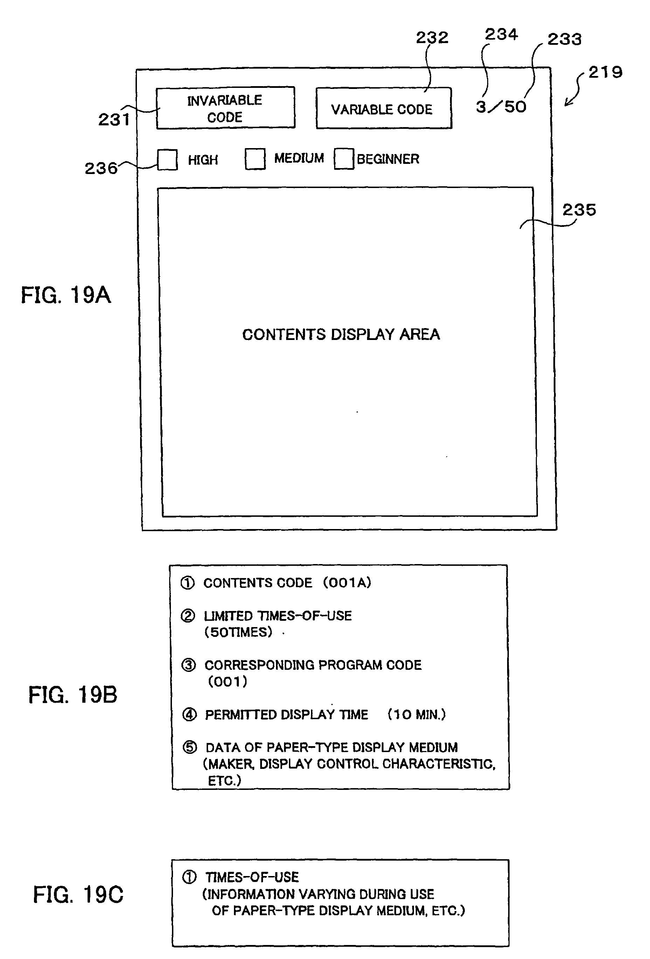

Further, in the third embodiment, the user environment 1 includes a recording device 21. The recording device 21 is used when the user selects the check box formed on the code-recorded paper-type display medium 219 and puts the check mark therein. As shown in FIG. 19A, the check box 236 is a part on which the user puts and records the mark, when the user selects the level of the contents to be displayed on the code-recorded paper-type display medium 219 and sets it as the arbitrary information of the user. The recording device 21 has a function based on the characteristics of the code-recorded paper-type display medium 219, and can put the mark in the check box 236. For example, if the code-recorded paper-type display medium is the leuco reversible heat-sensitive recording system, the recording device 21 has a function of thermal processing. The mark recorded by the recording device 21 can be erased by the display control device 4, and the user can put the mark on the code-recorded paper-type display medium 219 again.

### (ii) Contents

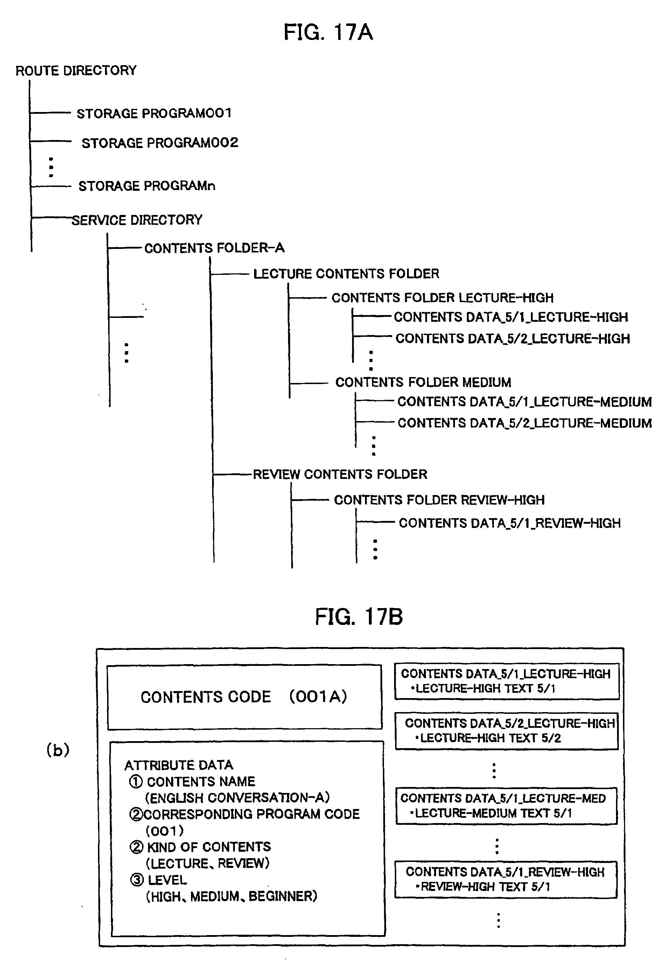

FIG. 17A shows the recording position of the contents folder. The contents are the information provided to the user by utilizing the storage-type data broadcasting service, and the information provided as the contents includes the contents code, the attribute data and the contents data. The contents code is an identification information uniquely assigned to predetermined contents. The contents code is produced by the code management center 214 based on the attribute data of the contents, and is included in the invariable code recorded on the code-recorded paper-type display medium, although the detail of which will be described later. In this embodiment, the contents are provided to the user as the edited digital data which can be displayed on the paper-type display medium.

The contents folder is a folder which records the information of the contents in the hard disk 6 after the receiver 2 in the user environment 1 receives the contents from the broadcasting station 16.

The storage-type data broadcasting service stores the data broadcasting programs and/or the contents in the service area of the hard disk 6 provided in the receiver 2. Inside of the service area of the hard disk 6 has the hierarchical structure as shown in FIG. 17A, and a plurality of storage programs are recorded under the route directory. The language learning programs supplied from the contents providing company 213 to the broadcasting station 16 are stored in the service area. The storage program has a program code, which is unique identification information.

At the same hierarchical level as the plurality of storage programs, there is a service directory for recording appendant data, e.g., still pictures of the contents, other than moving pictures. When the user wants to arbitrarily record the contents and/or the programs, they are recorded in the user area of the hard disk 6.

The service directory further has the hierarchical structure, and a plurality of contents folders, including the contents folder-A, are recorded under the service directory. The description will be given of a case of the contents corresponding to the information of language learning textbook. As shown in FIG. 17A, the contents folder further has a hierarchical structure, and the lecture contents folder and the review contents folder are recorded under the contents folder. The contents folder name may be arbitrarily set to the contents code, for example. For example, when the contents code of the contents corresponding to the information of the language learning textbook is "001A", the name of the contents folder-A may be determined as "001A".

The contents corresponding to the information of the language learning textbook is referred to, together with the corresponding language learning program. When the user is watching the language learning program in the user environment 1, the contents to be displayed on the code-recorded paper-type display medium 219 is the lecture contents data. On the contrary, when the user is not watching the language learning program in the user environment 1, the contents to be displayed on the code-recorded paper-type display medium 219 is the review contents data. By this, since the text to be referred to during the user is watching the language learning program is different from the textbook to be referred to after watching the language learning program, and they are appropriately produced for thosepurposes, the user can perform effective learning.

Since the users watching the same language learning program may have different knowledge levels, the contents having the information of the language learning textbook includes three texts, i.e., for high-grade, medium-grade and beginner-grade. Therefore, the lecture contents folder and the review contents folder further have the hierarchical structures, and three contents folders for the high-grade, the medium-grade and the beginner-grade are recorded under each contents folder. For example, under the lecture contents folder, the high-grade lecture contents folder, the medium-grade lecture contents folder and the beginner-grade lecture contents folder are recorded. Under the review contents folder, the high-grade review contents folder, the medium-grade review contents folder and the beginner-grade review contents folder are recorded.

The contents folder, e.g. the high-grade lecture contents folder, further has the hierarchical structure, and a plurality of contents data are recorded under the respective contents folders, together with the date information. For example, if the language learning program is broadcasted everyday and the user belongs to the high-grade, the contents data corresponding to the language learning textbook of May 1 are recorded under the contents folder as the contents data_5/1_high-grade-lecture and the contents data_5/1_high-grade-review.

In this way, the contents having the information of the language learning textbook includes a plurality of contents data based on the kind of contents indicating the lecture contents or the review contents, the level of the user and the date. Therefore, as shown in FIG. 17A, by further providing the hierarchical structure under the contents folder-A, the management of the plurality of contents data can be facilitated.

FIG. 17B shows the information of the contents recorded in the contents folder-A. The information of the contents recorded in the contents folder-A is the information of English textbook corresponding to the English conversation program in this embodiment.

The contents include the attribute data, a plurality of contents data and the contents code. The attribute data and the contents data are produced by the contents providing company 213, and the contents code is produced by the code management center 214. The attribute data includes the contents name, the corresponding program code, the kind of contents and the level. The contents name is a general name of the contents, which is "English Conversation-A" because the information of the contents is the information of the English textbook corresponding to the English conversation program in this embodiment.

The corresponding program code is a program code of the programwhich the user watches during the use of the contents. Namely, the corresponding program code is an identification information of the program which is watched during the use of the contents. In this embodiment, since the information of the contents is the English conversation program, the program code "001", which is the identification information of the English conversation program, is the corresponding program code. It is noted that the contents code which is the identification information of the contents does not necessarily have a one-to-one correspondence with the corresponding program code. For example, a plurality of corresponding program codes can be set to single contents, and vice versa.

The kind of contents is information subdividing the contents depending upon whether the contents data included in the contents is the lecture contents data or the review contents data. By this, when the user selects the contents data to be displayed on the code-recorded paper-type display medium 219, the display control device 4 can extract the contents data selected based on the kind of contents, and hence the process can be rapidly executed.

The level is the knowledge level of the user who refers to the language learning textbook by utilizing the contents, and three levels, including the high-grade, the medium-grade and the beginner-grade are set. The information of the English textbook is produced based on the respective levels. For example, as to the beginner-grade, the English words used in the English conversation program are all listed and Japanese translation is completely attached, for example. On the other hand, as to the high-grade, only the dif f icult words used in the program and a synonym and/or an antonym are listed. In this way, the user can use different textbook according to his or her level, effective learning can be performed. Since the display control device 4 can extract the contents data selected based on the level when the user selects the contents data to be displayed on the code-recorded paper-type display medium 219, the process can be rapidly executed.

The contents code is identification information of the contents produced by the code management center 214 based on the attribute data notified by the contents providing company 113. In this embodiment, the contents code recorded in the contents folder-A is "001A".

The contents data is information based on the contents of the English textbook, and includes the kind of contents, the level and the date. Namely, the "contents data_5/1_high-grade-lecture" is an English textbook for May 1, which the user refers to during watching the English conversation program, and is the information for the user of the high-grade. For example, if the English conversation program is broadcasted everyday, the contents providing company 213 produces new contents data everyday according to the progress of the program, and new contents data are recorded in the contents folder-A via the broadcasting station 16 everyday. Therefore, for the sake of management, the contents data are classified and recorded based on the kind of contents, the level and the date under the contents folder-A in the hard disk 6, as shown in FIG. 11A.

At the time of providing the contents to the user by utilizing the storage-type data broadcasting service, the broadcasting station 16 can, at the same time, attach the information of the recording position of the contents folder for recording the contents information. By this, predetermined contents information is automatically recorded at the recording position desired by the contents providing company 213. The contents information and information of the recording position are coded in order to prevent the alteration by the user, and cannot be decoded by the user.

Aplurality of contents supplied from a plurality of contents providing companies via the broadcasting station 16 are recorded under the service directory of the hard disk 6 in the receiver 2 by utilizing the storage-type data broadcasting service, regardless of whether the user buys the code-recorded paper-type display medium 219 or not. Namely, the English conversation program in this embodiment is stored everyday, for example, from the contents providing company 213 via the broadcasting station 16.

### (iii) Contents List

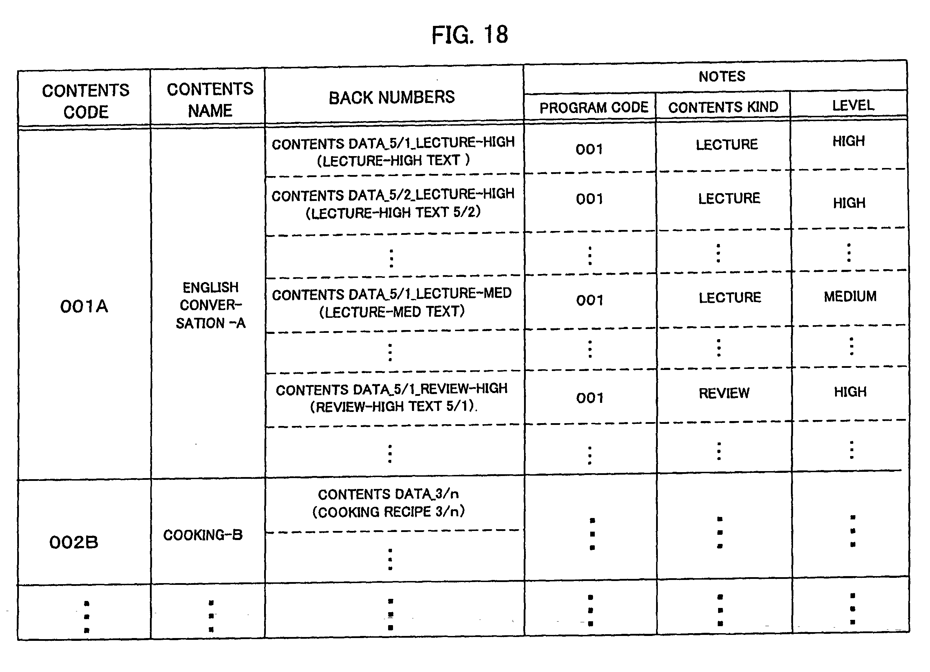

As shown in FIG. 18A, the contents 1 ist 9 includes the contents code, the contents name, the back number and notes. The contents list 9 is a list of the contents stored, and is recorded under the service directory of the hard disk 6 as the list for the sake of management.

The contents code is identification information of the contents. When the contents are stored in the contents folder under the service directory of the hard disk 6 by utilizing the storage-type data broadcasting service, the contents code is recorded as the information of the contents as shown in FIG. 17B. The contents code is produced by the code management center 214 based on the attribute information, and the contents are uniquely specified by the contents code.

Therefore, the contents list 9 includes the contents name, the back number and the notes based on the information of the contents stored in the contents folder under the service directory of the hard disk 6, with using the contents code as the key. The "back number" is all of a plurality of contents data corresponding to a predetermined contents code. The "notes" are obtained by further subdividing the information based on the attribute data corresponding to a predetermined contents code. Specifically, in this embodiment, the back numbers are the textbooks of the English conversation and are a plurality of contents data subdivided based on the kind of contents, the level and the date, as shown in FIG. 18. The notes include the corresponding program code, the kind of contents and the level, and are recorded based on the attribute data. The contents list 9 is updated by utilizing the storage-type data broadcasting service, every time when the attribute data, the contents data or the contents code, which are the contents, is updated.

### (iv) Paper-type Display Medium

FIG.19A shows the configuration of the code-recorded paper-type display medium 219. The code-recorded paper-type display medium 219 is a paper-type display medium on which invariable code 231 and variable code 232 described later are recorded, and is put on the distribution system by the code recording company 18 and sold to the user by bookstores or convenience stores. The paper-type display medium is a display medium which is thin like a paper, has a flexibility of a certain degree and is repeatedly rewritable, including the ones generally called as "electric paper" or "digital paper".

"Rewitable" means that the contents once displayed can be erased and new information can be displayed by applying heat processing to the paper-type display medium, in a case of leuco reversible heat-sensitive recording system. Specifically, after displaying the high-grade English conversation textbook of May 1 based on the contents data_5/1_high-grade-lecture, the high-grade English conversation textbook of May 2 can be displayed based on the contents data_5/2_high-grade-lecture. In this case, the English conversation text of May 1 never remains on the display medium. Since the paper-type display medium is sustainable for the rewriting of about 500 times in the case of leuco reversible heat-sensitive recording system, the resources can be effectively used, although the displayed information cannot be retained. As the paper-type display medium, various display medium including a display device of leuco reversible heat-sensitive recording system, high polymer dispersion type liquid crystal, chiral nematic liquid crystal or electrophoresis system, can be used.

As shown in FIG. 19A, the code-recorded paper-type display medium 219 has the invariable code 231, the variable code 232, the limited times-of-use 233, the times-of-use 234, the check boxes 236 and the contents display area 235.

The invariable code 231 is invariable information which never varies even if the paper-type display medium is repeatedly rewritten. FIG. 19B shows the information that the invariable code 231 includes. The invariable code 231 includes the contents code, the limited times-of-use, permitted display time and data of the paper-type display medium, and is recorded on the paper-type display medium by the code recording company 218.

The contents code is identification information which the code management center 214 produces based on the attribute data notified by the content providing company 213. The code recording company 218 receives the notification of the contents data from the code management center 214, the detail of which will be described later. The contents code for the English textbook in this embodiment is "001A". The paper-type display medium can display only the contents corresponding to the contents code included in the invariable code 231 recorded thereon, except for free contents.

The limited times-of-use 233 is the number of times for which the contents corresponding to the contents code included in the invariable code 231 recorded on the paper-type display medium can be displayed. If the user can display the contents for unlimited times, the collection of fee becomes complicated. Therefore, a certain limited times-of-use is set. If the limited times-of-use is exceeded, the paper-type display medium cannot display that contents, but can display the free contents. Namely, the limited times-of-use is not related to the usable number of times of the paper-type display medium. Thus, the code-recorded paper-type display medium 219 can be reused as a display medium for displaying the free contents, within the usable number of times, if it becomes unable to display the contents corresponding to the contents code included in the invariable code 231.

The limited times-of-use 233 may be set by the contents providing company 213, or may alternatively be set by the code recording company 218 or the broadcasting station 16 and notified to the code recording company 218.

The corresponding program code is the identification information of the broadcasting program in the case that the user uses the contents together with predetermined data broadcasting program. In this embodiment, since the information of the English textbook corresponding to the English conversation program is provided to the user as the contents, the corresponding program code is "001" which is the program code of the English conversation program.

The permitted display time is the time information indicating the time period, determined according to the progress of the program, in which the contents data selected by the user can be displayed on the code-recorded paper-type display medium 219 when the user is watching the program corresponding to the contents. For example, if the contents providing company 213 is providing the English conversation program of 15 minutes and the initial 8 minutes of the program is the English conversation of native speakers, the permitted display time should be set to 10 minutes from the start, so as to enable the user to perform hearing until the conversation ends, without referring to anything. By this, since the user cannot display the English textbook on the code-recorded paper-type display medium 219 at user's arbitrary timing, the user can be provided with an effective exercise by the contents providing company 213. Since the review contents data is displayed on the code-recorded paper-type display medium 219 while the user is not watching the program, it can be displayed regardless of the permitted display time.

The data of the paper-type display medium included in the invariable code is information of the paper-type display medium itself, such as a maker or display control characteristic that become necessary when the contents are displayed on the paper-type display medium. Specifically, when a certain paper-type display medium performs display by the heat-sensitive coloring, the set temperatures of thermal heads are included in the invariable code 231.

The variable code 232 is variable information that may vary during the use of the paper-type display medium, and includes the times-of-use which varies according to the operation by the user, as shown in FIG. 19C. The variable code 232 is recorded on the paper-type display medium by the code recording company 218. The times-of-use is the number of times for which the user displayed the contents corresponding to the contents code included in the invariable code 231 on the code-recorded paper-type display medium 219. Namely, the number of times for displaying the free contents on the code-recorded paper-type display medium 219 is not included, and the times-of-use increases as the contents corresponding to the contents code included in the invariable code 231 is displayed. Namely, the number of times of displaying free contents on the code-recorded paper-type display medium is not included, and the times-of-use increases if the contents corresponding to the contents code included in the invariable code 231 are displayed.

The limited times-of-use 233 displayed on the code-recorded paper-type display medium is the limited times-of-use included in the invariable code 231, and the times-of-use 234 is the times-of-use included in the variable code 232. In this embodiment, the limited times-of-use is "50", for example. The invariable code 231 and the variable code 232 are coded in order to prevent the alteration by the user, and hence cannot be decoded by the user. Therefore, they are displayed on the paper-type display medium so that the user can visually recognize the limited times-of-use 233 and the times-of-use 234. The times-of-use varies according to the time of use included in the variable code 232.

The check box 236 is a part where the mark is written and recorded when the user selects the level of the contents to be displayed on the code-recorded paper-type display medium 219, thereby to set it as the user' s arbitrary information. The recording device 21 has a function based on the characteristics of the code-recorded paper-type display medium 219, and can record the mark in the check box 236.

The contents display area 235 is an area where the contents are displayed, namely, the area where contents corresponding to the contents code included in the invariable code 231 or the free contents are displayed.

For recording the invariable code 231 or the variable code 232, various methods can be used, for example, barcodes or two-dimensional codes may be recorded on the paper-type display medium, or RFID may be incorporated in the paper-type display medium.

### (v) Recording Codes

The recording of the invariable code 231 and the variable code 232 are similar to those of the first embodiment, and hence the description will be omitted. In this embodiment, when referring to FIG. 5, the invariable code 31 should be replaced with the invariable code 231 and the variable code 32 should be replaced with the variable code 232.

### (vi) Information Providing Process

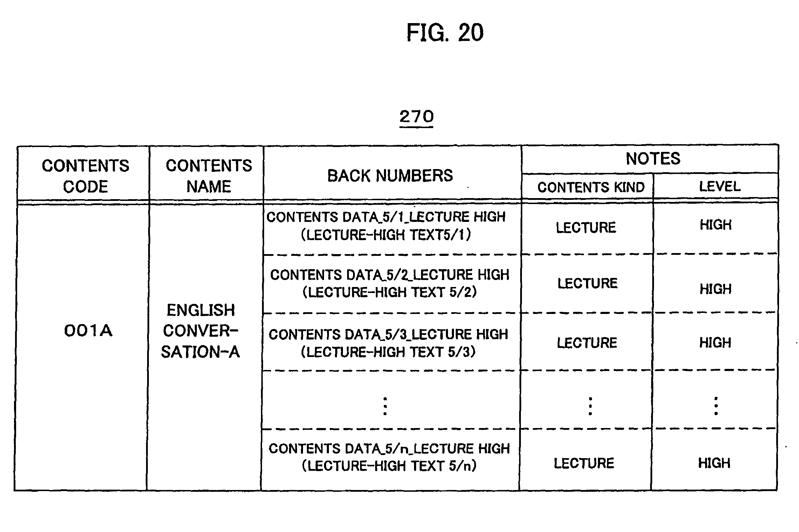

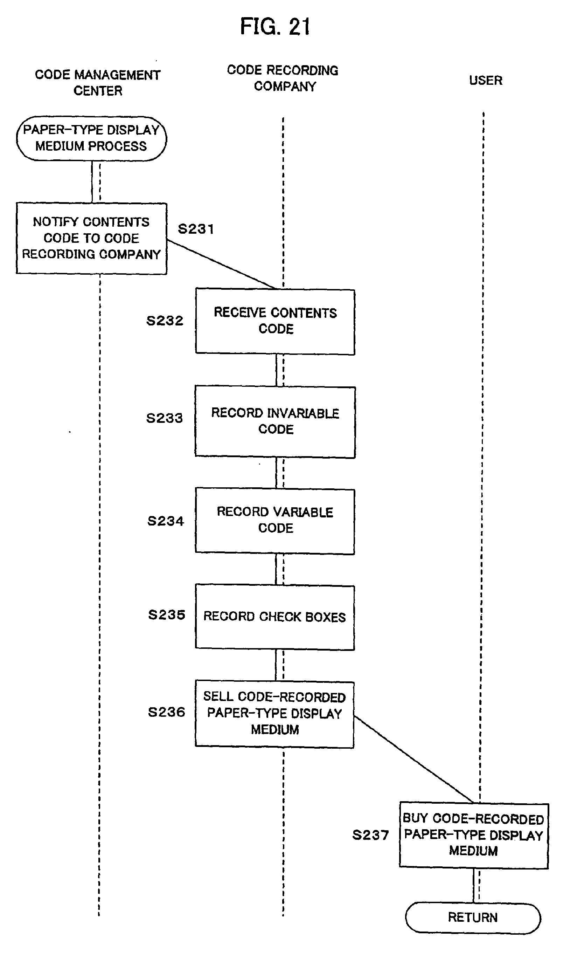

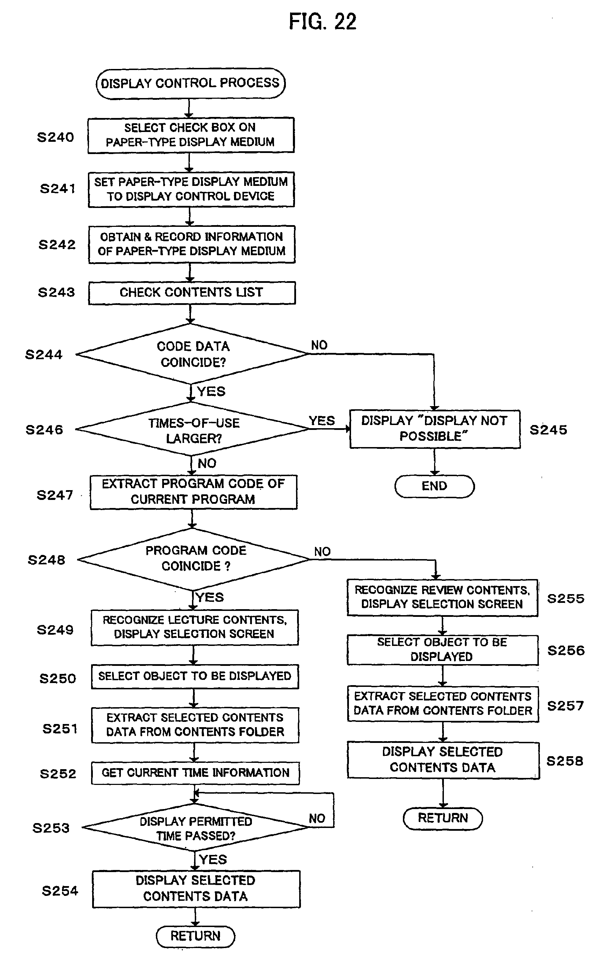

Next, the information providing process by utilizing the information providing system shown in FIG. 16 will be described with reference to FIGS. 6, 7, 20 to 22. FIG. 20 is a display screen when the user selects the obj ect to be displayed, which is displayed on the display 5 in the user environment 1 based on the contents list shown in FIG. 18. FIG. 6 is a main routine of the information providing process, and FIG. 7 is a subroutine of the contents storing process in FIG. 6. FIG. 21 is a subroutine of the paper-type display medium process in FIG. 6, and FIG. 22 is a subroutine of the display control process in FIG. 6.

Since the contents storing process shown in FIGS. 6 and 7 is similar to that in the first embodiment, the description of which will be omitted.

It is noted that, while the contents are the newspaper articles in the first embodiment, the contents are the information of the English textbook corresponding to the English conversation programs broadcasted everyday in this embodiment. Therefore, the contents data is produced by the contents providing company 213 everyday, and is supplied to the broadcasting station 16 everyday. In step S21, the controller 8 in the receiver 2 records the received contents data under the contents folder in the hard disk 6 shown in FIG. 17 according to the kinds of the contents, the level and the date. The English conversation programs are supplied from the contents providing company 213 to the broadcasting station 16 everyday, and is provided to the user environment 1 by utilizing the storage-type data broadcasting service. In the user environment 1, the controller 8 in the receiver 2 records the received program in the service area of the hard disk 6 shown in FIG. 17A as the storage program "001".

Next, in the main routine shown in FIG. 6, the information providing process executes the paper-type display medium process (step S2). In the paper-type display medium process, the code management center 214 produces and notifies the contents code to the code recording company 218, the code recording company 218 records the information of the contents code and the limited times-of-use as the invariable code 231 and the variable code 232 on the paper-type display medium, and the display medium is sold to the user as the code-recorded paper-type display medium. The detail will be described with reference to FIG. 21.

First, the code management center 214 notifies the contents code produced in step S11 in FIG. 7 to the code recording company 218 (step S231), and the code recording company 218 receives the contents code (step S232).

The code recording company 218 records the contents code, the limited times-of-use, the corresponding program code, the permitted display time and the data of the paper-type display medium on the paper-type display medium as the invariable code 231 (step S233). In addition, the code recording company 218 records variable information which varies during the use of the paper-type display medium on the paper-type display medium as the variable code 232 (step S234). Further, the code recording company 218 records the check boxes 236 for setting the arbitrary information such as the level of the user (step S235).

Then, the code recording company 218 sells the code-recorded paper-type display medium 219 (step S236), and the user buys the code-recorded paper-type display medium 219 at a bookstore or a convenience store (step S237).

After the contents storing process (step S1) and the paper-type display medium process (step S2), the information providing process executes the display control process (step S3) as shown in FIG. 6. In the display control process, the predetermined contents are displayed on the code-recorded paper-type display medium 219 in the user environment 1, the detail of which will be described below with reference to FIG. 22.

In the user environment 1, the user selects the check box 236 on the code-recorded paper-type display medium 219 obtained in step S237 in FIG. 21, and makes the mark by using the recording device 21 (step S240). For example, when the user belongs to the high-grade level in the knowledge of English, selects the check box 236 of "HIGH" on the code-recorded paper-type display medium 219 to make the mark:

Then, the user sets the code-recorded paper-type display medium 219, on which the check box 236 is selected and marked, to the display control device 4 (step S241). The code reader 12 of the display control device 4 reads the invariable code 231, the variable code 232 and the check box 236 recorded on the code-recorded paper-type display medium 219 and obtains the information (step S242). The information read by the code reader 12 is the data including the contents code, the limited times-of-use, the corresponding program code, the permitted display time and the data of the paper-type display medium for the invariable code 231 as shown in FIG. 19B, and is variable information varying during the use of the paper-type display medium, such as the times-of-use for the variable code 232 as shown in FIG. 19C. The check box 236 shows the user's knowledge level in English, and is "HIGH" in this embodiment. The information of the invariable code 231 and the variable code 232 read by the code reader 12 are recorded in the display control device 4.

Next, the identification controller 11 in the display control device 4 checks the contents list 9 in the receiver 2 (step S243). Further, the identification controller 11 extracts the contents code stored in step S242 from the display control device 4, and determines whether there exists a contents code corresponding to the extracted contents code in the contents list 9 (step S244). The contents code recorded in step S242 is the contents code which is read from the invariable code 231 recorded on the code-recorded paper-type display medium 219 that the user obtained. Namely, in step S244, it is determined whether or not the contents code included in the invariable code 231 recorded on the code-recorded paper-type display medium 219 exists in the contents list 9.

If the contents code included in the invariable code 231 recorded on the code-recorded paper-type display medium 219 does not exist in the contents list 9, the display control device 4 displays "DISPLAY NOT POSSIBLE" (step S245). On the contrary, if the contents code included in the invariable code 231 recorded on the code-recorded paper-type display medium 219 corresponds to the contents code in the contents list 9, the limited times-of-use included in the invariable code 231 recorded in step S241 and the times-of-use included in the variable code 232 are extracted from the display control device 4 and are compared with each other (step S246).

If the times-of-use is equal to or larger than the limited times-of-use, the display controller 4 displays "DISPLAY NOT POSSIBLE" (step S24S). On the contrary, if the times-of-use is smaller than the limited times-of-use, the identification controller 11 extracts the program code of the broadcasting program which the user is currently watching, based on the information obtained from the controller 8 of the receiver 2 (step S247). Then, the identification controller 11 determines whether the extracted program code coincide with the corresponding program code included in the invariable code 231 recorded on the code-recorded paper-type display medium 219 or not (step S248).

First, description will be given of the case that the extracted program code coincides with the corresponding program code. The identification controller 11 recognizes that the contents to be displayed on the code-recorded paper-type display medium are the lecture contents. Then, the identification controller 11 extracts the back number whose kind of contents is lecture and whose level is high-grade, from the contents list, based on the information of the contents data and the check box 236 obtained in step S242. Thereafter, the identification controller 11 displays the information of the back number on the display 5 as the screen 270 with which the user can selects the object to be displayed, as shown in FIG. 20 (step S249).

As shown in FIG. 20, the user selects one obj ect as the obj ect to be displayed on the code-recorded paper-type display medium 219 from the screen 270 shown on the display 5 (step S250). For example, based on the screen 270, the user can selects the English textbook of a certain day from the back numbers of the contents having the contents code "001A" and the contents name "English conversation-A". It is noted that the user selects the object to be displayed by the input means such as the remote-controller 3 or the screen touch-panel on the display 5, and the information selected by the user is recognizedby the identification controller 11 of the display control device 4 via the controller 8 of the receiver 2.

Then, the identification controller 11 extracts the corresponding contents data from the contents folder-A in the hard disk 6 in the receiver 2 based on the information selected by the user (step S251). Further, the identification controller 11 obtains the elapsed time, from its start, of the program which the user is currently watching, as the time information, from controller 8 in the receiver 2 (step S252). Then, the identification controller 11 compares the time information thus obtained, with the permitted display time included in the invariable code 231 obtained in step S242 (step S253). If the user's watching time of the program is smaller than the permitted display time, the identification controller 11 repeats steps S252 to S253. On the contrary, if the user' s watching time of the program exceeds the permitted display time, the identification controller 11 displays the contents data selected by the user on the code-recorded paper-type display medium 219 (step S254). Thus, the user can confirm the information of the selected contents on the paper-type display medium. In addition, within the limited times-of-use, the information of the contents can be repeatedly displayed on the display medium.

Next, the description will be given of the case that the extracted program code does not coincide with the corresponding program code. The identification controller 11 recognizes that the contents to be displayed on the code-recorded paper-type display medium are the review contents. Then, the identification controller 11 extracts the back numbers whose kind of contents is review and whose level is high-grade, from the contents list 9, based on the information of the contents data and the check box 236 obtained in step S242. Thereafter, the identification controller 11 displays the information of the back number on the display 5 as the screen 270 so that the user can select of the object to be displayed (step S255).

The user selects one object as the object to be displayed on the code-recorded paper-type display medium 219 from the screen 270 shown on the display 5 (step S256). Then, the identification controller 11 extracts the corresponding contents data from the contents folder-A in the hard disk 6 in the receiver 2 based on the information selected by the user (step S257). Thereafter, the identification controller displays the contents data selected by the user on the code-recorded paper-type display medium 219 (step S258). Thus, the user can confirm the information of the selected contents on the paper-type display medium. In addition, within the limited times-of-use, the information of the contents can be repeatedly displayed on the display medium.

The display control process can be realized by executing a program for this process installed in the display control device 4, in advance, or can be realized by script process in the BML which is a description language of the contents normally used in the storage-type data broadcasting service.

When the contents data selected by the user is displayed on the code-recorded paper-type display medium 219 in steps S254 or S258, the identification controller 11 ends the display control process, and returns to the main routine shown in FIG. 6. Then, the identification controller 11 ends the information providing process as shown in FIG. 6. While the limited times-of-use is set as the limitation of use of the code-recorded paper-type display medium 219 in this embodiment, a time period can be arbitrarily set in place of the times.

By the way, in the hard disk 6 in the receiver 2 in the user environment 1, a plurality of contents are stored regardless of whether the user buys the code-recorded paper-type display medium 219 or not. Therefore, regardless of whether or not the user buys the code-recorded paper-type display medium 219 for displaying the contents corresponding to the English textbook, the English conversation programs are recorded in the service area of the hard disk 6.

The frequency of erasing and updating the contents are determined by the contents providing company 213 or the broadcasting station 16 in accordance with the capacity of the service directory in the hard disk 6 and/or the detail of the contents. Erasing and updating the information of the contents, i.e., the attribute data and the contents data are reflected to the contents list 9. The frequency of erasing or updating of predetermined contents are notified from the contents providing company 213 or the broadcasting station 16 to the code management center 214 together with the contents data, and the code management center 214 records the frequency of erasing and updating in the management DB 215 based on the contents data.

In this embodiment, predetermined data broadcasting programs and the contents are provided to the user environment via the artificial satellite or the terrestrial digital broadcasting base as the broadcasting waves. However, the invention is not limited to this, and the predetermined broadcasting programs or the contents may be provided by the broadcasting via CATV (Community Antenna TV) using the communication cable medium or via the Internet.

Also, while the contents providing company 213 and the broadcasting station 16 are separate entities, they may perform the processes as a single entity.

This embodiment is directed to the example in which the language learning textbook corresponding to the language learning program is provided to the user as the contents, the application of the invention is not limited to the educational program including language learning program, and the invention is applicable to any contents corresponding to the data broadcasting program.

### (vii) 1st Modification

In the above embodiment, while one permitted display time is set to single contents, plural permitted display time may be set to single contents. Specifically, in the case of English conversation program of 15 minutes provided by the contents providing company 213, the permitted display times may be set such that the English sentences are displayed after 5 minutes from the start of the program, the English grammar is displayed after 8 minutes from the start of the program, and Japanese translation is displayed after 10 minutes from the start of the program, on the code-recorded paper-type display medium, according to the progress of the program. Namely the display of the contents data can be controlled for each unitof information corresponding to one page of the English textbook.

By this, the English textbook can be displayed, not at the user's the arbitrary timing, but at the arbitrary timing intended by the contents providing company 213, and the English text can be provided to the user at most effective timing to learn English. In addition, since plural permitted display times can be set for single contents, the permitted display time can be precisely set in accordance with the progress of the English conversation program.

### (viii) 2nd Modification

In the above embodiment, the time to provide the contents to the user is controlledby using the permitted display time recorded, in advance, in the invariable code of the code-recorded paper-type display medium 219. However, similar control can be done by using trigger information which can be provided as the data broadcasting. The trigger information is an interrupting signal which is included in the data provided to the receiver 2 in the user environment 1 and which indicates the display permission timing. As the trigger information, the event message transmitted by the broadcasting station can be used.

As the method that the user views program corresponding to predetermined contents, there is a method of viewing the program by reproducing the storage programs already stored in the service area of the hard disk 6 in the receiver 2, or a method of viewing the program by receiving the corresponding program provided from the contents providing company 213 via the broadcasting station 16 on the real-time basis by the antenna 10.

According to the method of viewing the corresponding program on the real-time basis, the receiver 2 can receive the trigger information during receiving the program. For example, when the user is viewing the English conversation program of 15 minutes, the broadcasting station 16 provides the trigger information indicating the display permission timings so as to display, on the code-recorded paper-type display medium 219, the English sentences after 5 minutes, the grammar after 8 minutes and the Japanese trans lation after 10 minutes, accordingtotheprogressoftheprogram. The controller 8 in the receiver 2 provides the display permission to the display control device 4 based on the trigger information, and the identification controller 11 displays the contents data on the paper-type display medium. By this, unlike the method of recording permitted display time in the invariable codes in advance, the display control device 4 does not have to compare the user's watching time with the permitted display time, and hence the burden on the display control device 4 can be reduced.

As a method of setting the permitted display time, various other method, e.g., incorporating the trigger information in the contents in advance, are conceivable. Namely, the trigger information is incorporated in the contents in advance, and the contents are broadcasted. In this case, if the user does not view thebroadcastingprogramonthe real-time basis, but views the English conversation program by reproducing the data stored in the hard disk 6 in the receiver 2, the display permission control of the English textbook can be similarly performed because the trigger information is included in the contents of the English conversation program.

As described above, in this embodiment, the user can display contents whose contents code corresponds to the contents code recorded on the code-recorded display medium, on the display medium, by buying the code-recorded paper-type display medium and by utilizing the storage-type data broadcasting service. For example, in the case that the information of the English textbook corresponding to the English conversation program is provided to the user as the contents by utilizing the storage-type data broadcasting service, the user does not have to go to the bookstore to buy the English textbook every month, and can obtain the contents of the English textbook freely according to the progress of the program, within the range of the times-of-use or usable time period, once the user buys the paper-type display medium. Therefore, the burden on the user can be reduced. Further, since the contents providing company does not have to produce the English textbook by using the printing company every month, the cost can be remarkably reduced.

Further, the code-recorded paper-type display medium is rewritable, and information of English textbook updated everyday can be displayedby one display medium for more than one year. Namely, it is possible to avoid that textbooks become garbage. In addition, while the limited times-of-use is set to the display medium for the pay contents corresponding to the English textbook, the display paper can be reused, even if the limited times-of-use is exceeded, to display free contents within the usable times of the medium itself, and hence the effective use of resources can be achieved in view of environmental issue.

In this embodiment, a plurality of user's arbitrary information can be set to single contents. Specifically, in the case of the English textbook corresponding to the English conversation program, the contents providing company sets the arbitrary information of plural levels, e.g., the high-grade, the medium-grade and the beginner-grade, and produces the contents data corresponding to those arbitrary information. Namely, even for the English textbook corresponding to the same English program, its contents can be dynamically changed according to the knowledge level. Therefore, the user can select the contents data corresponding to the knowledge level of himself within the single contents and can display it on the code-recorded paper-type display medium.

The selection, by the user, of the arbitrary information for the information of the contents to be displayed on the paper-type display medium is performed by making the mark in the check box on the code-recorded paper-type displaymediumby using the recording device. For example, when the English textbook corresponding to the English program is provided as the contents, the user can select the information of the contents corresponding to the knowledge level of himself to be displayed on the paper-type display medium, by making the mark in the check box based on the English knowledge level of himself. The mark recorded by the recording device is erasable, and the user can set the arbitrary information repeatedly. Therefore, the user can raise the level in accordance with the improvement of the English knowledge, for example, and hence can perform effective learning.

Further, the contents data to be displayed on the paper-type displaymediummaybe limited for single contents, with the condition whether or not the user is watching the program corresponding to the contents. For example, when the user displays the contents data of the contents of the English textbook corresponding to the English conversation program on the code-recorded paper-type display medium, if the user is watching the program, the lecture contents data is displayed. On the contrary, if the user is not watching the program, the review contents data is displayed. By this, the contents providing company can put a certain limitation to the display of the contents data by the user. Namely, plural contents data included in the contents can be displayed by the user in a most effective situation that the contents providing company thinks. Thus, by displaying the lecture contents data and the review contents data on the code-recorded paper-type display medium based on the control by the contents providing company, the user can effectively perform learning.

Further, in this embodiment, the permitted display time can be set. By this, the contents data included in the contents can be displayed on the paper-type display medium, not at the arbitrary timing of the user, but at the arbitrary timing of the contents providing company. Therefore, the contents can be provided to the user at the most effective timing determinedby the contents providing company. Also, since plural permitted display times can be set for single contents, the permitted display times can be precisely set in accordance with the program corresponding to the contents. For example, when the English textbook is provided to the user as the contents, the English textbook can be displayed on the code-recorded paper-type display medium, during the viewing by the user, at the most effective timing that the contents providing company thinks, and hence the user can perform effective learning.

As described above, according to this embodiment, by utilizing the storage-type data broadcasting service to provide information of the textbook to the user, the reduction of the cost and the burden of the user, the effective use of the textbook and the consideration of the environmental issue can be achieved.

### [4th Embodiment]

### (i) Schematic Configuration of Information Providing System

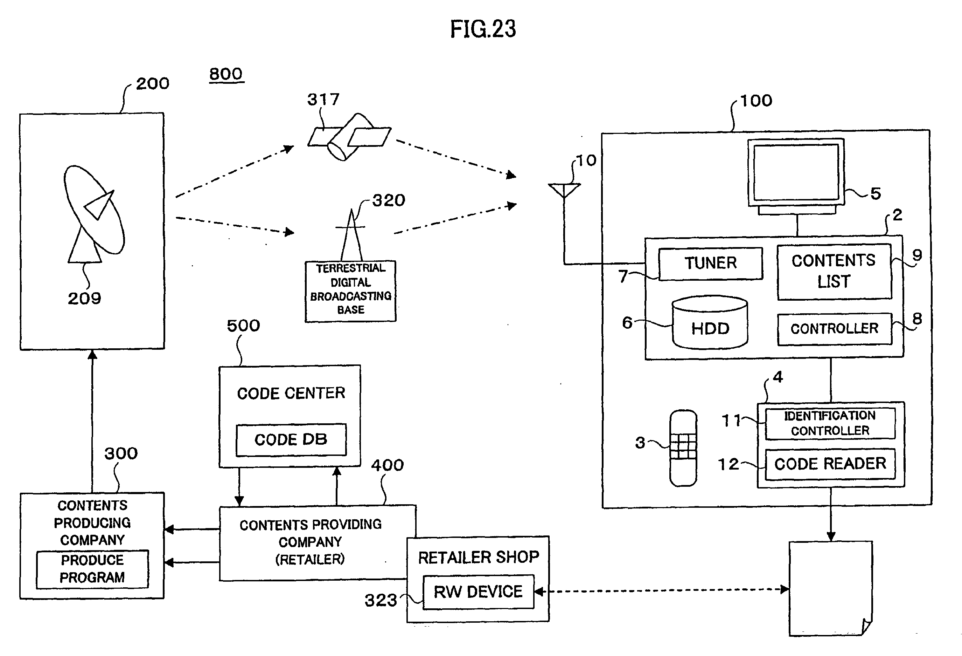

FIG. 23 shows a schematic configuration of the information providing system 800 (hereinafter referred to as "system 800") according to this embodiment of the invention. In FIG. 23, the system 800 includes a user environment 100, a broadcasting station 200, a contents producing company 300, a code center 500, a relay satellite 317, a terrestrial digital broadcasting base 320 and a contents providing company 400. The information providing system 800 utilizes the digital broadcasting service as a distributing means of leaflet information.

The contents providing company 400 is a retailer having some shops in this embodiment. The contents producing company 300 receives information of items to be printed on the leaflet from the retailer 400, edits the information to produce storage program of digital broadcasting, and supplies them to the broadcasting station 200.

The broadcasting station 200 broadcasts the programs produced by the contents producing company 300 as the storage program of digital broadcasting. The broadcasting waves are received by the antenna 10 installed in the viewer's household via the relay satellite 317 when the digital broadcasting service is the BS or CS broadcasting service and via the terrestrial digital broadcasting base 320 when the digital broadcasting service is the terrestrial digital broadcasting service.

The user environment 100 includes a receiver 2, a remote-controller 3, a display control device 4 and a display 5. Since the system 800 utilizes the digital broadcasting service as the distributing means of the leaflet information, the user environment 100 is the environment of the receiving and reproducing equipment installed in each viewer's house.

The receiver 2 has the antenna 10, and includes a hard disk 6, a tuner 7, a controller 8 and a contents list 9 inside, and the remote-controller 3 is attached. The antenna 10 receives the broadcasting waves transmitted from the relay satellite 317 or the terrestrial digital broadcasting base320. The user can arbitrarily operate the receiver 2 by the remote-controller 3 or a screen touch-panel on the display 5. The receiver 2 also has a contents selecting and editing means.

The recording space in the hard disk 6 is physically divided and managed by a user area and a service area. The user area is an area which the user, who is a viewer of the digital broadcasting, can arbitrarily use for recording the broadcasting programs and the like. On the other hand, the service area is a storage space used to automatically store the storage programs without the relation to the user's intention. In this embodiment, the sales item information of the retailer is periodically stored in the service area.

The tuner 7 receives the digital broadcasting waves for performing the storage-type digital broadcasting service, and outputs the video and audio signals in a normal situation or when the storage program is reproduced. The controller 8 includes a CPU, and controls the receiver 2 in its entirety. Also, the controller 8 receives the request from the identification controller 11 in the display control device 4, refers to the contents list 9 or the contents of the hard disk 6 to return the recorded contents to the display control device 4 as the response.

The code center 500 uniquely assigns the contents codes to the storage contents provided by the contents providing companies, according to the request by the contents providing companies. The assigned codes are recorded in the code database managed by the code center 500. The contents code are necessary for the identification controller 11 in the display control device 4 to achieve a system to select desired contents from the contents provided by various contents providing companies by referring to the contents list 9.

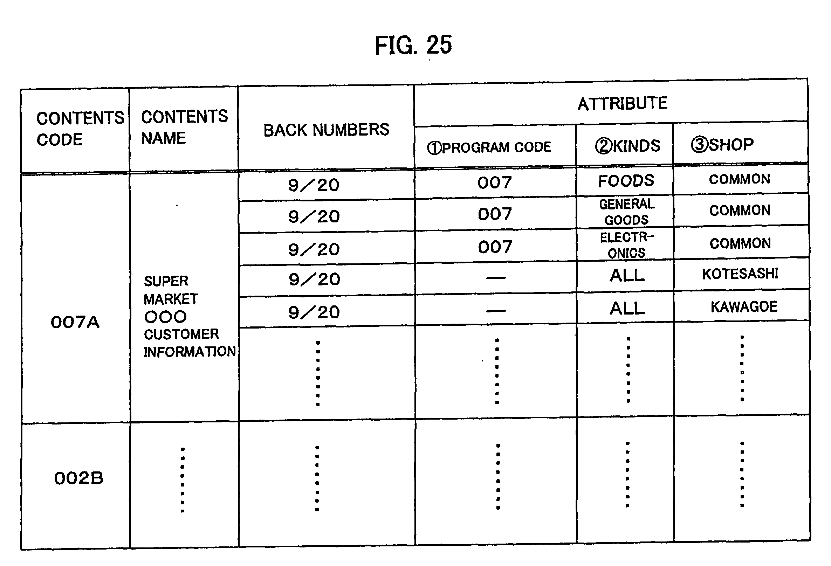

As shown in FIG. 25, the contents list 9 includes the contents codes, the contents names and the back numbers, and stores the information (of the contents) of the programs stored in the service area of the hard disk 6 as a list.

The display control device 4 includes the identification controller 11 and the code reader 12. The identification controller 11 is constituted by a CPU mainly having the microprocessor, and controls the operation of the display control device 4. The code reader 12 reads the contents code and the shop code, which are identification information recordedon the code-recordedpaper-type display medium 319. The shop code will be described later. Namely, the display control device 4 first reads the identification information recorded on the code-recorded paper-type display medium 319 by the code reader 12, and the identification controller 11 controls the display control device 4 based on the identification information. The display control device 4 refers to the contents list 9 under the control by the identification controller 11, and then extracts the contents corresponding to the contents code recorded on the code-recorded paper-type display medium 319 from the hard disk 6. Actually, those operations are performed in a manner that the identification controller 11 sends a request message to the controller 8 of the receiver 2 and the controller 8 returns the result of the access to the contents list 9 and/or hard disk 6 to the identification controller 11 in response to the request. Apparently, the display control device 4 operates as if it directly calls out the contents stored in the receiver 2.

### (ii) Contents

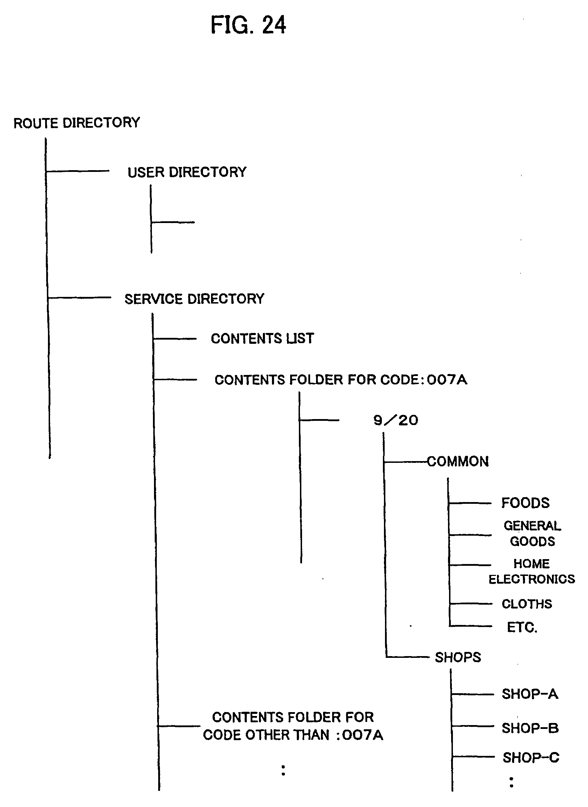

FIG. 24 schematically shows the directory structure of the hard disk 6. FIG. 24 shows how the storage programs are recorded under the service directory (uppermost directory in the service are). The storage program contents, to which the contents codes are assigned, form the folders immediately under the service directory for each code. The folder in this hierarchical level is called "contents folder". The corresponding storage programs, including the back numbers, are recorded in each folder. The contents code is included in the invariable codes recorded on the code-recorded paper-type display medium, the detail of which will be described later. It is noted that "program" or "storage program" has the almost same meaning as "contents" in this embodiment. The former is a term used in a broadcasting service or broadcasting technique, and the latter means information of value for the receiver.

The broadcasting station 200 attaches the information designating the recording position of the contents as the data, according to the request by the contents providing company 400, when broadcasting the storage programs. The data includes information corresponding to the contents code, of course, and the contents broadcasted as the storage program are automatically recorded in predetermined folders in accordance with the data. Other storage programs having contents code other than "007A" are broadcasted with the information designating the recording position of the contents, and are stored in predetermined folders under the service directory of the hard disk 6. At that time, if the service directory becomes full, old contents are erased and the new space thus created is assigned to the recording space of new contents.

### (iii) Contents List

FIG. 25 shows the contents list 9. The contents list 9 includes the contents codes, the contents names, the back numbers and the attributes. The contents list 9 stores the contents stored under the service directory of the hard disk 6 as a list, for the sake of management.

### (iv) Paper-type Display Medium

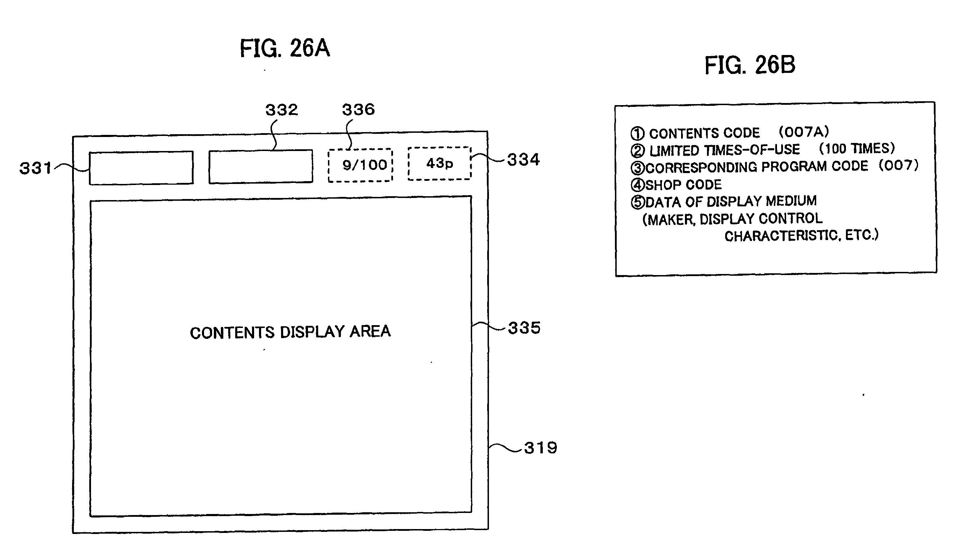

FIG. 26A shows the appearance of the code-recorded paper-type display medium 319. The code-recorded paper-type display medium 319 is a paper-type display medium on which invariable codes 331 and variable codes 332 described later are recorded. The code-recorded paper-type display medium 319 includes the invariable codes 331, the variable codes 332, the point number display area 334 and the contents display area 335. In this embodiment, the retailer, which is the contents providing company 400, records the invariable codes 331 and the variable codes 332, and lends the display medium to a customer. The paper-type display medium is a display medium which is thin like a paper, has a flexibility of a certain degree and is repeatedly rewritable, including the ones generally called as "electric paper" or "digital paper".

"Rewitable" means that the contents once displayed can be erased and new information can be displayed by applying heat processing to the paper-type display medium, in a case of leuco reversible heat-sensitive recording system. Since the paper-type display medium is sustainable for the rewriting of about 500 times in the case of leuco reversible heat-sensitive recording system, the resource can be effectively used by reusing it, although the article cannot be retained. As the paper-type display medium, various display medium including a display device of leuco reversible heat-sensitive recording system, high polymer dispersion type liquid crystal, chiral nematic liquid crystal or electrophoresis system, can be used.

The invariable code 331 is invariable information which never varies even if the paper-type displaymedium is repeatedly rewritten. In this embodiment, as shown in FIG. 26B, the contents code "007A", the upper limitof times-of-use (e.g., 100 times), the corresponding program code "007", the shop code and the data of the medium (maker, display control characteristics, etc.) are recorded as the invariable codes 331.

The variable codes 332 are variable information which varies during the use of the paper-type display medium. The times-of-use of the paper-type display medium is a part of the variable code 332. The areas 334 and 336 in FIG. 26A are areas in which the variable information readable by the user is recorded. A part of the information recorded on the variable codes 332 may be displayed in the areas 334 and 336 in a manner readable by a human being. The contents display area 335 is an area where the contents are displayed.

The information recorded as the invariable code 331 must be information readable by a mechanism. Therefore, the invariable code 331 may be a barcode or a two-dimensional code having fixed information contents, for example. The invariable code 331 may be realized by incorporating RFID storing fixed information in a displaymedium. Similarly, the information recordedas the variable code 332 must be readable by a mechanism. Therefore, the variable code 332 may be realized by printing the contents of the variable information as a barcode or a two-dimensional code in a rewritable area like the contents display area 335, or may be realized by recording the variable information in an RFID embedded in a display medium.

### (v) Recording Code

The recording of the invariable code 331 and the variable code 332 are similar to those of the first embodiment, and hence the description will be omitted. In this embodiment, when referring to FIG. 5, the invariable code 31 should be replaced with the invariable code 331 and the variable code 32 should be replaced with the variable code 332.

### (vi) Information Providing Process

The schematic configuration of the system 800, the contents, the contents list, the paper-type display medium and the recording of the code on the medium are described above. Next, the information providing process using the system 800 will be described below along with the flow of the processes, in an order of the process of the content storing, the process of producing and distributing medium and the process of using the medium.

### (vii) Storing Contents

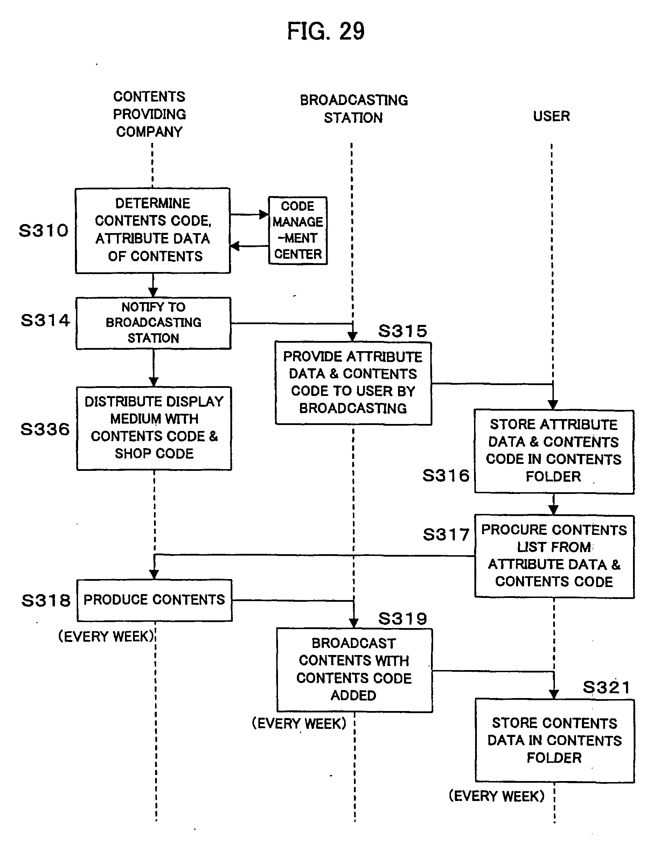

FIG. 29 is a flowchart showing the contents storing process of this system. The flow of the contents storing process will be described below with reference to FIG. 29.

First, the contents providing company 400 requests the contents codes for the contents to be provided to the code management center 500. The code management center 500 assigns the cods which is not identical to the codes already issued, registers those codes in the code management database and notifies them to the contents providing company 400. Thus, the contents codes are determined (step S310). The contents providing company 400 notifies the contents codes and the contents of the attribute items to the broadcasting station (step S314). The broadcasting station 200 broadcasts the contents code and the attribute data received from the contents providing company 400 by a special storage program notify those information to the receiver 2 (step S315).

In the user environment 100, the receiver 2 receives the special storage program. The controller 8 in the receiver 2 records the contents code and the attribute data attached to the received program in a new folder immediately under the service directory in the harddisk shown in FIG. 24 (step S316). Further, the controller 8 produces the contents list 9 shown in FIG. 25 based on the contents code and the attribute data, and records the contents code and the contents name (step S317). In summary, the special storage program performs necessary setting so that the identification controller 11 can correctly extract the storage contents of the contents code "007A" when the code-recorded paper-type display medium having the code "007A" is inserted in the display control device 4. The setting may be realized such that the data of the special storage program including BML script is broadcasted and the controller 8 interprets the script.

On the other hand, the contents providing company, i.e., the retailer 400 prepares the paper-type display medium on which the invariable code 331 and the variable code 332 are recorded, and distributes them to the customer in the shops (step S336). The invariable code 331 includes the contents code and the shop code. The variable code 332 includes the times-of-use (initial value is zero) and an initial value of the obtained point number.

The contents producing company 300 receives necessary instruction and necessary data supply from the contents providing company 400 to produce the contents data, and supplies it to the broadcasting station 200 (step S318). In this embodiment, the contents data is produced at the same time interval as the frequency of producing the foldout leaflet in the newspaper, e.g., every Friday, and is supplied to the broadcasting station.

The broadcasting station adds necessary data such as the contents code to the received contents data to prepare the format as the storage program, and broadcasts it (step S319). In the user environment 100, the controller in the receiver 2 stores the received contents data in the folder of the corresponding contents code (step S321).

In FIG. 29, the steps S310 to S317 should be executed once. Namely, it is an initial setting process. The steps S318, S319, S321 are the routine work which are repeated every time (e.g. every week).

### (viii) Media Producing and Distributing Process

This is the process of the above step S336.

### (ix) Using code-recorded paper-type display medium

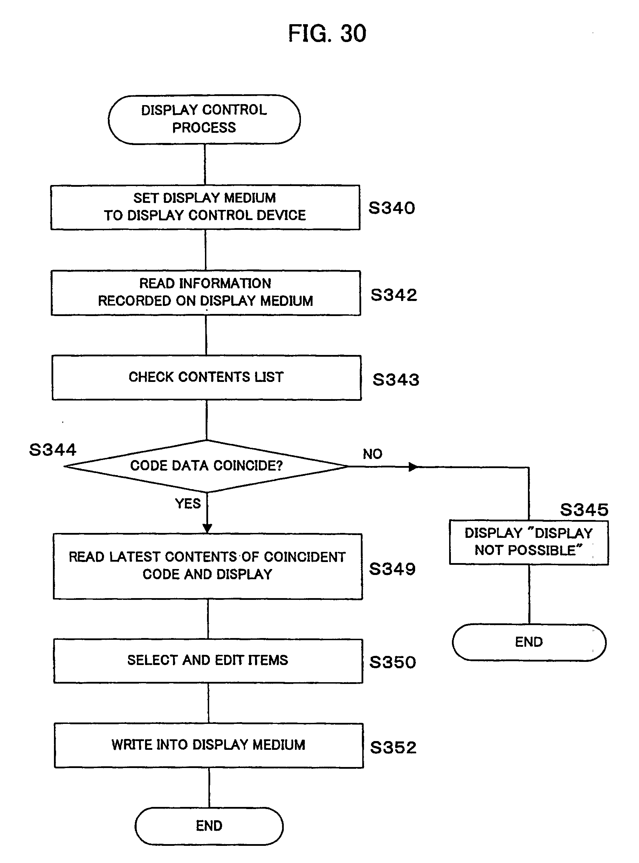

FIG. 30 is a flow chart showing the flow at the time of using the medium. The user sets the medium 319 to the display control device 4 (steps 340). The code reader 12 in the display control device 4 reads out the invariable code 331 and the variable code 332 recorded on the medium 319 (steps 342). The read information (contents code and shop code) are attached to the request message of the display control process and are sent to the controller 8 in the receiver 2.

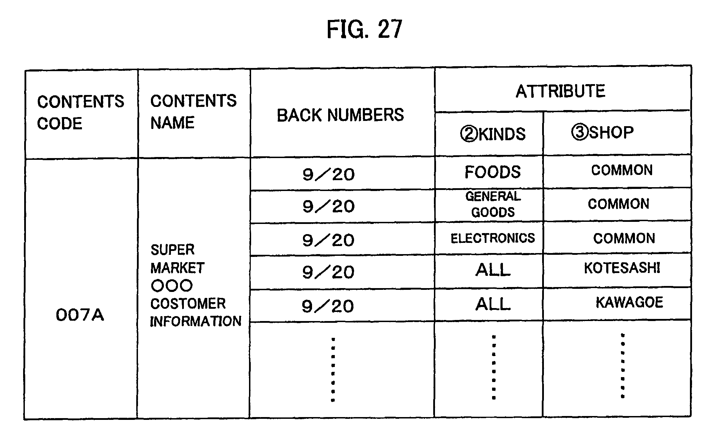

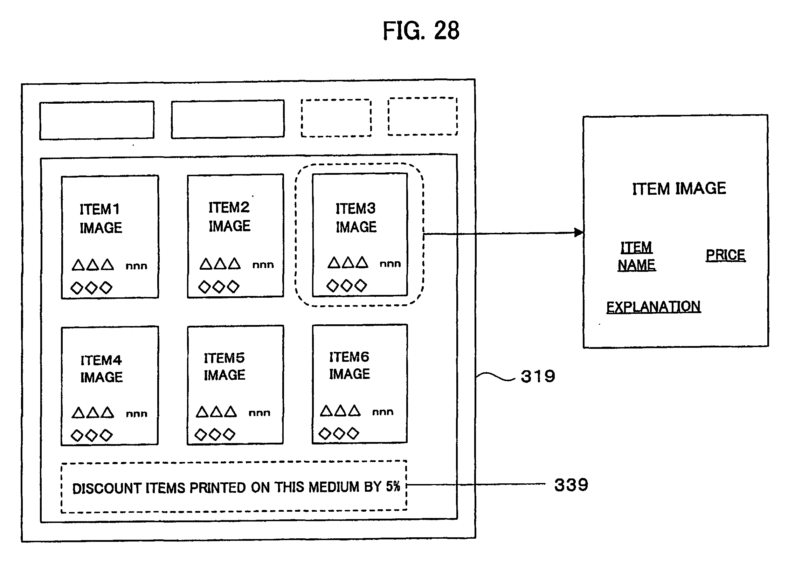

Next, the controller 8 of the receiver 2 reads out the contents list 9, and checks whether or not the contents code corresponds to the contents code recorded on the medium 319 exists (step S344). If the record of the corresponding contents code does not exist on the contents list, the display control device 4 displays "DISPLAY NOT POSSIBLE" on the display 5 (step S345), and answer to the identification controller 11 in the display controller 11 so. On the contrary, if the corresponding contents code exists, the controller 8 extracts only the information corresponding to the shop code from the contents data stored in the contents folder corresponding to the contents code, by using the contents code and the received shop code as the key, and displays it on the display 5 (step S349). For example, the list as shown in FIG. 27 is produced and displayed. Thereafter, an item selecting and editing program, which operates as the contents selecting and editing means, for selecting and editing is activated to become the status of waiting for the user's input to the remote-controller (step S350). The useroperates the remote-controller to select item from the TVmonitor screen. Depending on the specification of the item selecting and editing program, the editing function to change the size so that the selected items are displayed within one screen may be employed. When the user performs the operation indicating the end of the selecting and editing, the item selecting and editingprogram returns the selected item data and the layout data to the identification controller 11 of the display control device 4. The identification controller 11 displays (records) the item information displayed on the TV monitor based on those data on the medium 319 in that form (step S352). FIG. 28 is an image of the medium 319 on which the item information is displayed and recorded in that way. An example that six items are selected and edited as one screen picture is shown.

The user can collect only the item information that he or she needs on one display medium as shown in FIG. 28, and can go to the shop. Thus, the function similar to the foldout leaflet in the newspaper can be provided in an easily usable way.

The item selecting and editing program may be included in the storage program data as BML script every time and stored in the receiver 2.

The retailer 400 can promote the use of the display medium by the customer by making a part or all of the item displayed on the display medium, on which item information is displayed and recorded, as a discount coupon ticket. This consequently promotes the visit to the shop. FIG. 28 is an image of the paper-type display medium on which item information is displayed and recorded in such a case. The area 339 indicates that the part can be used as a coupon ticket. Actually, it is necessary that the printed contents of the item subjected to the coupon include a code which can be mechanically readable and which specifies the item, such as JAN code.

Also, the display medium itself, on which the invariable code 331 and the variable code 332 are recorded, may be used as a point card. The contents of the variable code 332 can include the accumulated obtained point. In each shop of the retailer 400, a reader-writer device 323 can be prepared. The reader-writer device 323 may have a reading head and a printing head similar to the reader-writer for a rewrite card using the heat-sensitive color former such as leuco-dye.

In this way, by using the code-recorded paper-type display medium 319 as a coupon ticket or as a point card, the use of the display medium 319 is promoted. The consumer can feel convenient, and consequently the consumption of paper resource caused by producing and distributing the foldout leaflet or by printing the leaflet information provided via the Internet on a paper can be suppressed.

As specifically described, by using the information providing system of the invention, the code-recorded paper-type display medium can be repeatedly used to be circulated between the customer and the retailer shop, in stead of the conventional foldout leaflet. Thus, the printing on a paper for only one use can be avoided, and a shopping memo can be easily produced with selecting information of only necessary items. In addition, by using the TV broadcasting service, the system can be easily used, in comparison with the information providing system by the Internet.

### [5th Embodiment]

### (i) Schematic Configuration of Information Providing System

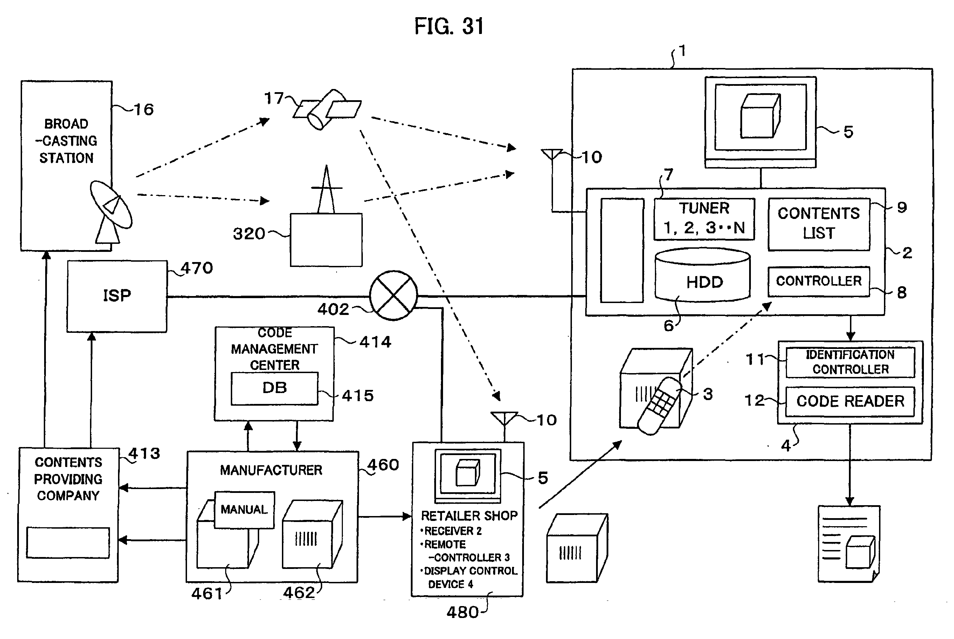

FIG. 31 shows a schematic configuration of the information providing system according to the fifth embodiment of the invention. In FIG. 31, the information providing system includes a user environment 1, a broadcasting station 16, an artificial satellite 17, a terrestrial digital broadcasting base 320, a network 402, an Internet Service Provider (ISP) 470, a contents providing company 413, a code management center 414, a manufacturer 460 and a retailer shop 480.

The contents providing company 413 processes information of an instruction manual of products manufactured by the manufacturer 460, latest information of how to enjoy the product, information of recommended forthcomingproduct, version-up information, linkage information of information home electronics and maintenance information (hereinafter referred to as "related information of handling explanation") to be transmitted, and supplies them to the manufacturer 460. The contents providing company 413 produces contents corresponding to the related information of handling explanation in order to provide the related information of handling explanation to the user via the storage-type broadcasting service, and supplies them to the broadcasting station 16 and the ISP 470.

The code management center 414 receives the attribute data included in the contents, which is the related information of handling explanation, from the contents providing company 413, and produces the contents code serving as identification information based on the attribute data. The contents code is supplied to the broadcasting station 16 and the ISP 470 via the contents providing company 413. The contents code is also notified to the manufacturer 460. The code management center 414 stores the attribute information received from the contents providing company 413 and the contents code produced by itself in the management DB 415 as a pair.

The manufacturer 460 manufactures items or products 461 which the user generally gets and buys. Specifically, the items includes home electronics products, articles for daily use, cosmetics, toys, foods, furniture, business equipments and cars. The manufacturer 460 records the contents code notified by the code management center 414 on the display medium to produce the code-recorded paper-type display medium. Also, the manufacturer 460 produces the instruction manual based on the information of the instruction manual supplied from the contents providing company 413. At that time, the manufacturer 460 integrates the code-recorded paper-type display medium with the instruction manual. Here, "integrating" is to insert the code-recorded paper-type display device in the instruction manual so that it can be cut off, for example. Then, the manufacturer 460 supplies the manufactured item 461 and the produced instruction manual to the retailer shop 480 to be put on the distribution system.

The retailer shop 480 is a shop which puts the items in the shop and sells them to the user. Normally, the instruction manual is attached to the item 461 and is sold to the user. The retailer shop 480 includes a receiver 2, a display control device 4, a remote-controller 3, a display 5 and antenna 10, similarly to the user environment 1, the detail of which will be described later.

The broadcasting station 16 provides the contents, including the attribute data, the contents data and the contents code supplied from the contents producing company 413, to the user environment 1 and the retailer shop 480 via the artificial satellite 17 or the terrestrial digital broadcasting base 320, by utilizing the storage-type data broadcasting service.

The ISP 470 stores all of the contents supplied from the contents providing company 413 with using the contents code as a key. The ISP 470 transmits the contents data of predetermined contents requested by the receiver 2 in the user environment 1 and the retailer shop 480 via the network 402. Generally, the contents that is provided by the broadcasting station 16 and stored in the hard disk 6 in the receiver 2 has a certain time period, although the detail of which will be described later. This is because the contents stored in the hard disk 6 is not limited to the contents of the related information of handling explanation, and specifically there may be a case that only the latest version of the related information of handling explanation is stored. Therefore, if the user requests the contents data of the related information of handling explanation older than the latest version, the receiver 2 obtains that contents data from the ISP 470.

The user environment 1 and the retailer shop 480'can receive the digital broadcasting for the storage-type data broadcasting service from the broadcasting station by the receiver 2, and can view and watch the contents on the display 5. The receiver 2 records and stores the received contents.

The user buys the item 461 produced by the manufacturer 460 and put on sale by the retailer shop 480, and obtains the instruction manual at the same time. Then, the user can display the contents, corresponding to the contents code recorded on the code-recorded paper-type display medium integrated with the instruction manual, on the code-recorded paper-type display medium it self or on the display 5 by the display control device 4 in the user environment 1.

The user environment 1 is the same as that in the first embodiment, and hence the description will be omitted. Also, the contents, the contents list, the paper-type display medium and the code recording are almost the same as those in the second embodiment, and hence the description will be omitted.

However, in the fifth embodiment, the contents are a part of the information related to the handling explanation of the item 461 and has two kinds, i.e., still picture contents data and moving picture contents data. While the back numbers are stored in the contents list, the contents data for the handling explanation other than the latest version maybe stored in the ISP 470 in this embodiment.

### (ii) Information Providing Process

Next, the information providing process utilizing the information providing system shown in FIG. 31 will be described. The information providing process includes contents storing process, code recording process and display control process.

First, the contents storing process will be described. In the contents storing process, the contents providing company 413 produces the attribute data based on the related information of handling explanation with respect to the item 461 for the contents, and notifies it to the code management center 414. The code management center 414 receives the attribute data, and produces the contents code, which is identification information of the contents, based on the attribute data. Further, the code management center 414 associates the contents code to the attribute data as the key, and stores them in the management DB 415. The code management center 414 notifies the contents code thus produced to the contents providing company 413.

The contents providing company 413 receives the contents code from the code management center 414. Then, the contents providing company 413 supplies attribute data and the contents code to the broadcasting station 16 and the ISP 470. The broadcasting station 16 provide the attribute data and the contents code received from the contents providing company to the user environment 1 and the retailer shop 480 via the artificial satellite 17 and the terrestrial digital broadcasting base 320, by utilizing the storage-type data broadcasting service.

In the user environment 1 and the retailer shop 480 (hereinafter referred to as "user environment 1 and other"), the receiver 2 receives the broadcasting waves including the attribute data and the contents code. Then, the controller 8 in the receiver 2 records the attribute data and the contents code in the received broadcasting waves in the contents folder in the hard disk 6. Further, the controller 8 produces the contents list 9 based on the attribute data and the contents code, and records the contents code and the contents name.

On the other hand, the contents providing company 413 produces the contents data based on the related information of handling explanation with respect to the item 461 for the contents, and supplies it to the broadcasting station 16 and the ISP 470. The broadcasting station 16 receivers the contents data from the contents providing company 413, and provides the contents data to the user environment 1 and other by utilizing the storage-type data broadcasting service. In the user environment 1 and other, the controller 8 records the received contents data, according to the kind of contents, in the predetermined contents folder in the hard disk 6.

Next, the code recording process will be described. In the code recording process, first, the contents providing company 413 supplies the related information of handling explanation to the manufacturer 460. 'The code management center 414 notifies the produced contents code to the manufacturer 460, and the manufacturer 460 receives the contents code.

The manufacturer 460 records the contents code and the data of the paper-type display medium on the paper-type display medium as the invariable code. Further, the manufacturer 460 records the variable information which varies during the use of the paper-type display medium on the paper-type display medium as the variable code. Thus, the code-recorded paper-type display medium is produced.

Then, the manufacturer 460 produces the instruction manual based on the related information of the handling explanation, and integrates the code-recorded paper-type display medium thus produced with the instruction manual by using a perforated line or temporary adhesive such that the code-recorded paper-type display medium can be cut off. Then, the manufacturer 460 supplies the item 461 and the instruction manual to the retailer shop 480. The user can obtain the code-recorded paper-type display medium integrated with to the instruction manual attached to the item 461, by buying the item 461 in the retailer shop 461.

Next, the display control process will be described. In the display control process, the user sets the code-recorded paper-type display medium to the display control device 4 in the user environment 1 and other. The code reader 12 of the display control device 4 reads the invariable code and the variable code recorded on the code-recorded paper-type display medium. The information of the invariable code and the variable code read by the code reader 12 is stored in the display control device 4.

Then, the identification controller 11 in the display control device 4 checks the contents list 9 in the receiver 2. Further, the identification controller 11 extracts the contents code from the display control device 4, and determines whether the contents code corresponding to the extracted contents code exists in the contents list 9. Here, the contents code extracted from the display control device 4 is the contents code recorded on the code-recorded paper-type display medium.

If the contents code recorded on the code-recorded paper-type display medium does not exist in the contents list 9, it means that the user is requesting the contents that are not stored in the hard disk 6. Therefore, the display control device 4 displays "DISPLAY NOT POSSIBLE". On the contrary, if the contents code recorded on the code-recorded paper-type display medium exists in the contents list 9 and they coincide with each other, the identification controller 11 displays the contents list 9 coincide with the contents code on the display 5.

The user selects an object to be displayed on the code-recorded paper type display medium or on the display 5, from the contents list 9 shown on the display 5. If the object to be displayed does not exist in the contents list 9, it is presumable that the user is requesting the contents data that is not stored in the hard disk 6. For example, the user is requesting to display the contents data of old related information of handling explanation. In this case, in response to the user's predetermined operation, the controller 8 in the receiver 2 can obtain the requested contents data from the ISP 470 via the network 402. Namely, even if the contents data requested by the user is not stored in the hard disk 6, it is possible to obtain the requested contents data and display it on the display 5 and so on. Since it takes time to download the contents data from the ISP 470 in this case, a message notifying that may be displayed.

The contents data includes two kinds, the still picture contents data and the moving picture contents data. The still picture contents data has such a characteristic that it can be displayed on the code-recorded paper-type display medium and the display, but it is still picture. On the other hand, the moving picture contents data has such a characteristic that it can be displayed only on the display 5, but more realistic information than the still picture can be obtained therefrom because it is moving picture. When selecting the obj ect to be displayed from the contents list 9, the user can select the obj ect to be displayed in consideration of the kind of the contents data. It is noted that the user selects the object to be displayed by the input means such as the remote-controller 3 or the screen touch-panel on the display 5, and the information selected by the user is recognized by the identification controller 11 of the display control device 4 via the controller 8 of the receiver 2. Depending on the nature of the paper-type display medium, the input means may be provided on the paper-type display medium in a form of input key, for example.

Then, the identification controller 11 extracts the corresponding contents data from the receiver 2 or the ISP 470 based on the information selected by the user. Further, the identification controller 11 displays the contents data thus extracted on the code-recorded paper-type display medium or the display 5 if the contents data is the still picture contents data. On the contrary, the identification controller 11 displays the contents data on the display 5 if the contents data is the moving picture contents data.

While the manufacturer 460 produces the instruction manual in the fifth embodiment, the invention is not limited to this style, and a printing company or else other than the manufacturer can produce it.

In the method described above, things in the related information of handling explanation that is difficult to explain by using the still picture on the normal paper medium can be explained to the user in a manner easy to understand by using the moving picture. Namely, the instruction manual including the moving picture and the still picture can be provided according to the standpoint of the user. Further, since old related information of handling explanation so far are all stored in the ISP 470, the user can easily obtain the contents data which is not stored in the hard disk 6 of the receiver 2 and watch it on the display 5.

In the retailer shop 480, the instruction manual of the item can be displayed on the display 5 as the moving picture by utilizing the code-recorded paper-type display medium, in the same manner as the user environment 1.

### (iii) 1st Modification

In the above fifth embodiment, the code-recorded paper-type display medium is integrated with the instruction manual attached to the item, and the contents are displayed based on the contents code recorded on the code-recorded paper-type display medium. However, this invention is not limited to this, and can adopt the method of indicating the contents code on the item itself, or on the package of the item. The information providing process in this example will be described with reference to FIG. 31.

It is assumed that the contents code indicated on the item can be visually recognized by the user, and the display control device 4 in the user environment 1 and other can recognize the contents code that the user inputs by hand. It is also assumed that the paper-type display medium is all-purpose (hereinafter referred to as "all-purpose paper-type display medium"), the user environment 1 and other already have the all-purpose paper-type display medium, and the all-purpose paper-type display medium can record contents data that the user arbitrarily requests.

The information providing process includes contents storing process, code recording process and display control process. Since the contents storing process is almost the same as that in the above-described fifth embodiment, the description will be omitted. However, in the 1st modification, the instruction manual is not produced as a booklet and is all provided as the contents, and hence the contents providing company 413 produces the contents data such that the information of an instruction manual of products, latest information of how to enjoy the product, information of recommended forthcoming product, version-up information, linkage information of information home electronics and maintenance information can be transmitted, and supplies it to the broadcasting station 16 and the ISP 470.

Next, the code recording process will be described. In the code recording process, the code management center 414 notifies the produced contents code to the manufacturer 460, and the manufacturer 460 receives the contents code. Then, themanufacturer 460 records the contents code on the package of the manufactured item 462.

Next, the display control process will be described. In the display control process, the user sets the all-purpose paper-type display medium to the display control device 4 in the user environment 1 and other. Then, the user inputs the contents code recorded on the package of the item 462 to the display control device 4 by hands. By this, the contents code is stored in the display control device 4. On the other hand, the identification controller 11 in the display control device 4 checks the contents list 9 in the receiver 2. Further, the identification controller 11 extracts the contents code from the display control device 4, and determines whether the contents code corresponding to the extracted contents code exists in the contents list 9. Here, the contents code extracted from the display control device 4 is the contents code recorded on the package of the item 462.

If the contents code recorded on the package of the item 462 does not exist in the contents list 9, it means that the user is requesting the contents that are not stored in the hard disk 6. Therefore, the display control device 4 displays "DISPLAY NOT POSSIBLE". On the contrary, if the contents code recorded on the package of the item 462 exists in the contents list 9 and they coincide with each other, the identification controller 11 displays the contents list 9 corresponding to the contents code on the display 5.

The user selects an object to be displayed on the all-purpose paper-type display medium or on the display 5, from the contents list 9 shown on the display 5. It is noted that the user selects the object to be displayed by the input means such as the remote-controller 3 or the screen touch-panel on the display 5, and the information selected by the user is recognized by the identification controller 11 of the display control device 4 via the controller 8 of the receiver 2.

Then, the identification controller 11 extracts the corresponding contents data from the receiver 2 or the ISP 470 based on the information selected by the user. Further, the identification controller 11 displays the contents data thus extracted on the all-purpose code-recorded paper-type display medium or the display 5 if the contents data is the still picture contents data. On the contrary, the identification controller 11 displays the contents data on the display 5 if the contents data is the moving picture contents data. Namely, the user can view the moving data on the display 5.

By this, even if the booklet of the instruction manual using normal paper medium is not attached to the item, the user can obtain and view the related information of handling explanation for the item by utilizing the all-purpose paper-type display medium and the display device. Therefore, the manufacturer can reduce the cost by omitting the production of the normal instruction manual, and can perform an invitation and advertisement of the version-up item and associated product of that manufacturer. In addition, since the paper resource is not used, the effective use of the resource can be achieved.

### (iv) 2nd Modification

In the above example, the display control device 4 has the function to identify the contents code and obtain the corresponding contents from the hard disk 6 in the receiver 2 or the ISP 470 based on the contents code, the invention is not limited to this style, and the remote-controllermayhave the above function. Specifically, in the case that the contents code is recorded on the package of the item as the barcode, the remote-controller is provided with the barcode reader. In the case that the contents code is recorded on the item itself in a form of RFID, the remote-controller is provided with the function to receive, transmit and recognize the data recorded on the RFID.

In this case, since the remote-controller performs the process that the display control device 4 performed in the above fifth embodiment, there should be provided a driving device which has the rewriting and displaying function of predetermined contents on the paper-type display medium, in place of the display control device 4 in FIG. 31.

### (v) 3rd Modification

In the above example, based on the contents code recorded on the code-recorded paper-type display medium or the package of the item, the corresponding contents are displayed on the display or the paper-type display medium. However, this invention is not limited to this style, and the corresponding contents can all be displayed on the display 5, regardless of that the contents are the still picture contents or the moving picture contents. By this, when the contents code is recorded on the item itself or the package of the item, the user can view the predetermined contents in the information providing system, without the use of the paper-type display medium. Namely, the present invention can be applied if the user environment 1 and other do not have the paper-type display medium.

### [Application]

In the first to fifth embodiments, the contents and the programs are transmitted as the broadcasting waves. The broadcasting wave may be wired or wireless, and is transmitted from the broadcasting station as the waves or through the cable. The present invention is not limited to those, and the contents and the programs can be transmitted via the Internet. Namely, in this invention, the contents and the programs include all information that can be transmitted by a carrier wave, and the present invention is applicable regardless of the transmission and propagation method.

### INDUSTRIAL APPLICABILITY

The present invention provides an information providing system utilizing a storage-type data broadcasting service. The information providing system can be used to quickly provide information of newspaper and textbook and to perform advertisement, in consideration of the simplification of procedure, cost reduction and environmental issue.

## Claims

1. An information providing system comprising:
a unit for receiving contents and a contents code corresponding to the contents;
a storage unit which stores the contents and the contents code;
a code reading unit which reads the contents code from a paper-type display medium on which the contents code is recorded; and
a control unit which obtains the contents corresponding to the contents code read by the code reading unit from the storage unit and displays the contents on the paper-type display medium.

2. The information providing system according to claim 1, wherein the control unit records a code indicating a times-of-use, which is a number of times the contents are displayedon the paper-type display medium, on the paper-type display medium.

3. The information providing system according to claim 2,
wherein the code reading unit comprises a unit which reads a code indicating a limited times-of-use from the paper-type display medium and a unit which reads the times-of-use from the paper-type display medium, and
wherein the control unit displays the contents on the paper-type display medium when the times-of-use is smaller than the limited times-of-use.

4. The information providing system according to claim 3, wherein the control unit displays the limited times-of-use and the times-of-use on the paper-type display medium.

5. The information providing system according to claim 1, wherein the control unit comprises:
a list presenting unit which presents a list of information related to a plurality of contents corresponding to the contents code read by the code reading unit; and
a unit which displays the contents selected from the list by a user on the paper-type display medium.

6. The information providing system according to claim 1, wherein the paper-type display medium comprises a contents display portion in which the contents are displayed, and an invariable code recording portion in which the contents code is recorded in an unalterable state.

7. The information providing system according to claim 3, wherein the paper-type display medium comprises a contents display portion in which the contents are displayed, an invariable code recording portion in which the contents code and a code indicating the limited times-of-use in an unalterable state, and a variable code recording portion in which a code indicating the times-of-use in an alterable state.

8. The information providing system according to claim 7, wherein characteristic information of the paper-type display medium itself necessary to display the contents on the paper-type display medium is recorded in the invariable code recording portion.

9. A paper-type display medium comprising:
an invariable code recording portion in which a contents code assigned to contents is recorded in an unalterable state; and
a contents display portion in which the contents are displayed.

10. The paper-type display medium according to claim 9, further comprising a base material and a display layer formed on the base material, and wherein the invariable code recording portion is formed between the base material and the display layer.

11. The paper-type display medium according to claim 9, wherein characteristic information of the paper-type display medium itself necessary to display the contents on the paper-type display medium is recorded in the invariable code recording portion.

12. The paper-type display medium according to claim 9, wherein a code indicating a limited times-of-use, which is a number of times the contents corresponding to the contents code is displayable, is recorded in the invariable code recording portion, and
wherein the paper-type display medium further comprises a variable code recording portion in which a code indicating a times-of-use, which is a number of times the contents are displayed on the paper-type display medium, is recorded in an alterable state.

13. The paper type display medium according to claim 12, further comprising a base material and a display layer formed on the base material, and wherein the variable code recording portion and the contents display portion are formed on the base material.

14. An information providing system comprising:
a display device which displays contents;
a unit which receives the contents and a contents code corresponding to the contents code;
a storage unit which stores the contents and the contents code;
a code reading unit which reads the contents code from a paper-type display medium on which the contents code is recorded; and
a control unit which obtains the contents corresponding to the contents code read by the code reading unit from the storage unit and displays the contents on the display device.

15. The information providing system according to claim 14, wherein the control unit obtains the contents corresponding to the contents code read by the code reading unit from the storage unit, and displays the contents on the paper-type display medium.

16. The information providing system according to claim 15, wherein the contents include still picture contents of still picture and/or moving picture contents of moving picture, and
wherein the control unit displays the still picture contents on the paper-type display medium and/or the display device, and displays the moving picture contents on the display device.

17. The information providing system according to claim 14, wherein the control unit comprises:
a list presenting unit which presents a list of information related to a plurality of contents corresponding to the contents code read by the code reading unit; and
a unit which displays the contents selected from the list by a user on the paper-type display medium and/or the display device.

18. The information providing system according to claim 14, wherein the paper-type display medium comprises a contents display portion in which the contents are displayed, and an invariable code recording portion in which the contents code is recorded in an unalterable state.

19. The information providing system according to claim 14, wherein the paper-type display medium comprises an invariable code recording portion in which the contents code assigned to the contents is recorded in an unalterable state, and a contents display portion in which the contents are displayed,
and wherein the paper-type display medium is formed in a manner integrated with a printedmatter associated with the contents.

20. The information providing system according to claim 19, wherein the paper-type display medium has an identical layout to the printed matter.

21. A paper-type display medium comprising an invariable code recording portion in which contents code assigned to contents is recorded in an unalterable state and a contents display portion in which the contents are displayed, and formed in a manner integrated with a printed matter associated with the contents.

22. An information providing system comprising:
a contents receiving unit for receiving contents and a contents code corresponding to the contents;
a storage unit which stores the contents and the contents code;
a contents code reading unit which reads the contents code from a paper-type display medium on which the contents code is recorded;
an arbitrary information reading unit which reads an arbitrary information of a user from the paper-type display medium on which the arbitrary information of the user is set;
a contents obtaining unit which obtains the contents corresponding to the contents code read by the contents code reading unit; and
a control unit which displays the contents obtained by the contents obtaining unit on the paper-type display medium based on the arbitrary information read by the arbitrary information reading unit.

23. The information providing system according to claim 22, wherein the arbitrary information of the user is set in such a manner that the user uses a recording device to record the arbitrary information on the paper-type display medium, and the arbitrary information is rewritable.

24. The information providing system according to claim 22, wherein the arbitrary information of the user is set by selecting and recording one of a plurality of check boxes on the paper-type display medium.

25. The information providing system according to claim 22, wherein the paper-type display medium comprises a contents display portion in which the contents are displayed, an invariable code recording portion in which the contents code is recorded in an unalterable state and an arbitrary information recording portion in which the arbitrary information of the user is recorded.

26. An information providing system comprising:
a program receiving unit which receives program and a program code corresponding to the program;
a program code reading unit which read the program code from a paper-type display medium on which the program code is recorded;
a program reproducing unit which reproduces the program corresponding to the program code read by the program code reading unit;
a time information calculating unit which calculates a time information related to the program reproduced by the program reproducing unit;
a contents receiving unit which receives contents and a contents code corresponding to the contents;
a contents storage unit which stores the contents and the contents code;
a contents code reading unit which reads the contents code from the paper-type display medium on which the contents code is recorded;
a display permission information reading unit which reads display permission information from the paper-type display medium on which the display permission information is recorded;
a contents obtaining unit which obtains the contents corresponding to the contents code read by the contents code reading unit from the contents storage unit; and
a control unit which displays the contents obtained by the contents obtaining unit on the paper-type display medium based on a presence or absence of reproduction of the program, the time information calculated by the time information calculating unit and the display permission information read by the display permission information reading unit.

27. The information providing system according to claim 26, wherein the time information is a time period elapsed after starting reproduction of the program, wherein the display permission information is a constant time period that has passed after starting the reproduction of the program set in order to permit display of the contents, and
wherein the control unit displays the contents on the paper-type display medium when the time information is larger than the display permission information.

28. The information providing system according to claim 26, wherein a plurality of display permission information can be set for single contents.

29. The information providing system according to claim 26, wherein the program reproducing unit comprises:
a program storing unit which stores the program received by the program receiving unit and the program code corresponding to the program; and
a unit which obtains and reproduces the program corresponding to the program code read by the program code reading unit from the program storing unit.

30. The information providing system according to claim 26, wherein the program reproducing unit reproduces the program which the program receiving unit is receiving on a real-time basis.

31. A paper-type display medium comprising:
an invariable code recording portion in which a contents code assigned to contents is recorded in an unalterable state;
a recording portion in which the contents are displayed; and
an arbitrary information recording portion in which arbitrary information of user is recorded.

32. The paper-type display medium according to claim 31, wherein the arbitrary information recording portion comprises check boxes, and the arbitrary information is set in such a manner that the user records the arbitrary information on the check box by using a recording device.

33. The paper-type display medium according to claim 31, wherein a display permission information indicating a time limitation to display the contents on the paper-type display medium is recorded in the invariable code recording portion

34. An information providing system comprising:
a contents receiving unit which receives contents;
a contents storing unit which stores the contents;
a contents code reading unit which reads a contents code and an attribute code from a paper-type display medium on which the contents code and the attribute code are recorded;
a contents obtaining unit which obtains the contents corresponding to the contents code and the attribute code read by the contents code reading unit from the contents storing unit; and
a control unit which displays the contents obtained by the contents obtaining unit on the paper-type display medium.

35. An information providing system comprising:
a contents receiving unit which receives contents;
a contents storing unit which stores the contents;
a contents selecting and editing unit which edits the contents stored in the contents storing unit and arbitrarily selected by a user in one screen picture; and
a control unit which displays the contents edited by the contents selecting and editing unit on the paper-type display medium.

36. An information providing system comprising:
a contents receiving unit which receives contents;
a contents storing unit which stores the contents;
a contents code reading unit which reads a contents code and an attribute code from a paper-type display medium on which the contents code and the attribute code are recorded;
a contents obtaining unit which obtains the contents corresponding to the contents code and the attribute code read by the contents code reading unit from the contents storing unit;
a contents selecting and editing unit which edits the contents obtained by the contents obtaining unit and arbitrarily selected by a user in one screen picture; and
a control unit which displays the contents edited by the contents selecting and editing unit on the paper-type display medium.

37. The information providing system according to claim 34, wherein the contents are provided as a program, and the contents receiving unit and the contents storing unit are a digital broadcasting receiver.

38. A point system comprising:
a reading and writing device for a paper-type display medium installed in a shop;
a contents receiving unit which receives contents;
a contents storing unit which stores the contents;
a contents code reading unit which reads a contents code and an attribute code from a paper-type display medium on which the contents code and the attribute code are recorded;
a contents obtaining unit which obtains the contents corresponding to the contents code and the attribute code read by the contents code reading unit from the contents storing unit; and
a control unit which displays the contents obtained by the contents obtaining unit, on the paper-type display medium., together with point information.

39. A point system comprising:
a reading and writing device for a paper-type display medium installed in a shop;
a contents receiving unit which receives contents;
a contents storing unit which stores the contents;
a contents s el ecting and edit ing unit which edits the contents stored in the contents storing unit and arbitrarily selected by a user in one screen picture; and
a control unit which displays the contents edited by the contents selectingandeditingunit, on the paper-type display medium, together with point information.

40. A point system comprising:
a reading and writing device for a paper-type display medium installed in a shop;
a contents receiving unit which receives contents;
a contents storing unit which stores the contents;
a contents code reading unit which reads a contents code and an attribute code from a paper-type display medium on which the contents code and the attribute code are recorded;
a contents obtaining unit which obtains the contents corresponding to the contents code and the attribute code read by the contents code reading unit from the contents storing unit;
a contents selecting and editing unit which edits the contents obtained by the contents obtaining unit and arbitrarily selected by a user in one screen picture; and
a control unit which displays the contents edited by the contents selecting and editing unit, on the paper-type display medium, together with point information.

41. The point system according to claim 38, wherein the contents are provided as a program, and the contents receiving unit and the contents storing unit are a digital broadcasting receiver.

42. An information providing system comprising:
a unit which receives contents and a contents code corresponding to the contents;
a storage unit which stores the contents and the contents code;
a code reading unit which reads the contents code from an article on which the contents code is recorded; and
a control unit which obtains the contents corresponding to the contents code read by the code reading unit from the storing unit and displays the contents on the paper-type display medium.

43. An information providing system comprising:
a display device which displays contents;
a unit which receives the contents and a contents code corresponding to the contents code;
a storage unit which stores the contents and the contents code;
a code reading unit which reads the contents code from an article on which the contents code is recorded; and
a control unit which obtains the contents corresponding to the contents code read by the code reading unit from the storage unit and displays the contents on the display device.

44. The information providing system according to claim 43, wherein the control unit obtains the contents corresponding to the contents code read by the code reading unit from the storage unit and displays the contents on a paper-type display medium.

45. An information providing method comprising:
a step which receives contents and a contents code corresponding to the contents;
a step which stores the contents and the contents code;
a step which reads the contents code from a paper-type display medium on which the contents code is recorded; and
a step which obtains the contents corresponding to the contents code read by the code reading unit and controls to display the contents on the paper-type display medium.

46. The information providing method according to claim 45, further comprising:
a step which assigns a contents code corresponding to the contents; and
a step which applies the contents code to the paper-type display medium.

47. An information providing method comprising:
a step which receives contents and a contents code corresponding to the contents;
a step which stores the contents and the contents code;
a stepwhich reads the contents code from a paper-type display medium on which the contents code is recorded; and
a step which obtains the contents corresponding to the contents code read by the code reading unit and controls to display the contents on a display device.

48. The information providing method further comprising a step which obtains the contents corresponding to the contents code read from the paper-type display medium and displays the contents on the paper-type display medium.

49. The information providing method according to claim 47, further comprising:
a step which assigns a contents code corresponding to the contents; and
a step which applies the contents code to the paper-type display medium.
